(19) Europäisches Patentamt
European Patent Office
Office européen des brevets

(11) EP 2 568 650 B1

(12) EUROPEAN PATENT SPECIFICATION

(45) Date of publication and mention of the grant of the patent:
**06.05.2020 Bulletin 2020/19**

(51) Int Cl.:
***H04L 5/00*** *(2006.01)*

(21) Application number: **12183528.4**

(22) Date of filing: **07.09.2012**

(54) **Method and apparatus for transceiving broadcast signals**

Verfahren und Vorrichtung zum Senden und Empfangen von Rundfunksignalen

Procédé et appareil d'émission-réception de signaux de diffusion

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2011 US 201161531623 P**

(43) Date of publication of application:
**13.03.2013 Bulletin 2013/11**

(73) Proprietor: **LG Electronics Inc.**
**Seoul 07336 (KR)**

(72) Inventors:
- **Ko, Woosuk**
  **137-724 Seoul (KR)**
- **Moon, Sangchul**
  **137-724 Seoul (KR)**

(74) Representative: **Plasseraud IP**
**66, rue de la Chaussée d'Antin**
**75440 Paris Cedex 09 (FR)**

(56) References cited:
**WO-A2-2011/096768**

- **DVB ORGANIZATION: "tm4132r1.ETSI_TS_T2MI_v0.5.0.doc", DVB, DIGITAL VIDEO BROADCASTING, C/O EBU - 17A ANCIENNE ROUTE - CH-1218 GRAND SACONNEX, GENEVA - SWITZERLAND, 2 July 2010 (2010-07-02), XP017833433,**
- **DVB ORGANIZATION: "TM-NGH257_L1Signalling_Samsung.pdf", DVB, DIGITAL VIDEO BROADCASTING, C/O EBU - 17A ANCIENNE ROUTE - CH-1218 GRAND SACONNEX, GENEVA - SWITZERLAND, 11 June 2010 (2010-06-11), XP017832294,**
- **DVB ORGANIZATION: "TM-NGH104_Presentation_LG_reply_to_NGH_Cf T.pdf", DVB, DIGITAL VIDEO BROADCASTING, C/O EBU - 17A ANCIENNE ROUTE - CH-1218 GRAND SACONNEX, GENEVA - SWITZERLAND, 21 March 2010 (2010-03-21), XP017832138,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 568 650 B1

## Description

[Technical Field]

The present invention related to an apparatus for transceiving (or transmitting/receiving) broadcast signals and a method for transceiving (or transmitting/receiving) broadcast signals and, more particularly, to an apparatus for transceiving (or transmitting/receiving) broadcast signals and a method for transceiving (or transmitting/receiving) broadcast signals of the same that can transmit and receive broadcast signals that can be compatible to the related art broadcast signals transceiver (or transmitter/receiver), while increasing the data transmission efficiency.

[Background Art]

As the time has neared to end (or terminate) the transmission of analog broadcast signals, diverse technologies for transceiving (*i.e.,* transmitting and receiving) digital broadcast signals are being researched and developed. Herein, a digital broadcast signal may include high capacity video/audio data as compared to an analog broadcast signal, and, in addition to the video/audio data, the digital broadcast signal may also include diverse additional data.

More specifically, a digital broadcasting system for digital broadcasting may provide HD (High Definition) level images, multiple-channel sound (or audio), and a wide range of additional services. However, a data transmission efficiency for transmitting high capacity data, a robustness of a transceiving (transmitting and receiving) network, and flexibility in a network considering mobile receiving equipments are still required to be enhanced. Document: DVB organization: "tm4132r1.ETSI_TS_T2MI_v0.5.0.doc", DVB, Digital vodeo broadcasting, C/O EBU-17A Ancienne Route -CH-1218 Grand Saconnex, Geneva-Switzerland, 2 July 2010, discloses details of a modulator interface for DVB. WO2011/096768 discloses methods for transmitting and receiving broadcast information using MIMO methods.

[Disclosure]

[Technical Problem]

A object of the present invention is to provide a transmitter and a transmitting method for transceiving broadcast signals, which can receive digital broadcast signals without error even under an indoor environment or using mobile receiving equipment.

Another object of the present invention is to provide a transmitter and transmitting method for transceiving a broadcast signals, which can maintain compatibility with a conventional broadcast system.

Yet another object of the present invention is to provide a method for signaling in-band signaling information including logical frame information and a transmitter/ and transmitting method for transceiving in-band signaling information.

[Technical Solution]

In order to achieve the above-described object of the present invention, a broadcast signal transmitting method according to claim 1 and a transmitter according to claim 5 are provided.

A broadcast signal transmitter according to an example useful for understanding of the present invention includes an input processing module, an encoder, a frame builder, and a modulating unit. The input processing module signals in-band signaling information to at least one of a service component PLP including at least one service component configuring a broadcast service, a first information PLP including first service information being applied to one broadcast service, and a second information PLP including second service information being commonly applied to multiple broadcast services. The encoder performs FEC encoding on data included in each PLP and time-interleaves the FEC encoded data. The frame builder generates a logical transmission frame including the time-interleaved data and L1-post signaling information and generates one or more physical transmission frames including data of the logical transmission frame. The modulating unit modulates the one or more physical transmission frames, and transmits a broadcast signal including the one or more modulated physical transmission frames. Herein, each physical transmission frame may further include P1 signaling information and L1-pre signaling information. And, according to the embodiment of the present invention, the in-band signaling information includes gap information indicating a number of cells between a region transmitting the L1-pre signaling information and a region transmitting the L1-post signaling information.

[Advantageous Effects]

According to the present invention, in a digital broadcasting system, by using a MIMO (Multi-Input Multi-Output) system, the data transmission efficiency may be increased, and the Robustness of the broadcast signal transception (transmission and/or reception) may be enhanced.

Additionally, according to the present invention, due to the MIMO processing, the receiver may efficiently recover the MIMO reception signals even in diverse broadcasting environments.

Moreover, according to the embodiment of the present invention, by performing a maximum usage of the related art transceiving (transmitting and/or receiving) system while using the MIMO system, the present invention may provide an apparatus for transmitting/receiving a broadcast signal and a method for transmitting/receiving a broadcast signal that can ensure backward compatibility.

Furthermore, according to the present invention, the present invention may provide an apparatus for transmitting/receiving a broadcast signal and a method for transmitting/receiving a broadcast signal that can receive digital broadcast signals through a mobile receiving device or in an in-door environment without any error.

By signaling in-band signaling information to a service component PLP (physical layer pipe), which transmits data, the in-band signaling information may have the same robustness as the data.

Additionally, by signaling in-band signaling information to an SI PLP, which transmits service information (SI), the in-band signaling information may be provided with robustness different from that of the data PLP. Moreover, by performing concentrated signaling and transmission of the in-band signaling information, since frame configuration and common information are not required to be delivered from each PLP, signaling overhead may be reduced.

Furthermore, by signaling in-band signaling information to a common PLP, the in-band signaling information may be provided with robustness that is different from that of the data PLP and may be provided with a smaller overhead.

Most particularly, by signaling in-band signaling information to at least any one of the data PLP, common PLP, and SI PLP, the overhead and robustness of the in-band signaling information may be controlled and adjusted.

[Brief Description of the Drawings]

FIG. 1 illustrates a block diagram of a broadcast signal transmitter according to an embodiment of the present invention,
FIG. 2 illustrates a detailed block diagram of an input processing module of the broadcast signal transmitter according to an embodiment of the present invention,
FIG. 3 illustrates a detailed block diagram of a mode adaptation module of processing multiple PLPs, as an input processing module according to an embodiment of the present invention,
FIG. 4 illustrates a detailed block diagram of a stream adaptation module of processing multiple PLPs, as an input processing module according to an embodiment of the present invention,
FIG. 5 illustrates a detailed block diagram of a BICM encoder of the broadcast signal transmitter according to an embodiment of the present invention,
FIG. 6 illustrates a detailed block diagram of an OFDM generator of the broadcast signal transmitter according to an embodiment of the present invention,
FIG. 7 illustrates a block diagram of a broadcast signal receiver according to an embodiment of the present invention,
FIG. 8 illustrates a detailed block diagram of an OFDM demodulator of the broadcast signal receiver according to an embodiment of the present invention,
FIG. 9 illustrates a detailed block diagram of a BICM decoder of the broadcast signal receiver according to an embodiment of the present invention,
FIG. 10 illustrates a detailed block diagram of an output processor of the broadcast signal receiver according to an embodiment of the present invention,
FIG. 11 illustrates a detailed block diagram of an output processor of the broadcast signal receiver according to another embodiment of the present invention,
FIG. 12 illustrates a structure of a PLP based additional frame according to an embodiment of the present invention,
FIG. 13 illustrates structures of an FEF based additional frame according to an embodiment of the present invention,
FIG. 14(A) and FIG. 14(B) illustrate a procedure of generating a P1 symbol for identifying an additional frame according to an embodiment of the present invention,
FIG. 15 illustrates a block diagram of MIMO transmission and reception system according to an embodiment of the present invention,
FIG. 16 illustrates a data transmission and reception method according to MIMO transmission of the SM scheme in a channel environment according to an embodiment of the present invention,
FIG. 17 illustrates input signals and transmission and reception signals when a MIMO encoding method has been performed according to an embodiment of the present invention,
FIG. 18 illustrates a constellation when a GC subset is used as a MIMO encoding matrix and a constellation when the first embodiment is applied,

FIG. 19 illustrates a relationship between Euclidean distance and Hamming distance in a constellation when a GC subset is used as a MIMO encoding matrix and in a constellation when the first embodiment is used,

FIG. 20 illustrates input signals and transmission and reception signals when a MIMO encoding method has been performed according to a second embodiment of the present invention,

FIG. 21 illustrates a MIMO encoding method according to a third embodiment of the present invention,

FIG. 22 illustrates input signals and transmission and reception signals when a MIMO encoding method has been performed according to the third embodiment of the present invention,

FIG. 23 illustrates a structure of an NGH system according to an embodiment of the present invention,

FIG. 24 illustrates an example of mapping data of a logical NGH frame to physical NGH frames according to the present invention,

FIG. 25 illustrates an L1 signaling structure according to the present invention,

FIG. 26 illustrates a syntax structure of in-band signaling information according to an embodiment of the present invention, and

FIG. 27 illustrates a flow chart showing a method for signaling in-band signaling information and transmitting the signaled in-band signaling information in the broadcast signal transmitter according to an embodiment of the present invention.

**[Best Mode]**

Hereinafter, although the preferred embodiments of the present invention will be described in detail with reference to the accompanying drawings and contents as described with relation to the accompanying drawings, it is to be understood that the present invention is not limited to the embodiments.

Various technologies are being adopted in the digital broadcasting system in order to enhance the transmission efficiency and to perform robust communication. Herein, a method of using multiple antennae in the transmitting end or in the receiving end is being proposed as an example of such various technologies. And, such method may be further divided into a single antenna transmission single antenna reception method (SISO; Single-Input Single-Output), a single antenna transmission multiple antennae reception method (SIMO; Single-Input Multi-Output), a multiple antennae transmission single antenna reception method (MISO; Multi-Input Single-Output), and a multiple antennae transmission multiple antennae reception method (MIMO; Multi-Input Multi-Output). Hereinafter, the usage of 2 antennae may be given as an example for the multiple antennae method, for simplicity in the description of the present invention. However, the description of the present invention may be applied to a system using at least two or more antennae.

The SISO method refers to a general broadcasting system using 1 transmission antenna and 1 reception antenna. And, the SIMO method refers to a broadcasting system using 1 transmission antenna and multiple reception antennae.

The MISO method refers to a broadcasting system that can provide transmission diversity by using multiple transmission antennae and a single reception antenna. Herein, an example of the MISO method may correspond to an Alamouti method. The MISO method refers to a method that can reception antenna through 1 antenna without any performance loss. In the receiving system, the same data may be received through multiple reception antennae in order to enhance performance. However, in this case, such method will be described in the present invention while being included within the range of the MISO.

MIMO is a broadcast system that provides transmit/receive diversity and high transmission efficiency using multiple transmission antennae and multiple reception antennae. MIMO can process signals differently in temporal and spatial dimensions and transmit a plurality of data streams through parallel paths simultaneously operating in the same frequency band to achieve diversity and high transmission efficiency.

Performances of systems employing MIMO depend on characteristics of a transmission channel and, particularly, systems having independent channel environments exhibit high performance. That is, the performance of a system to which MIMO is applied can be improved when channels from antennae of a transmitter to antennae of a receiver are uncorrelated and independent. However, in a channel environment in which correlation between channels between transmission antennae and reception antennae is high, such as a line-of sight (LOS) environment, the performance of a system employing MIMO may abruptly decrease or the system may not operate.

When MIMO is applied to broadcast systems using single-input single-output (SISO) and MISO schemes, a data transmission efficiency can increase. However, the above-mentioned problems are generated and compatibility should be maintained such that a receiver having a single antenna can be provided with MIMO service. Accordingly, the present invention proposes a method capable of solving these problems.

Furthermore, the present invention proposes a broadcast signal transceiver and a broadcast signal transmission/reception method for a system capable of transmitting/receiving an additional broadcast signal (or enhanced broadcast signal), for example, a mobile broadcast signal, while sharing an RF band with a conventional terrestrial broadcast system, for example, DVT-T2.

A broadcast signal transmitter and receiver of the present invention can perform MISO processing and MIMO processing on a plurality of signals transmitted and received through a plurality of antennae. A description will be given of a broadcast signal transceiver that processes two signals transmitted and received through two antennae.

FIG. 1 illustrates a broadcast signal transmitter using the MIMO scheme according to an embodiment of the present invention.

As shown in FIG. 1, the broadcast signal transmitter according to the present invention may include an input preprocessor 101100, an input processing module 101200, a Bit Interleaved Coded Modulation (BICM) encoder 101300, a frame builder 101400, and an Orthogonal Frequency-Division Multiplexing (OFDM) generator (or transmitting unit) 101500. The broadcast signal transmitter according to the present invention may receive a plurality of MPEG-TS streams or a General Stream Encapsulation (GSE) stream (or GS stream).

The input preprocessor 101100 may generate a plurality of PLPs (physical layer pipes) on a service basis in order to give robustness to a plurality of input streams, i.e., a plurality of MPEG-TS streams or GSE streams.

PLPs are data units that are identified in the physical layer. Specifically, a PLP is data having the same physical layer attribute which is processed in the transmission path and may be mapped on a cell by cell basis in a frame. In addition, a PLP may be considered a physical layer Time Division Multiplexing (TDM) channel that carries one or a plurality of services. Specifically, a path through which such a service is transmitted is transmitted or a stream identifiable in the physical layer which is transmitted through the path is referred to as a PLP.

Thereafter, the input processing module 101200 may generate a Base Band (BB) frame including a plurality of generated PLPs. The BICM module 101300 may add redundancy to the BB frame to correct an error in a transmission channel and may interleave PLP data included in the BB frame.

The BICM encoder 101300 may perform encoding for error correction. The BICM encoder 101300 of the present invention may independently apply the MISO scheme or the MIMO scheme to each PLP data item and may also independently apply the MISO scheme or the MIMO scheme to L1-signaling information. The L1-signaling information according to the present invention may include L1-post signaling information and L1-post signaling information.

A procedure in which the BICM encoder 101300 independently performs MISO and MIMO processing on PLP data will be described later. Thereafter, each data item is input to the frame builder 101400. In this case, the frame builder 101400 may receive output data of the BICM encoder 101300 through a first path and a second path. Data input through the first path may be transmitted through a first antenna Tx_1 and data input through the second path may be transmitted through a first antenna Tx_2.

Accordingly, the frame builder 101400 of the present invention may include a first frame building block for processing data input through the first path and a second frame building block for processing data input through the second path. The first frame building block may include a first delay compensator, a first pair-wise cell mapper, and a first pair-wise frequency interleaver for processing data input through the first path and the second frame building block may include a second delay compensator, a second pair-wise cell mapper, and a second pair-wise frequency interleaver for processing data input through the second path.

The first pair-wise cell mapper and the first pair-wise frequency interleaver and the second pair-wise cell mapper and the second pair-wise frequency interleaver may operate in the same manner for the first path and the second path and may also operate independently.

The following is a description of a data processing method for blocks included in the first frame building block and the second frame building block.

The first delay compensator and the second delay compensator may compensate L1-pre signaling data or L1-post signaling data input through each path for both delay corresponding to 1 frame and delay caused by BICM encoding. The L1-signaling information may include not only information regarding a current frame but also information regarding a subsequent frame. The reason for this is that, in the input processing procedure, the L1-signaling information is delayed compared to currently input PLP data by one frame. This procedure allows one frame to transmit all L1-signaling information including information regarding the current frame and the subsequent frame.

The first pair-wise cell mapper and the second pair-wise cell mapper may map L1 -signaling data and PLP data in symbols input through the paths to a subcarrier in an OFDM symbol in a frame on a cell by cell basis.

In this case, the PLP data input through each path may include common PLP data and MISO/MIMO-encoded PLP data and the sub-slice processor module may perform sub-slicing on PLP data cells to map the same to a frame in order to achieve diversity effects.

In addition, the first pair-wise cell mapper and the second pair-wise cell mapper may pair 2 consecutive input cells and map the same to a frame.

In order to increase MISO signal reconstruction performance of the receiver, there is a need to secure coherence between MISO transmission channels when MISO encoding is performed. Accordingly, in order to secure coherence between channels, the first pair-wise cell mapper and the second pair-wise cell mapper may pair cells generated from the same PLP data and then map to a subcarrier of an OFDM modulation to maximize coherence between channels.

Specifically, in the embodiment of the present invention, since the MISO encoder is located at the BICM encoder prior to the frame builder, the frame builder configures a frame structure on a pair basis taking into consideration such MISO encoding.

Furthermore, the first pair-wise cell mapper and the second pair-wise cell mapper may pair cells generated from different PLP data and then map to a sub-carrier of an OFDM modulation to maximize coherence between channels. The first pair-wise frequency interleaver and the second pair-wise frequency interleaver may perform frequency interleaving on data input through each path on a cell basis and may then output frequency-interleaved data to the OFDM generator through each path.

In this case, the first pair-wise frequency interleaver and the second pair-wise interleaver pair 2 consecutive input cells and process the same as one interleaving unit to perform frequency interleaving. The purpose of this is to maximize coherence between channels.

The OFDM generator 101500 may OFDM-modulate input data mapped within a frame on a symbol basis and output the modulated data to an antenna.

FIG. 2 illustrates an input processing module according to an embodiment of the present invention.

FIG. 2 shows an embodiment of the input processing module of processing a single PLP. The input processing module of FIG. 2 may include a mode adaptation module 102100 and a stream adaptation module 102200. The mode adaptation module 102100 may include an input interface module 102110, a CRC-8 encoder 102120 and a BB header inserter 102130. The stream adaptation module 102200 may include a padding inserter 102210 and a BB header inserter 102220.

In the input processing module of processing a single PLP, the input interface module 102110 divides the input bitstream into logical units for FEC (BCH/LDPC) encoding performed in a BICM encoder following the input processing module 101200 and maps the logical units. The cyclic redundancy check (CRC)-8 encoder 102120 performs CRC encoding on the mapped bitstream, and the BB header inserter 102130 inserts a BB header to a data field. In this case, the BB header may include mode adaptation type (TS/GS/IP) information, user packet length information, data field length information, etc.

The stream adaptation module 102200 may include a padding inserter 102210 for inserting a padding bit into the input bitstream to accomplish one BB frame for FEC encoding when the input bitstream does not fill the BB frame, and a BB scrambler 102220 for generating a pseudo random binary sequence (PRBS) and performing an XOR operation on the input bitstream and the generated PRBS to randomizing the input bitstream. The operation of the BB scrambler 102220 may reduce a PAPR (Peak-to-Average Power Ratio) of an OFDM modulation signal transmitted finally.

FIG. 3 illustrates another embodiment of an input processing module of a broadcast signal transmitter, particularly, a mode adaptation module of processing multiple PLPs according to the present invention.

The mode adaptation module of FIG. 3 may operate in parallel to perform mode adaptation on each PLP of multiple PLPs and may include multiple input interface modules 103100, input stream synchronizers 103200, compensating delay modules 103300, null packet deletion modules 103400, CRC encoders 103500, and BB header insertion units 103600. The detailed descriptions of the input interface modules 103100, CRC encoders 103500, and BB header insertion units 103600 of having the same blocks and performing the same operations as those of FIG. 2 are omitted.

The input stream synchronizers 103200 may insert input stream clock reference (ISCR) information, that is, timing information necessary for a receiver to restore at least one of a transport stream (TS), an IP stream, and a generic stream (GS). The compensating delay modules 103300 may acquire synchronization by delaying data for PLPs in each group on the basis of the timing information inserted by the input stream synchronizers 103200. The null packet deletion modules 103400 may delete unnecessarily transmitted null packets and insert the number of deleted null packets to positions at which the null packets are deleted.

FIG. 4 illustrates an input processing module of a broadcast signal transmitter according to an exemplary embodiment of the present invention. And, most particularly, FIG. 4 illustrates a stream adaptation module, which processes a plurality of PLPs.

Subsequent to the mode adaptation module shown in FIG. 3, the stream adaptation module of FIG. 4 receives PLP unit data, which are processed with mode adaptation in FIG. 3. Then, as described below, the processed PLP unit data are processed with stream adaptation.

A scheduler 104100 may perform scheduling for a MIMO transmitting system, which uses multiple antennae including dual polarity, and may generate parameters that are using in signal processing blocks, such as a demultiplexer, a cell interleaver, a time interleaver, and so on, of a MICM encoder. Additionally, the scheduler 104100 may signal in-band signaling information to the corresponding PLP, by controlling at least one of the multiple in-band signaling/padding insertion modules 104300, which respectively process each of the multiple PLPs. More specifically, the in-band signaling information is included in a BB frame of the corresponding PLP. At this point, the information being in-band signaled will be described later or in more detail. Additionally, other than the in-band signaling, the scheduler 104100 may output L1-dynamic signaling information respective to the current frame, so that the cell mapper can map input cell in accordance with the processed scheduling.

Multiple 1-frame delay modules 104200, respectively processing each of the multiple PLPs, delay input data by one frame, so that scheduling information respective to the following (or next) frame can be included in the current frame for the in-band signaling. For example, multiple in-band signaling/padding insertion modules 104300 respectively insert L1-dynamic signaling information that is not delayed to data, which are delayed by one frame. Additionally, the in-band signaling/padding insertion modules 104300 may insert padding bits, in case a space for padding exists, and may insert in-band signaling information in the padding space. Then, a BB scrambler 104400 generates a PRBS (Pseudo Random Binary Sequence), as described in FIG. 2, and then performs XOR operation on an inputted with stream and the generated PRBS, thereby randomizing the data.

In the stream adaptation module of FIG. 4, in addition to the in-band signaling information, an L1-signaling generator 104500 generates L1-signaling information, which is transmitted through a preamble signal of a frame or a spread data symbol. Such L1-signaling information may include L1 pre-signaling information and L1 post-signaling information. The L1 pre-signaling information includes parameters, which are required for processing L1 post-signaling information, and static L1-signaling information, and the L1 post-signaling information may include configurable (or static) L1-signaling information and dynamic L1-signaling information. The L1 signaling generator 104500 may output each of the generated L1 pre-signaling information and L1 post-signaling information. The data corresponding to the outputted L1 pre-signaling information and L1 post-signaling information may be respectively scrambled by each BB scrambler 104600 and 104700. Additionally, according to another embodiment of the present invention, the L1 signaling generator 104500 may output L1-signaling information, which includes L1 pre-signaling information and L1 post-signaling information, one BB scrambler may scramble the outputted L1-signaling information.

FIG. 5 illustrates a BICM encoder according to an embodiment of the present invention.

The BICM encoder 101300 of the present invention may include a first BICM encoding block for MISO PLP processing, a second BICM encoding block for MIMO PLP processing, and a third BICM encoding block for performing MISO or MIMO encoding on L1-pre signaling information and L1-post signaling information.

The first BICM encoding block may include a Forward Error Correction (FEC) encoder, a bit interleaver, a demultiplexer, a constellation mapper, a cell interleaver, a time interleaver, and a MISO encoder. The MISO encoder may be located next to the time interleaver and the location of the MISO encoder may be changed according to designer intention. The MISO encoder may perform MISO encoding on the time-interleaved PLP data using a MISO encoding matrix and output MISO-encoded PLP data through 2 paths. In this manner, it is possible to achieve diversity. Embodiments of the MISO encoding method according to the present invention include Orthogonal Space-Time Block Code (OSTBC)/Orthogonal Space Frequency Block Code (OSFBC)/Alamouti code methods.

The second BICM encoding block may include a Forward Error Correction (FEC) encoder, a bit interleaver, a demultiplexer, first and second constellation mappers, a MIMO encoder, first and second cell interleavers, and first and second time interleavers. The numbers of the constellation mappers, the cell interleavers, and the time interleavers may be changed according to designer intention.

The third BICM encoding block may output encoded signals of the L1-pre signaling information and the L1-post signaling information through two paths, respectively.

The second BICM encoding block for MIMO processing is described below with reference to FIG. 5. The encoding block shown in FIG. 5 is included in the BICM encoder 101300 of FIG. 1 and performs MIMO encoding after constellation mapping in an embodiment of the present invention.

The broadcast signal receiver may include a BICM decoder corresponding to the BICM encoder 101300 of the present invention. The BICM decoder may include a MIMO decoder, a time deinterleaver, and a cell deinterleaver and the MIMO decoder, the time deinterleaver, and the cell deinterleaver may perform processing on received data on a per symbol basis. If the MIMO encoder included in the BICM encoder is located next to the time interleaver, the receiver needs to first perform MIMO decoding on each data item and therefore each data item may be output on a bit basis and time deinterleaving and cell deinterleaving processes may then be performed. In this case, although data is input in units of bits to the time interleaver, information regarding the units of symbols of the input data is additionally needed to perform time interleaving. Accordingly, memory load of the broadcast signal receiver may be increased since the broadcast signal receiver should store information regarding symbol mapping of input bits required for the deinterleaving procedure. Accordingly, in an embodiment of the present invention, the BICM encoding block of FIG. 2 performs MIMO encoding after constellation mapping. However, this may be changed according to designer intention.

An FEC encoder 105210 may perform LDPC encoding and BCH encoding for adding redundancy so as to allow the receiver to correct an error in a transmission channel for input-processed PLP data. A bit interleaver 105220 may perform bit interleaving on the FEC-encoded PLP data to allow the data to have robustness to a burst error that may occur during transmission. A demultiplexer 105230 may demultiplex the bit-interleaved PLP data. In addition, the demultiplexer 105230 may demultiplex PLP data and output the demultiplexed data through 2 paths required for MIMO transmission. In this case, the transmission characteristics of the data transmitted through each path may differ. Accordingly, the demultiplexer 105230 may randomly allocate bit-interleaved PLP data to each input path.

The first and second constellation mappers 105240-1 and 105240-2 may map the demultiplexed PLP data bits to a constellation on a per symbol basis. In this case, the constellation mapper may rotate the constellation at a predetermined angle according to modulation type. Rotated constellations may be represented by an In (I-phase) component and a Quadrature-phase (Q-phase) component. The constellation mapper may delay only the Q-phase component by an arbitrary value. The constellation mapper may remap the demultiplexed PLP data to a new constellation using the In-phase component and the delayed Q-phase component.

An MIMO encoder 105250 may perform MIMO encoding on the input PLP data of the 2 paths using a MIMO encoding matrix and output the MIMO-encoded PLP data through the 2 paths. The MIMO encoding matrix of the present invention may include spatial multiplexing, Golden Code (GC), full-rate full diversity code, and linear dispersion code. Details of the encoding matrix required for the MIMO encoding procedure will be described later.

First and second cell interleavers 105260-1 and 105260-2 may perform interleaving on PLP data output through the 2 paths on a cell basis, respectively, and may perform cell interleaving only on PLP data corresponding to one half the size of a cell included in one FEC block from among PLP data input through each path. Accordingly, cell interleaving by the two cell interleavers may have the same effects as interleaving by one cell interleaver. In addition, there is an advantage in that cell interleaving can be performed using memory setting of one cell interleaving without allocating an additional memory to two cell interleavers in order to process data of a plurality of paths.

First and second time interleavers 105270-1 and 105270-2 may perform interleaving on the cell-interleaved PLP data output through the paths on a time basis. Here, the time interleavers may perform interleaving using FEC blocks. In this case, the time interleavers may perform time interleaving on PLP data input through the paths using the same method and may also perform time interleaving on the PLP data using different methods.

The frame builder 101400 may receive data encoded by the BICM encoder 101300 and map the same to a signal frame. As described above, the first BICM encoding block may output miso-encoded PLP data through two paths and the second BICM encoding block may output MIMO-encoded PLP data through two paths. In addition, the third BICM encoding block may output encoded signals of the L1-pre signaling information and the L1-post signaling information through two paths, respectively.

Thereafter, each data item is input to the frame builder 101400. In this case, the frame builder 101400 may receive output data of the BICM encoder 101300 through a first path and a second path, generate a signal frame from the output data and output the signal frame to the OFDM generator 101500. At this point, data input through the first path may be modulated in the OFDM generator 101500 and transmitted through a first antenna Tx-1. And data input through the second path may be modulated in the OFDM generator 101500 and transmitted through a second antenna Tx-2. That is, an embodiment according to the present invention may transmit a broadcast signal by an MISO method or an MIMO method through two transmission antennae. Accordingly, the OFDM generator 101500 may receive a broadcast signal through the first path and the second path, modulate the broadcast signal and output the modulated broadcast signal to two antennae Tx-1" Tx-2.

FIG. 6 illustrates the OFDM generator according to an embodiment of the present invention.

In the present invention, a block for modulating the broadcast signal to be transmitted through the first antenna TX1 may be referred to as a first OFDM generating block 106800 and a block for modulating the broadcast signal to be transmitted through the second antenna TX2 may be referred to as a second OFDM generating block 106900.

When channel correlation between channels transmitted through the first and second antennae is high, the first and second antennae may apply a polarity to transmitted signals according to the sign of the correlation and transmit the signals. A MIMO scheme using this technique may be referred to as a polarity multiplexing MIMO scheme, the first antenna that adds a polarity to a received signal and transmits the signal with the polarity may be referred to as a vertical antenna, and the second antenna that adds a polarity to a received signal and transmits the signal with the polarity may be referred to as a horizontal antenna. Accordingly, the first OFDM generating block 106800 according to the present invention may OFDM modulate a broadcast signal input through the first path and transmit the OFDM modulated broadcast signal through the first antenna Tx1. Furthermore, the second OFDM generating block 106900 according to the present invention may OFDM modulate a broadcast signal input through the second path and transmit the OFDM modulated broadcast signal through the second antenna Tx2.

The modules included in the first OFDM generating block 106800 and the second OFDM generating block 106900 are as described below.

The first OFDM generating block 106800 may include a pilot inserting module 106100-1, an IFFT module 106200-1, a PAPR module 106300-1, a GI inserting module 106400-1, a P1 symbol inserting module 106500-1, an AP1 (Additional Preamble 1) symbol inserting module 106600-1, and a DAC 106700-1.

The second OFDM generating block 106900 may include a pilot inserting module 106100-2, an IFFT module 106200-2, a PAPR module 106300-2, a GI inserting module 106400-2, a P1 symbol inserting module 106500-2, an AP1 symbol inserting module 106600-2, and a DAC 106700-2, and each of the above-mentioned modules performs the same functions as the respective modules included in the first OFDM generating block 106800.

Accordingly, hereinafter, the operations of the modules included in the first OFDM generating block 106800 will hereinafter be described in detail. More specifically, the pilot inserting module 106100-1 inserts pilots of a pre-decided pilot pattern to a corresponding position within the frame, thereby outputting the processed information to the IFFT module 106200-1. At this point, the pilot pattern information may be included in AP1 signaling information and then be transmitted, or may be included in L1-signaling information and then be transmitted. Alternatively, the pilot pattern information may also be included in both AP1 signaling information and L1 -signaling information and then be transmitted.

The IFFT module 106200-1 may perform IFFT calculation (or operation) on the signals of each path having a pilot inserted therein and may then output the processed signals to the PAPR module 106300-1.

The PAPR module 106300-1 reduces the PAPR of the time domain signals and then outputs the processed signals to the GI inserting module 106400-1. Also, PAPR module 106300-1 may feed-back necessary (or required) information to the pilot inserting module 106100-1 in accordance with a PAPR reduction algorithm.

The GI inserting module 106400-1 copies the last portion of an effective OFDM symbol and inserts a guard interval in each OFDM symbol in a CP (cyclic prefix) format and may, then, output the processed symbol to the P1 symbol inserting module 106500-1. The GI information may be transmitted through P1 signaling information or L1 pre-signaling information.

According to the embodiment of the present invention, the P1 symbol and the AP1 symbol according to the present invention are inserted by the P1 inserting module within the OFDM generation of the broadcast signal transmitter for each frame. More specifically, the P1 inserting module may insert 2 or more preamble symbols for each frame. As described in the present invention, when 2 or more preamble symbols are used, it is advantageous in that the present invention is more robust against burst fading, which may occur in a mobile fading environment and that signal detection performance can be enhanced. According to the embodiment of the present invention, the P1 inserting module 106500-1, which inserts P1 symbols, is differentiated from the AP1 inserting module 106600-1, which inserts AP1 symbols. The AP1 symbol will be described in more detail later on.

The P1 symbol inserting module 106500-1 inserts a P1 symbol at the starting portion (or beginning portion) of each frame, and may output the processed symbol to the AP1 symbol inserting module 106600-1.

The AP1 symbol inserting module 106600-1 inserts an AP1 symbol (Additional Preamble symbol) at the end portion of each P1 symbol, thereby outputting the processed symbol to the DAC 106700-1.

The DAC 106700-1 may convert each signal frame having the AP1 symbol inserted therein to an analog signal, thereby transmitting the converted analog signal through a first transmission antenna (Tx1).

FIG. 7 illustrates a broadcast signal receiver according to an embodiment of the present invention.

As shown in FIG. 7, the broadcast signal receiver may perform a reverse procedure to that of the broadcast signal transmitter described above with reference to FIG. 1. The broadcast signal receiver according to an embodiment of the present invention may include an OFDM demodulator 107100, a frame parser (or frame demapper) 107200, a BICM decoder 107300, and an output processor 107400.

The OFDM demodulator (or OFDM receiver) 107100 may convert signals received through a plurality of reception antennae into frequency-domain signals. In an embodiment of the present invention, two reception antennae Rx1 and Rx2 may be used to receive MIMO or MISO-transmitted signals. In addition, polarity multiplexing MIMO may be used in an embodiment of the present invention. Accordingly, the OFDM demodulator 107100 may OFDM-demodulate a broadcast signal input through the first antenna Rx1 and output the demodulated signal to the frame demapper 107200 through the first path and a second OFDM demodulating block may OFDM-demodulate a broadcast signal input through the second antenna Rx2 and output the demodulated signal to a frame demapper 107200.

The frame demapper 107200 may process data input through the first path and the second path and output PLPs for a required service. The frame demapper 107200 of the present invention may perform a reverse procedure to that of the frame builder 101400 described above with reference to FIG. 1. Accordingly, the frame demapper 107200 of the present invention may pair and extract 2 consecutive cells and output the same to a BICM decoder 107300.

The BICM decoder 107300 may correct an error caused by a transmission channel and may perform a reverse procedure to that of the BICM encoder 101300 described above with reference to FIG. 1. Accordingly, the BICM decoder 107300 of the present invention may independently apply a MISO scheme to each input data item and may also apply a MIMO scheme.

As a result, the BICM decoder 107300 may output BICM-decoded MISO PLP data, BICM-decoded MIMO PLP data, and BICM-decoded L1-pre and L1-post signaling data to an output processor 107400.

The output processor 107400 may perform processes required to generate an output TS or a GS stream. Here, the broadcast signal receiver may receive a dual polarity signal as an input antenna signal and output one or a plurality of TSs or GS streams.

FIG. 8 illustrates the OFDM demodulator according to an embodiment of the present invention.

Two reception antennae Rx1, Rx2 may be used to receive signals transmitted by an MISO scheme or an MIMO scheme according to an embodiment of the present invention. The OFDM demodulator may receive broadcast signals of the respective paths through two antennae Rx1 and Rx2 and perform OFDM demodulation on the broadcast signals.

A block that demodulates the broadcast signal received through the first antenna Rx1 may be referred to as a first OFDM demodulating block 108100 and a block that demodulates the broadcast signal received through the second antenna Rx2 may be referred to as a second OFDM demodulating block 108200.

Furthermore, according to an embodiment of the present invention, a polarity multiplexing MIMO scheme can be employed. That is, the first OFDM demodulating block 108100 may OFDM demodulate the broadcast signal input through the first antenna Rx1 and output the demodulated broadcast signal to the frame demapper (or frame parser) 107200 through a first path, and the second OFDM demodulating block 108200 may OFDM demodulate the broadcast signal input through the second antenna Rx2 and output the demodulated broadcast signal to the frame demapper (or frame parser) 107200 through a second path.

Additionally, the OFDM demodulator shown in FIG. 8 may perform an inverse process of the OFDM generator shown in FIG. 6.

The modules included in each of a first OFDM demodulating block 108100 and a second OFDM demodulating block 108200, which are included in the OFDM demodulator according to the embodiment of the present invention are as described below.

The first OFDM demodulating block 108100 may include a tuner 108110, an ADC 108120, a P1 symbol detecting module 108130, an AP1 symbol detecting module 108140, a synchronization module 108150, a GI removing module 108160, an FFT module 108170, and a channel estimating module 108180.

The second OFDM demodulating block 108200 may include a tuner 108210, an ADC 108220, a P1 symbol detecting module 108230, an AP1 symbol detecting module 108240, a synchronization module 108250, a GI removing module 108260, an FFT module 108270, and a channel estimating module 108280, and each of the modules included in the second OFDM demodulating block 108200 performs the same function as the respective modules included in the first OFDM demodulating block 108100.

Hereinafter, the modules included in the first OFDM demodulating block 108100 will hereinafter be described in detail.

The tuner 108110 may select a frequency band, so as to receive a broadcast signal of a wanted (or selected) frequency band, and may compensate the size of the received signal, thereby outputting the compensated signal to the ADC 108120.

The ADC 108120 may convert the analog broadcast signal to a digital signal, thereby outputting the converted digital signal to the P1 symbol detecting module 108130.

The P1 symbol detecting module 108130 may detect the P1 symbol, which transmits the P1 signaling information, from the digitally converted broadcast signal and may decode the P1 signaling information. Additionally, the P1 symbol detecting module 108130 may output the decoded P1 signaling information to the synchronization module 108150 and a system controller (not shown in the drawing). The system controller may use the decoded P1 signaling information, so as to acquire information, such as the type of frame structure belonging to the currently received signal, thereby being capable of controlling signal processing procedures of other device elements.

The AP1 symbol detecting module 108140 may detect an AP1 symbol, which transmits AP1 signaling information, from the digital broadcast signal and may, then, decode the AP1 signaling information. Additionally, the AP1 symbol detecting module 108140 may output the decoded AP1 signaling information to the synchronization module 108150 and the system controller (not shown in the drawing). The system controller may use the decoded AP1 signaling information so as to acquire pilot pattern information, L1 pre-spread interval (or section) information of the current frame.

The synchronization module 108150 may use the decoded P1 signaling information and AP1 signaling information, so as to perform time synchronization and frequency synchronization on the reception (or received) signal.

The GI removing module 108160 may remove a guard interval from the synchronized signal, thereby outputting the processed signal to the FFT module 108170.

The FFT module 108170 may use FFT operation (or calculation), so as to convert the time domain signal to a frequency domain signal.

The channel estimating module 108180 may estimate a transmission channel, starting from the transmission antenna to the reception antenna, from the pilot signals, which are inserted to the frequency domain converted signal. At this point, by using the additionally estimated channel, the channel estimating module 108180 may perform channel equalizing on each set of received data. Thereafter, the frequency domain converted signals are inputted to the frame demapper 107200. The frame demapper 107200 performs an inverse process of the frame builder 101400 shown in FIG. 1, so as to extract PLPs for the required services from a signal frame, thereby outputting the extracted PLPs. Each PLP of the frame demapper 107200 is outputted to the BICM decoder 107300.

FIG. 9 illustrates a detailed block of a BICM decoder according to an embodiment of the present invention.

Specifically, FIG. 9 illustrates one of multiple BICM decoding blocks included in the BICM decoder and the BICM decoding block may perform MIMO processing on input data. The BICM decoding block of FIG. 9 may perform a reverse procedure to that of the BICM decoding block of FIG. 5.

The BICM decoding block shown in FIG. 9 may include first and second time deinterleavers 109210-1 and 109210-2, first and second cell deinterleavers 109220-1 and 109220-2, a MIMO decoder 109230, first and second constellation demappers109240-1 and 109240-2, a multiplexer 109250, a bit deinterleaver 109260, and an FEC decoder 109270.

The first and second time deinterleavers 109210-1 and 109210-2 may perform time-domain deinterleaving on input data on a cell basis to reconstruct (or restore) original data in the original order. In this case, the first and second cell deinterleavers 109220-1 and 109220-2 may perform cell deinterleaving only on data corresponding to one half the size of a cell included in one FEC block from among data input through each path. As a result, cell deinterleaving by the first and second deinterleavers 109220-1 and 109220-2 can have the same effects as cell deinterleaving by a deinterleaver using one FEC block.

The MIMO decoder 109230 may perform MIMO decoding on cell-interleaved data input through two paths SRx_m and SRx_m+1. The MIMO decoder 109230 may perform operations in the same manner as the MISO decoder on the remaining operations except for a signal combination operation. Here, the MIMO decoder 109230 may also perform decoding using the MIMO encoding matrix described above.

Each of the first and second constellation demappers 109240-1 and 109240-2 may calculate an LLP value. Specifically, in the case in which the first and second constellation mappers 105240-1 and 105240-2 described above with reference to FIG. 2 have performed constellation rotation and Q-phase component delay, each of the first and second constellation demappers 109240-1 and 109240-2 may calculate an LLR value after delaying the I-phase component. The multiplexer 109250 may reconstruct the demapped data into a bitstream format.

The bit deinterleaver 109260 may perform deinterleaving on the input bitstream and the FEC decoder 109270 may perform FEC decoding on the deinterleaved data to correct an error in the transmission channel and may then output MIMO PLP data.

FIG. 10 illustrates a detailed block view of the output processor according to an embodiment of the present invention.

The output processor of FIG. 10 corresponds to an output processor respective to the input processing module processing a single PLP in FIG. 2, wherein the output processor performs an inverse process of the input processing module. Herein, the output processor according to the embodiment of the present invention includes a BB descrambler 110100, a padding removing module 110200, a CRC-8 decoder 110300, and a BB frame processor 110400. The output processor may receive a bit stream from the BICM decoder (or decoding module) of the broadcast signal receiver, wherein the BICM decoder performs an inverse process of the BICM encoding included in the broadcast signal transmitter, thereby performing an inverse processing procedure of the processing procedure of the input processing module described in FIG. 2.

The BB descrambler 110100 receives a bit stream and performs an XOR operation with a bit sequence, which is equally generated as a PRBS processed by the BB scrambler shown in FIG. 2, thereby outputting the processed bit stream. Whenever required, the padding removing module 110200 removes padding bits, which are inserted by the padding inserting module included in the broadcast signal transmitter. The CRC-8 decoder 110300 performs CRC decoding on the bit stream, and the BB frame processor 110400 decodes information included in the BB frame header and uses the decoded information, so as to recover at least one of the TS, IP, and GS streams.

FIG. 11 illustrates a detailed block view of the output processor according to another embodiment of the present invention.

The output processor of FIG. 11 corresponds to an output processor respective to the input processing module processing multiple PLPs in FIG. 3 and FIG. 4, wherein the output processor performs an inverse process of the input processing module. The output processor may include a plurality of blocks in order to process the plurality of PLPs. And, in the following description, only one exemplary block will be described for the multiple blocks corresponding to the same type. The output processor includes BB descramblers 201100, 201400-1, 201400-2, and so on, a padding removing (or removal) module 201120, a CRC-8 decoder 201130, a BB frame processor 201140, a De-jitter buffer 201150, a null packet inserting module 201160, a TS clock regenerating (regeneration) module 201170, an in-band signaling decoder 201200, a TS recombining module 201300, and an L1 signaling decoder 201410. Herein, description of the blocks that are identical to those described in FIG. 10 will be omitted for simplicity.

A case of decoding data PLPs related to a common PLP or a case when the broadcast signal receiver simultaneously decodes multiple services or service components (e.g., components of an SVC (Scalable Video Service)) may be given as a example for describing the processing on the plurality of PLPs performed by the broadcast signal receiver. The operations of the BB descrambler 201100, the padding removing module 201120, the CRC-8 decoder 201130, and the BB frame processor 201140 have been described above with reference to FIG. 10.

The De-jitter buffer 201150 compensates for the delays, which are arbitrarily inserted by the broadcast signal transmitter for the synchronization between the multiple PLPs, in accordance with TTO (Time To Output) parameter information. The null packet inserting module 201160 may refer to DNP (Deleted Null Packet) information, so as to recover the null packets removed by the transmitting end. At this point, the TS clock regeneration (regenerating) module 201170 recovers detailed time synchronization of the output packet based upon the ISCR (Input Stream Time Reference) information. The TS recombining module 201300 receives the data PLPs, which are related to the common PLP recovered as described above, so as to recover the initial (or original) TS, IP, or GS, thereby outputting the recovered TS, IP, or GS. Among the above-described information, TTO parameter information, DNP information, and ICSR information may all be acquired by having the BB frame processor process the BB frame header, and the system controller may transmit such information to each block requiring the corresponding information.

The in-band signaling decoder 201200 may recover the in-band signaling information, which is transmitted through a padding bit field of the data PLP, and may output the recovered in-band signaling information.

In case of the L1 signaling information, each of the BB descramblers 201400-1 and 201400-2 may descramble data corresponding to the L1 pre signaling information and data corresponding to the L1 post signaling information, and the L1 signaling decoder 201410 decodes the descrambled data, thereby recovering the L1 signaling information. The recovered L1 signaling information may include the L1 pre signaling information and the L1 post signaling information, and the received L1 signaling information may be delivered to the system controller, so as to provide parameters required by the broadcast signal receiver for performing operations, such as BICM (Bit Interleaved Coding and Modulation) decoding, frame demapping, OFDM (Orthogonal Frequency Division Multiplex) demodulating, and so on. As described above, the data corresponding to the L1 signaling information may be inputted to a BB descrambler, so as to be descrambled.

FIG. 12 illustrates an additional frame structure based on PLP according to an embodiment of the present invention.

As shown in FIG. 12, a signal frame according to an embodiment of the present invention may include a preamble area and a data area. The preamble area may include a P1 symbol and a P2 symbol and the data area may include a plurality of data symbols. The P1 symbol may transmit P1 signaling information and the P2 symbol may transmit L1 -signaling information.

In this case, a preamble symbol may be additionally allocated to the preamble. This additional preamble symbol is referred to as an Additional Preamble 1 (AP1). In an embodiment of the present invention, one or more AP1 symbols may be added to a frame in order to improve detection performance of a mobile broadcast signal under very low SNR or time-selective fading conditions. AP1 signaling information transmitted through the AP1 symbol may include an additional transmission parameter.

The preamble area of the frame according to the present invention may include a P1 symbol, one or more AP1 symbols, one or more P2 symbols. The data area includes a plurality of data symbols (or data OFDM symbols). In an embodiment, the P2 symbol may be selective and whether or not the P2 symbol is inserted may be signaled through AP1 signaling information that is transmitted through an AP1 symbol.

In an embodiment of the present invention, a P1 insertion module in the OFDM generator OFDM generator 101500 of the broadcast signal transmitter may insert the P1 symbol and the AP1 symbol into every symbol. That is, the P1 insertion module may insert 2 or more preamble symbols into every frame. In another embodiment, an AP1 insertion module may be added downstream of (or next to) the P1 insertion module and the AP1 insertion module may insert the AP1 symbol. If 2 or more preamble symbols are used as in the present invention, there are advantages in that robustness to burst fading that may occur in a mobile fading environment is further increased and signal detection performance is also improved.

The P1 symbol may transmit P1 signaling information associated with a basic transmission parameter and transmission type and a corresponding preamble identifier and the receiver may detect the frame using the P1 symbol. A plurality of P2 symbols may be provided and may carry L1 signaling information and signaling information such as a command PLP. The L1 signaling information may include L1-pre signaling information and L1-post signaling information and the L1-pre signaling information may include information required to receive and decode the L1-post signaling information. The L1-post signaling information may include parameters required for the receiver to decode PLP data. The L1-post signaling information may be located next to L1-pre signaling information.

The L1-post signaling information may include a configurable block, a dynamic block, an extension block, a Cyclic Redundancy Check (CRC) block, and an L1 padding block.

The configurable block may include information items that may be equally applied to one frame and the dynamic block may include specific information items corresponding to a currently transmitted frame.

The extension block may be a block that can be used when the L1-post signaling information is extended and the CRC block may include information items used for error correction of the L1-post signaling information and may have a size of 32 bits. When the L1-post signaling information is separately transmitted through a number of encoding blocks, the padding block may be used to match the size of information included in each encoding block and the size thereof may be variable.

The common PLP may include network information such as a Network Information Table (NIT), PLP information, and service information such as a Service Description Table (SDT) or an Event Information Table (EIT). The preamble of the present invention may include only the P1 symbol, the L1-pre signaling information, and the L1-post signaling information or may include all of the P1 symbol, the L1-pre signaling information, the L1-post signaling information, and the common PLP according to designer intention. A plurality of data symbols located next to the P1 symbol may include a plurality of PLPs. The plurality of PLPs may include audio, video, and data TS streams and PSI/SI information such as a Program Association Table (PAT) and a Program Map Table (PMT). In the present invention, a PLP that transmits PSI/SI information may be referred to as a base PLP (or a signaling PLP or an SI PLP). The PLPs may include a type-1 PLP that is transmitted through one sub-slice per frame and a type-2 PLP that is transmitted through two sub-slices per frame. The plurality of PLPs may transmit one service and may also transmit service components included in one service. When the PLPs transmit service components, the transmitting side may transmit signaling information which indicates that the PLPs transmit service components.

In addition, additional data (or an enhanced broadcast signal) in addition to basic data may be transmitted through a specific PLP while sharing an RF frequency band with the conventional terrestrial broadcast system according to an embodiment of the present invention. In this case, the transmitting side may define a system or a signal that is currently transmitted through signaling information of the P1 symbol described above. The following description is given with reference to the case in which the additional data is video data. That is, as shown in FIG. 12, PLP M1 112100 and PLP (M1-HM2) 112200 which are type 2 PLPs may be transmitted while including additional video data. In addition, in the present invention, a frame that transmits such additional video data may be referred to as an additional frame and a frame that transmits basic data may be referred to as a basic frame (or T2 frame).

In addition, a frame that can transmit not only additional data but also data associated with a new broadcast system different from the conventional terrestrial broadcast system may be referred to as an additional frame. In this case, a frame that transmits a conventional terrestrial broadcast may be referred to as a terrestrial broadcast frame and an additional frame may transmit additional data or basic data associated with the new broadcast system.

In the present invention, a super frame may be configured of multiple T2 frames (or also referred to as a terrestrial broadcasting frames) and multiple non-T2 frame (or additional frames) for an additional broadcast signal. The non-T2 frame may include FEF (Future Extension Frame) parts. The FEF parts are not consecutive and may be inserted in-between the T2 frames. The additional broadcast signal may be included in the T2 frame or FEF part, thereby being transmitted. Hereinafter, the FEF part and the FEF will be used as the same meaning. When the present invention transmits a mobile broadcast signal (also referred to as mobile broadcast data or NGH (Next Generation Handheld) data) through the FEF, such FEF will be referred to as an NGH frame (or physical NGH frame).

FIG. 13 illustrates a structure of an FEF based additional frame according to an embodiment of the present invention.

Specifically, FIG. 13 shows the case in which a Future Extension Frame (FEF) is used in order to transmit additional video data. In the present invention, a frame that transmits basic video data may be referred to as a basic frame and an FEF that transmits additional video data may be referred to as an additional frame.

FIG. 13 shows structures of super frames 202100 and 202200 in each of which a basic frame and an additional frame are multiplexed. Frames 202110-1 to 202110-n that are not shaded from among frames included in the super frame 202100 are basic frames and shaded frames 202120-1 and 202120-2 are additional frames.

FIG. 13(A) shows the case in which the ratio of basic frames to additional frames is N:1. In this case, the time required for the receiver to receive a next additional frame 202120-2 after receiving one additional frame 202120-1 may correspond to N basic frames.

FIG. 13(B) shows the case in which the ratio of basic frames to additional frames is 1:1. In this case, the proportion of additional frames in the super frame 202200 may be maximized and therefore the additional frames may have a structure very similar to that of the basic frames in order to maximize the extent of sharing with the basic frames. In addition, in this case, the time required for the receiver to receive a next additional frame 202210-2 after receiving one additional frame 202210-1 corresponds to 1 basic frame 202220 and therefore the super frame period is shorter than that of FIG. 13(A).

FIGs. 14(A) and 14(B) illustrate a P1 symbol generation procedure for identifying additional frames according to an embodiment of the present invention.

In the case in which additional video data is transmitted through additional frames which are distinguished from basic frames as shown in FIG. 13, there is a need to transmit additional signaling information for enabling the receiver to identify and process an additional frame. An additional frame of the present invention may include a P1 symbol for transmitting such additional signaling information and the P1 symbol may be referred to as a new_system_P1 symbol. This new_system_P1 symbol may be different from a P1 symbol that is used in a conventional frame and a plurality of new_system_P1 symbols may be provided. In an embodiment, the new_system_P1 symbol may be located before a first P2 symbol in a preamble area of the frame.

In the present invention, a P1 symbol of a conventional frame may be modified and used to generate the minimum Hamming distance. The present invention suggests a method in which a minimum Hamming distance is generated by modifying the structure of the P1 symbol of the conventional frame or is generated by changing the symbol generation unit 203100 that generates symbols.

FIG. 14(A) shows the structure of the P1 symbol of the conventional frame. In the present invention, the structure of the P1 symbol of the conventional frame shown in FIG. 14(A) may be modified to generate a minimum Hamming distance. In this case, the minimum Hamming distance may be generated by changing a frequency displacement $f_{SH}$

for the prefix and postfix of the conventional P1 symbol or changing the length (specifically, the size of $T_{P1C}$ or $T_{P1B}$) of the P1 symbol. However, in the case in which the minimum Hamming distance is generated by modifying the structure of the P1 symbol, there is a need to appropriately modify parameters (the sizes of $T_{P1C}$ and $T_{P1B}$ and $f_{SH}$) used in the P1 symbol structure.

FIG. 14(B) shows the P1 symbol generator that generates P1 symbols. In the present invention, the P1 symbol generator shown in FIG. 14(B) may be modified to generate a minimum Hamming distance. In this case, a minimum Hamming distance may be generated using a method which changes the distribution of active carriers used for a P1 symbol in a CDS table module 203110, an MSS module 203120, and a C-A-B structure module 203130 included in the P1 symbol generator (for example, a method in which the CDS table module 203110 uses a different Complementary Set of Sequence (CSS)) or a method which changes a pattern for information that is transmitted through a P1 symbol (for example, a method in which the MSS module 203120 uses a different Complementary Set of Sequence (CSS)).

In addition, the AP1 symbol of the present invention described above with reference to FIG. 13 may be generated through the procedure described above with reference to FIG. 14.

FIG. 15 illustrates MIMO transmission and reception systems according to an embodiment of the present invention.

As shown in FIG. 15, the MIMO transmission system includes an input signal generator 204010, a MIMO encoder 204020, a first transmission antenna 204030, and a second transmission antenna 204040. In the following, the input signal generator 204010 may be referred to as a divider and the MIMO encoder 204020 may be referred to as a MIMO processor.

The MIMO reception system may include a first reception antenna 204050, a second reception antenna 204060, a MIMO decoder 204070, and an output signal generator 204080. In the following, the output signal generator 204080 may be referred to as a merger and the MIMO decoder 204070 may be referred to as an ML detector.

In the MIMO transmission system, the input signal generator 204010 generates a plurality of input signals for transmission through a plurality of antennae and may be referred to as a divider. In the following, the input signal generator 204010 may be referred to as a divider. Specifically, the input signal generator 204010 may divide an input signal for transmission into 2 input signals and output the first input signal S1 and the second input signal S2 for MIMO transmission.

The MIMO encoder 204020 may perform MIMO encoding on the plurality of input signals S1 and S2 and output a first transmission signal St1 and a second transmission signal St2 for MIMO transmission and the output transmission signals may be transmitted through a first antenna 204030 and a second antenna 204040 via required signal processing and modulation procedures. The MIMO encoding 204020 may perform encoding on a per symbol basis. The SM scheme or the GC scheme may be used as the MIMO encoding method. In the following, the MIMO encoder may be referred to as a MIMO processor. Specifically, the MIMO encoder may process a plurality of input signals according to a MIMO matrix and a parameter value of the MIMO matrix which are described below.

The input signal generator 204010 unshown in FIG. 15 is an element that outputs a plurality of input signals for MIMO encoding and may also be an element such as a demultiplexer or a frame builder depending on the transmission system. The input signal generator 204010 may also be included in the MIMO encoder 204020 such that the MIMO encoder 204020 generates a plurality of input signals and performs encoding on the plurality of input signals. The MIMO encoder 204020 may be a device that performs MIMO encoding or MIMO processing on a plurality of signals and outputs the encoded or processed signals so as to acquire diversity gain and multiplexing gain of the transmission system.

Since signal processing should be performed on a plurality of input signals after the input signal generator 204010, a plurality of devices may be provided next to the input signal generator 204010 to process signals in parallel or one device including one memory may be provided to sequentially process signals or to simultaneously process signals in parallel.

The MIMO reception system receives a first reception signal Sr1 and a second reception signal Sr2 using a first reception antenna 204050 and a second reception antenna 204060. The MIMO decoder 204070 then processes the first reception signal and the second reception signal and outputs a first output signal and a second output signal. The MIMO decoder 204070 processes the first reception signal and the second reception signal according to the MIMO encoding method used by the MIMO encoder 204020. As an ML detector, the MIMO decoder 204070 outputs a first output signal and a second output signal using information regarding the channel environment, reception signals, and the MIMO matrix used by the MIMO encoder in the transmission system. In an embodiment, when ML detection is performed, the first output signal and the second output signal may include probability information of bits rather than bit values and may also be converted into bit values through FEC decoding.

The MIMO decoder of the MIMO reception system processes the first reception signal and the second reception signal according to the QAM type of the first input signal and the second input signal processed in the MIMO transmission system. Since the first reception signal and the second reception signal received by the MIMO reception system are signals that have been transmitted after being generated by performing MIMO encoding on the first input signal and the second input signal of the same QAM type or different QAM types, the MIMO reception system may determine a combination of QAM types of the reception signals to perform MIMO decoding on the reception signals. Accordingly, the MIMO transmission system may transmit information identifying the QAM type of each transmission signal in the transmission signal and the QAM type identification information may be included in a preamble portion of the transmission signal. The MIMO reception system may determine the combination of the QAM types of the reception signals from the QAM type identification information of the transmission signals and perform MIMO decoding on the reception signals based on the determination.

Thereafter, the output signal generator 204080 may merge the first output signal and the second output signal and generate as an output signal

The following is a description of a MIMO encoder and a MIMO encoding method that have low system complexity, high data transmission efficiency, and high signal reconstruction (or restoration) performance in various channel environments according to an embodiment of the present invention.

The SM scheme is a method in which data is simultaneously transmitted through a plurality of antennae without MIMO encoding. In this case, the receiver can acquire information from data that is simultaneously received through a plurality of reception antennae. The SM scheme has an advantage in that the complexity of a Maximum Likelihood (ML) decoder that the receiver uses to perform signal reconstruction (or restoration) is relatively low since the decoder only needs to check a combination of received signals. However, the SM scheme has a disadvantage in that transmit diversity cannot be achieved at the transmitting side. In the case of the SM scheme, the MIMO encoder bypasses a plurality of input signals. In the following, such a bypass process may be referred to as MIMO encoding.

The GC scheme is a method in which data is transmitted through a plurality of antennae after the data is encoded according to a predetermined rule (for example, according to an encoding method using golden code). When the number of the antennae is 2, transmit diversity is acquired at the transmitting side since encoding is performed using a 2x2 matrix. However, there is a disadvantage in that the complexity of the ML decoder of the receiver is high since the ML decoder needs to check 4 signal combinations.

The GC scheme has an advantage in that it is possible to perform more robust communication than using the SM scheme since transmit diversity is achieved. However, such a comparison has been made when only the GC scheme and the SM scheme are used for data processing for data transmission and, if data is transmitted using additional data coding (which may also be referred to as outer coding), transmit diversity of the GC scheme may fail to yield additional gain. This failure easily occurs especially when such outer coding has a large minimum Hamming distance. For example, the transmit diversity of the GC scheme may fail to yield additional gain compared to the SM scheme when data is transmitted after being encoded by adding redundancy for error correction using a Low Density Parity Check (LDPC) code having a large minimum Hamming distance. In this case, it may be advantageous for the broadcast system to use the SM scheme having low complexity.

It can be seen that the SM scheme shows higher performance than the GC scheme when the minimum hamming distance is large and a low code rate is low (1/4, 1/3, 2/5, 1/2). However, it can also be seen that the GC scheme shows higher performance than the SM scheme because the transmission diversity gain of the GC scheme is high compared to performance improvement due to coding when the minimum hamming distance is small and a code rate is high (2/3, 3/4, 4/5, 5/6).

Furthermore, the SM scheme shows higher performance than the GC scheme when a code rate is low (1/2) and a size of QAM is large (64-QAM).

Accordingly, the present invention suggests that a more efficient MIMO broadcast system be designed using a robust outer code while using an SM scheme having low complexity. However, the SM scheme may have a problem associated with reception signal reconstruction (or restoration) depending on the degree of correlation between a plurality of MIMO transmission and reception channels.

FIG. 16 illustrates a data transmission and reception method according to MIMO transmission of the SM scheme in a channel environment according to an embodiment of the present invention.

The MIMO transmission system may transmit input signal 1 (S1) and input signal 2 (S2) respectively through transmission antenna 1 and transmission antenna 2 according to the SM scheme. FIG. 16 illustrates an embodiment in which the transmitting side transmits a symbol modulated according to 4-QAM.

The transmission antenna 1 receives a signal through two paths. In the channel environment of FIG. 16, the received signal of the reception antenna 1 is $S1*h_{11}$ +$S2h_{21}$ and the received signal of the reception antenna 2 is $S1*h_{12}$ + $S2h_{22}$. The receiving side may acquire S1 and S2 through channel estimation to reconstruct data.

This is a scenario in which the transmission and reception paths are independent of each other. In the following, such an environment is referred to as being uncorrelated. On the other hand, channels of the transmission and reception paths may have a very high correlation with each other as in a Line Of Sight (LOS) environment, which is referred to as being fully correlated in the following description.

In the case in which channels are fully correlated in MIMO, each channel may be represented by a 2x2 matrix whose elements (or coefficients) are all 1 (i.e., $h_{11}=h_{12}=h_{21}=h_{22}=1$) as shown in FIG. 16. Here, the reception antenna 1 and the reception antenna 2 receive the same reception signal (S1+S2). That is, if signals transmitted through 2 transmission antennae pass through the same channel and are received by 2 reception antennae, a reception signal received by the receiver, i.e., data added (or combined) through the channel, cannot express both symbols S1 and S2. As shown in FIG. 16, in the fully correlated channel environment, the receiver cannot receive a 16-QAM symbol, into which the signal S1 represented by a 4-QAM symbol and the signal S2 represented by a 4-QAM symbol are combined and the receiver cannot separate and reconstruct the signals S1 and S2 since the receiver receives a combined signal S1+S2 represented by 9 symbols as shown on the right side of FIG. 16.

In this case, the receiver cannot reconstruct a signal received according to MIMO using the SM scheme even when the receiver is in a very high SNR environment. In the case of a communication system, communication is generally performed in two ways and therefore such a channel environment may be signaled to the transmitter through a feedback channel established between the transmitter and the receiver to allow the transmitter to change the transmission method. However, in the case of a broadcast system, it may be difficult to perform bidirectional communication through a feedback channel and one transmitter covers a large number of receivers and a large range and therefore it may be difficult to deal with various channel environment changes. Accordingly, if the SM scheme is used in such a fully correlated channel environment, the receiver cannot receive services and it is difficult to deal with such an environment, increasing costs, unless the coverage of the broadcast network is reduced.

The following is a description of a method for dealing with the case in which the correlation between MIMO channels is 1, i.e., the case in which channels are in a fully correlated channel environment.

The present invention suggests that a MIMO system be designed such that signals received through MIMO channels satisfy the following conditions so as to deal with the case in which the MIMO channels are fully correlated.

1) A received signal should be able to represent both original signals S1 and S2. That is, coordinates of a constellation received by the receiver should be able to uniquely represent sequences of S1 and S2.
2) A minimum Euclidean distance of a received signal should be increased so as to reduce symbol error rate.
3) Hamming distance characteristics of a received signal should be good so as to reduce bit error rate.

First, the present invention suggests a MIMO encoding method that uses a MIMO encoding matrix including an encoding factor "a" as expressed in the following Equation 1 so as to satisfy such requirements.

[Equation 1]

$$\begin{bmatrix} 1 & a \\ a & -1 \end{bmatrix}$$

When a MIMO encoder encodes input signals S1 and S2 using a MIMO encoding matrix as shown in Equation 1, reception signal 1 (Rx1) and reception signal 2 (Rx2) received by antenna 1 and antenna 2 are calculated as expressed in the following Equation 2. The reception signal 1 (Rx1) and reception signal 2 (Rx2) are calculated as expressed in the last line of Equation 2, especially, when MIMO channels are fully correlated.

[Equation 2]

$$\begin{aligned} Rx_1 &= h_{11}(S1 + aS2) + h_{21}(aS1 - S2) \\ Rx_2 &= h_{12}(S1 + aS2) + h_{22}(aS1 - S2) \end{aligned}, \; if\; h_{11} = h_{21} = h_{12} = h_{22} = h,$$

$$R = Rx_1 = Rx_2 = h\{(a+1)S1 + (a-1)S2\}$$

First, when MIMO channels are uncorrelated, the reception signal 1 (Rx1) is calculated as Rx1 = $h_{11}$(S1+a*S2)+$h_{21}$(a*S1-S1) and the reception signal 2 (Rx2) is calculated as Rx2 = $h_{12}$(S1+a*S2)+$h_{22}$(a*S1-S2). Thus, since the signals S1 and S2 have the same power, it is possible to use gain of the MIMO system together with the SM scheme. When MIMO channels are fully correlated, the reception signals (R=Rx1=Rx2) expressed as R = h{(a+1)S1+(a-1)S2} are acquired and therefore it is possible to separate and acquire the signals S1 and S2 and the signals S1 and S2 are designed such that both have different power and therefore it is possible to secure robustness accordingly.

That is, the MIMO encoder may encode input signals S1 and S2 such that the input signals S1 and S2 have different powers according to the encoding factor "a" and are also received with different distributions even in fully correlated channels. For example, input signals S1 and S2 may be encoded such that both have different powers and the encoded signals may then be transmitted using constellations which have different Euclidean distances through normalization to allow the receiver to separate and reconstruct the input signals even when the signals have passed through fully correlated channels.

The MIMO encoding matrix described above may be represented as Equation 3 taking into consideration a normalization factor.

[Equation 3]

$$\frac{1}{\sqrt{1+a^2}}\begin{pmatrix}1 & a\\ a & -1\end{pmatrix}=\begin{pmatrix}\frac{1}{\sqrt{1+a^2}} & \frac{a}{\sqrt{1+a^2}}\\ \frac{a}{\sqrt{1+a^2}} & \frac{-1}{\sqrt{1+a^2}}\end{pmatrix}=\begin{bmatrix}\cos\theta & \sin\theta\\ \sin\theta & -\cos\theta\end{bmatrix}$$

MIMO encoding of the MIMO encoder that uses the MIMO encoding matrix (or rotation matrix) shown in Equation 3 may be considered as rotating the input signals by an arbitrary angle of θ that can be represented by the encoding factor a, separating the cosine and sine components (or real and imaginary components) of the rotated signals, assigning positive and negative (+/-) signs to the separated components, and transmitting the separated components through different antennae. For example, the MIMO encoder may encode the input signals S1 and S2 such that the cosine component of the input signal S1 and the sine component of the input signal S2 are transmitted through one transmission antenna and the sine component of the input signal S1 and the cosine component of the input signal S2 to which a negative sign is attached are transmitted through another transmission antenna. The angle, by which the input signals are rotated, changes according to change of the value of the encoding factor "a" and the power distributions of the input signals S1 and S2 become different according to the value of the factor and the angle. Since the power distribution difference can be represented by a distance between symbol coordinates in the constellations, the encoded input signals can be represented by different constellations even when the input signals are received by the receiving side via fully correlated channels such that it is possible to identify and separate the signals, thereby enabling reconstruction of the original input signals.

Specifically, the Euclidian distances of transmission signals change as the power distributions change, the transmission signals received by the receiving side can be represented by identifiable constellations having different Euclidian distances such that it is possible to reconstruct the signals even when the signals have passed through a fully correlated channel. That is, the MIMO encoder can encode the input signal S1 and the input signal S2 into signals having different Euclidian distances according to the value "a" and the receiving side can receive and reconstruct the encoded and transmitted signals using identifiable constellations.

The MIMO encoder may perform encoding on input signals using the MIMO encoding matrix described above while additionally adjusting the encoding factor a. That is, it is possible to adjust and optimize the encoding factor "a" taking into consideration additional data reconstruction performance of the MIMO transmission and reception system.

1. First Embodiment: MIMO encoding method that optimizes the encoding factor "a" taking into consideration Euclidian distances (in a fully correlated MIMO channel environment).

It is possible to calculate the encoding factor value "a" taking into consideration the Euclidean distance while using the MIMO encoding matrix. In a MIMO system having two transmission antennae and two reception antennae, when transmission signal St1 is an M-QAM symbol and transmission signal St2 is an N-QAM symbol, a signal St1+St2 that is received by the receiving side via a fully correlated MIMO channel is an (M*N)-QAM signal.

FIG. 17 illustrates input signals and transmission and reception signals when a MIMO encoding method has been performed according to an embodiment of the present invention.

In the embodiment of FIG. 17, an input signal S1 has a constellation 205010 as a 4-QAM symbol and an input signal S2 has a constellation 205020 as a 4-QAM symbol. When the input signal S1 and the input signal S2 are MIMO-encoded using the MIMO encoding matrix, the encoded transmission signals St1 and St2 transmitted through antenna 1 (Tx1) and antenna 2 (Tx2) are 16-QAM symbols and have a constellation 205030 and a constellation 205040 as shown in FIG. 17.

The first embodiment of the present invention suggests a method for optimizing the value "a" such that symbols have the same Euclidian distance in a constellation 205050 of a symbol of a reception signal that has passed through a fully correlated channel as shown in FIG. 16. In FIG. 17, the constellation 205050 of the reception signal is a constellation obtained by adjusting the Euclidean distance using the value "a" as expressed in the following Equation 4. That is, in the case in which input signals are encoded using the MIMO matrix, it is possible to calculate or set the value of the encoding factor "a" such that reception symbols have the same Euclidean distances in a constellation of a reception signal that has passed through a fully correlated channel and to encode the input signals using the calculated or set value "a" of the encoding factor. Such a value "a" may be represented by Equation 4 for each modulation scheme combination.

[Equation 4]

$$a = \begin{cases} 3 & \text{,for QPSK + QPSK} \\ \left(4+\sqrt{5}\right)/\left(4-\sqrt{5}\right) & \text{,for QPSK + 16QAM} \\ 0.6 & \text{,for16QAM + 16QAM} \end{cases}$$

In the embodiment of FIG. 17, the constellation 205050 of the reception symbols corresponds to a constellation in which the value "a" has been set to 3 and input signals have been MIMO-encoded through a combination of 4-QAM and 4-QAM (i.e., QPSK+QPSK). That is, the distribution and constellation of the transmission and reception symbols change according to modulation schemes of the reception signals and a combination of the modulation schemes and the Euclidean distance changes according to the distribution and constellation of the symbols and therefore the value "a" for optimizing the Euclidean distance may also change accordingly. Equation 4 also shows an encoding factor value "a" for optimizing the Euclidean distance calculated when transmission and reception signals are a combination of 4-QAM and 16-QAM (i.e., QPSK+16-QAM) and an encoding factor value "a" calculated when transmission and reception signals are a combination of 16-QAM and 16-QAM (i.e., 16-QAM+16-QAM).

In the MIMO encoding method according to the first embodiment of the present invention, it can be seen that the SNR gain increases as the code rate of the outer code increases. Especially, it can be seen that, in the case of the SM scheme, decoding cannot be performed in a fully correlated MIMO channel environment and services cannot be received regardless of the SNR at a code rate higher than 2/5.

It can also be seen that, in a fully correlated MIMO channel, the MIMO encoding method according to the first embodiment exhibits significantly better SNR performance than the SM scheme and the GC scheme and also exhibits better performance than the SISO scheme.

Accordingly, the MIMO encoding method according to the first embodiment of the present invention can achieve higher performance than the GC scheme while using a system having lower complexity than the GC scheme and can also achieve significantly better performance than the SM scheme having similar complexity in a fully correlated channel environment.

In another embodiment of the present invention, a GC subset may be used as a MIMO encoding matrix when MIMO encoding is performed. In this case, the MIMO encoding matrix is represented by Equation 5.

[Equation 5]

$$\begin{bmatrix} \alpha & \alpha\theta \\ i\overline{\alpha} & i\overline{\alpha}\overline{\theta} \end{bmatrix}\begin{bmatrix} S1 \\ S2 \end{bmatrix},\ \alpha = 1+(1-\theta)i, \overline{\alpha} = 1+(1-\overline{\theta})i, \theta = \frac{1+\sqrt{5}}{2}, \overline{\theta} = \frac{1-\sqrt{5}}{2}$$

Using the encoding matrix of Equation 5 exhibits better performance than the first embodiment of the present invention.

FIG. 18 illustrates a constellation when a GC subset is used as a MIMO encoding matrix and a constellation when the first embodiment is applied.

The constellation of FIG. 18 is a constellation in the case in which 16-QAM type input signal S1 and 16-QAM type input signal S2 are MIMO-encoded using a MIMO encoding matrix and signals transmitted through 2 transmission antennae are received by a receiver through a fully correlated channel. The left part of FIG. 18 shows a reception constellation when a GC subset is used and the right part shows a reception constellation when the first embodiment is used.

SNR performance is higher when the GC subset is used while the minimum Euclidean distance of a constellation of a reception signal when the first embodiment (SM OPT1) is applied is greater than when the GC subset is used. Thus, the performance of the first embodiment differs due to a factor other than the Euclidian distance, the reason of which is described below.

FIG. 19 illustrates a relationship between Euclidean distance and Hamming distance in a constellation when a GC subset is used as a MIMO encoding matrix and in a constellation when the first embodiment is used.

The reason why the SNR performance of the first embodiment is lower than that when the GC subset is used although the minimum Euclidean distance of the first embodiment is greater than when the GC subset is used is associated with the relationship between the Euclidian distance and the Hamming distance.

Hamming distance distributions when the first embodiment is applied and when the GC subset is used are similar and have no gray mapping. However, it can be seen from FIG. 19 that the Euclidian distance of a pair having a greater Hamming distance when the GC subset is used is greater than that when the first embodiment is applied. That is, although internal Euclidian distances of 4 by 4 16-QAM constellations which are distributed over 16 areas in the total constellation are similar in both cases, the Euclidian distance between the 4 by 4 16-QAM constellations when the GC subset is used is greater, thereby compensating for the Hamming distance performance difference.

Due to such characteristics, the case of using the GC subset exhibits higher BER performance than the case of the first embodiment although the minimum Euclidean distance when the GC subset is used is smaller than when the first embodiment is applied. Accordingly, in the following, the present invention suggests a MIMO encoding method having higher SNR performance or BER performance.

2. Second Embodiment: MIMO encoding method taking into consideration gray mapping in addition to Euclidian distance

The second embodiment suggests a MIMO encoding method in which an encoding factor value "a" is set so as to optimize the Euclidean distance, similar to the first embodiment, and MIMO encoding is performed such that a reception signal that has passed through a fully correlated channel has a gray mapping (or gray mapping form).

In the MIMO encoding method of the second embodiment, at the receiving side, the signs of real and imaginary parts of the input signal S2 among the input signals S1 and S2 may be changed according to a value of the input signal S1 such that each signal becomes a gray mapping signal. Data values included in the input signal S2 may be changed using a method represented by the following Equation 6. That is, the MIMO encoder may perform MIMO encoding after changing signs of the input signal S2 according to the value of the input signal S1 while using the same MIMO encoding factor as used in the first embodiment.

[Equation 6]

$$S1 = b_0 b_1 .. b_{N-1}, \quad N = \log_2 M, \quad M = \textbf{QAM size of } S1$$
$$real(S1) = b_0 b_2 . b_{N-2}$$
$$imag(S1) = b_1 b_3 . b_{N-1}$$
$$for\ i = 1..N-1$$
$$\quad si = sq = 1$$
$$\quad if\ i = index\ of\ real(S1)\ and\ b_i = 1$$
$$\quad\quad si = -si$$
$$\quad if\ i = index\ of\ imag(S1)\ and\ b_i = 1$$
$$\quad\quad sq = -sq$$
$$end\ for$$
$$S2 = si \cdot real(S2) + i \cdot sq \cdot imag(S2)$$

FIG. 20 illustrates input signals and transmission and reception signals when a MIMO encoding method has been performed according to the second embodiment of the present invention.

If bit values assigned to the real and imaginary parts of the input signal S1 212010 among the input signals S1 and S2 212010 and 212020 are XORed as in Equation 6 and the signs of the real and imaginary parts are determined according to the XORed value and transmission signal 1 202030 and transmission signal 2 212040 are transmitted respectively through antenna 1 and antenna 2, then reception symbols of a reception signal 212050, which is received by the receiver via a fully correlated channel, have a gray mapping form such that the Hamming distance between adjacent symbols in the constellation does not exceed 2 as shown in FIG. 20.

Since an (M*N)-QAM signal received by the receiver has a minimum Euclidean distance and a gray mapping form, the second embodiment may achieve the same performance as the SIMO scheme even in a fully correlated MIMO channel environment. However, when signals S1 and S2 are acquired by decoding the reception signal at the ML decoder, complexity may be increased since the value of S2 depends on the value of S1 and performance may be degraded due to the correlation between input signals in an uncorrelated MIMO channel.

3. Third Embodiment: MIMO encoding method that sets MIMO encoding factor taking into consideration Hamming distance in addition to Euclidian distance

The third embodiment suggests a method in which MIMO encoding is performed by setting an encoding factor value "a" so as to optimize the Euclidian distance taking into consideration the Hamming distance of a reception signal rather than allowing the entire constellation of the reception signal to have a Euclidian distance as in the first embodiment.

FIG. 21 illustrates a MIMO encoding method according to the third embodiment of the present invention.

FIG. 21 illustrates a relationship between the value of an encoding factor "a" of a MIMO encoding matrix and a Hamming distance in a constellation of a reception signal received through a fully correlated MIMO channel. In the third embodiment, a Hamming distance of interval $D_{E1}$ is smaller than a Hamming distance of interval $D_{E2}$ in the constellation of the reception signal and therefore the Euclidian distance is adjusted so as to compensate for the Hamming distance difference by maintaining the power difference between the interval $D_{E1}$ and the interval $D_{E2}$ such that the power of the interval $D_{E1}$ is twice the power of the interval $D_{E2}$. That is, the Euclidian distance is adjusted so as to compensate for the reconstruction performance difference due to the Hamming distance difference using the power difference.

In the example of FIG. 21, the Hamming distance of the interval $D_{E2}$ is twice higher than that of the interval $D_{E1}$. That is, the Euclidian distance between adjacent symbols in an interval, whose Hamming distance is twice greater than another interval since the number of bits thereof is twice greater than the other interval, can be increased so as to increase power of the interval, thereby compensating for performance degradation due to the Hamming distance difference when a reception signal is reconstructed. First, a relative Euclidian distance of a reception signal into which 2 transmission signals St1 and St2 received by the receiver are combined is determined. It can be seen from the above Equation 1 that the minimum Euclidean distance of a 16-QAM symbol whose power is reduced is 2(a-1) and the minimum Euclidean distance of a 16-QAM symbol whose power is increased is 2(a+1) (since one reception signal is expressed as R = h{(a+1)S1 + (a-1)S2}). It can be seen from FIG. 21 that d_E1 is equal to the Euclidian distance of 16-QAM symbols whose power has been reduced. It can also be seen from FIG. 21 that $D_{E2}$ is twice a distance obtained by subtracting 3/2 of the Euclidean distance of 16-QAM symbols whose power has been reduced from 1/2 of the Euclidean distance of 16-QAM symbols whose power has been increased. This may be represented by Equation 7.

[Equation 7]

$$2D_{H_1} = D_{H_2}$$

$$\sqrt{2}D_{E_1} = D_{E_2}$$

$$2\sqrt{2}(a-1) = 2((a+1) - 3(a-1))$$

$$a = \frac{\sqrt{2}+4}{\sqrt{2}+2}$$

That is, the MIMO encoder performs MIMO encoding on input signals by distributing different power to the input signals using the MIMO matrix such that the signals have different Euclidian distances. In this case, the MIMO encoder may perform MIMO encoding by calculating and setting the encoding factor value "a" such that input signals with distributed power have Euclidian distances for compensating for a Hamming distance difference according to the third embodiment.

FIG. 22 illustrates input signals and transmission and reception signals when a MIMO encoding method has been performed according to the third embodiment of the present invention.

In the example of FIG. 22, when an input signal S1 214010 and an input signal S2 214020 are MIMO-encoded according to the third embodiment, the encoded transmission signals have constellations 214030 and 214040. When the transmission signals are transmitted through a MIMO channel, a reception signal received by the receiver has a constellation 214050. It can be seen from the constellation of the reception signal 214050 that the Euclidean distance has been adjusted according to the Hamming distance.

In the example described above with reference to FIGs. 21 and 22, the value "a" is calculated when the input signal S1 is a 16-QAM signal and the input signal S2 is also a 16-QAM signal. The value "a" of a different modulation scheme may be calculated as shown in Equation 8 using the same principle.

[Equation 8]

$$a=\begin{cases}\sqrt{2}+1 & \text{, for QPSK+ QPSK}\\ \left(\sqrt{2}+3+\sqrt{5}\right)/\left(\sqrt{2}+3-\sqrt{5}\right) & \text{, for QPSK+16QAM}\\ \left(\sqrt{2}+4\right)/\left(\sqrt{2}+2\right) & \text{, for 16QAM+16QAM}\end{cases}$$

Here, it is assumed that, in the case of QPSK+16-QAM MIMO, the values suggested above are obtained when power of the input signals S1 and S2 has been normalized to 1 after the input signals S1 and S2 are QAM-modulated through QPSK and 16-QAM, respectively, at the symbol mapper. When the power has not been normalized, the value "a" may be modified accordingly.

In addition, in the case of QPSK+16-QAM, a value of 4.0 other than the above-suggested values may be used as the value "a". The reason for this is that the combined signal can represent all input signals S1 and S2 even when the SM scheme is applied in a fully correlated channel environment. In this case, a value of 4.0 or a value close to 4.0 may be used instead of the value calculated using Equation 7 in order to compensate a high code rate of the outer code.

As described above, it can be seen that, in a fully correlated MIMO channel environment, the MIMO encoding method (SM OPT2) of the second embodiment has almost the same performance as the SIMO scheme. However, it can be seen that, in an uncorrelated MIMO channel environment, the MIMO encoding method (SM OPT2) of the second embodiment suffers from performance degradation due to the relationship between the MIMO-encoded and transmitted signals S1 and S1, specifically, since the signal S2 depends on the signal S1.

It can also be seen that the MIMO encoding method (SM OPT3) of the third embodiment experiences no performance loss in an uncorrelated MIMO channel while exhibiting performance better than the first embodiment (SM OPT1) in a fully correlated MIMO channel (or channel environment).

It can be seen that, in a fully correlated MIMO channel environment, the MIMO encoding method (SM OPT3) of the third embodiment exhibits better performance than the first embodiment (SM OPT1) and the MIMO encoding method (SM OLDP Golden) that uses a subset of Gold Code (GC) and it can also be seen that the MIMO encoding method (SM OPT3) of the third embodiment experiences no performance loss in an uncorrelated MIMO channel environment.

When the second embodiment and the third embodiment are compared with reference to the above descriptions, it can be seen that the second embodiment exhibits the same performance as SIMO in a fully correlated MIMO channel environment and thus does not suffer any performance loss, thereby solving the problems of the MIMO scheme in a fully correlated MIMO channel environment. However, in the second embodiment, input signals S1 and S2 are not independent of each other due to MIMO encoding such that the signal S2 changes according to the signal S1, thereby causing performance degradation in an uncorrelated channel as can be seen. Accordingly, iterative ML detection may be used in order to solve the problem that reception and decoding errors of the signal S1 are reflected in the signal S2, causing an additional decoding error of the signal S2.

In the iterative ML detection method, an outer code is included in an iterative loop and a detection error of the signal S1 is reduced using a soft posteriori probability value of the signal S1 output from an outer port as an a priori probability value of the ML detector, thereby reducing the probability of application of the detection error of the signal S1 for detection of the signal S2. This method allows the MIMO encoding method of the second embodiment to exhibit performance of the SIMO system in a fully correlated MIMO channel environment and exhibit performance of the SIMO system in an uncorrelated MIMO channel environment.

In the MIMO encoding method of the third embodiment, a reception signal received through a fully correlated MIMO channel is designed taking into consideration both the Hamming distance and the Euclidian distance. Accordingly, the MIMO encoding method of the third embodiment not only has better performance in a fully correlated MIMO channel but also has no performance loss compared to the SM scheme in an uncorrelated MIMO channel such that it is possible to use both MIMO transmission and reception gains. In this case, there is an advantage in implementation of the receiver since the receiver has complexity similar to the SM scheme.

Meanwhile, in the description of the present invention, the NGH frame may be broadly categorized as a logical NGH frame and a physical NGH frame. The FEF (or additional frame) transmitting the mobile broadcast data (*e.g.*, NGH data) will hereinafter be referred to as a physical NGH frame. And, the logical NGH frame corresponds to a collection of mobile broadcast data (*e.g.,* NGH data) included in one or more physical NCH frames.

FIG. 23 illustrates a structure of an NGH system according to an embodiment of the present invention, wherein services or service components are embedded in TSs (Transport streams) or RSs (Generic streams), thereby being transmitted through each PLP. At this point, the PLPs are mapped to a Logical channel (LC) and then transmitted to the respective physical frame in accordance with a fixed schedule. The physical frame may correspond to a T2 frame (or basic frame) or may correspond to a physical frame. The sequence of the physical frames transmitting the logical channel may be transmitted through a single RF frequency or multiple RF frequencies. Herein, a logical channel refers to a flow of logical super-frames for the transport of data over a given repeating pattern of RF channels in the NGH system. The logical super frame corresponds to an entity, which is configured of logical NGH frames. At this point, logical configurable signaling information may be changed only at the boundaries of two logical super frames.

According to the embodiment of the present invention, the logical NGH frame and the physical NGH frame are generated from the frame builder 101400 based upon the control of the scheduler 104100 included in the input processing module 101200 of FIG. 1. The size of the logical NGH frame may be variable, and the size of the physical NGH frame is fixed. Also, the logical MGH frame is used in combination with the logical frame. For example, the frame builder 101400 first generates a logical NGH frame, which includes L1 post-signaling information being LDPC/BCH encoded by the BICM encoder 101300 and NGH data, and then generates a plurality of physical NGH frames, each including the data of the logical NGH frame and L1 pre-signaling information being LDPC/BCH encoded by the BICM encoder 101300. Therefore, the OFDM generator 101500 performs OFDM modulation in physical NGH frame units.

FIG. 24 illustrates an example of a frame builder 101400 mapping data of the logical NGH frame to physical NGH frames according to the present invention.

As shown in FIG. 24, the data of one logical NGH frame are mapped to at least one or more NGH slots, and one NGH slot is mapped to one FEF. Herein, the size of an NGH slot is equal to or smaller than the FEF.

At this point, P1 signaling information, which is transmitted through a P1 symbol, is included at the starting (or beginning) portion of each NGH slot, and, the L1 pre-signaling information, which is transmitted through a P2 symbol, is included after the P1 signaling information. If AP1 signaling information, which is transmitted through an AP1 symbol exists, the AP1 information is included between the P1 signaling information and the L1 pre-signaling information.

The L1 post-signaling information, which includes configurable L1 post-signaling information and dynamic L1 post-signaling information, is included at the starting (or beginning) portion of each logical NGH frame. More specifically, one logical NGH frame is configured of L1 post-signaling information and NGH data. In other words, in order to differentiate (or identify) the boundaries of each logical NGH frame, the L1 post-signaling information exists only at the starting (or beginning) portion of each logical NGH frame. Therefore, instead of having all NGH slots transmit the L1 post-signaling information, L1 post-signaling information is transmitted only from the NGH slot being mapped to the starting (or beginning) portion of each logical NGH frame. More specifically, although the P2 symbol of each NGH slot always included the L1 pre-signaling information, the P2 symbol may or may not include the L1 post-signaling information. The broadcast receiver uses the L1 post-signaling information in order to identify each logical NGH frame.

FIG. 25 illustrates an L1 signaling structure according to the present invention. Herein, the L1 signaling structure may be divided into P1 signaling information, L1 pre-signaling information, and L1 post-signaling information. The logical NGH frame, which includes L1 post-signaling information and at least one or more PLPs, is mapped to one or more NGH slots (*i.e.,* physical NGH frame). FIG. 25 shows an example of one logical NGH frame being mapped to two NGH slots. In this case, the first NGH slot transmits the L1 post-signaling information. However, the second NGH slot does not transmit the L1 post-signaling information.

The L1 post-signaling information may include a configurable block, a dynamic block, an extension block, a CRC block (Cyclic Redundancy Check block), and an L1 padding block. The configurable block includes configurable L1 post-signaling information that can be equally applied throughout a single frame, and the dynamic block includes dynamic L1 post-signaling information, which corresponds to characteristic information respective to the frame that is currently being transmitted. The extension block corresponds to a block that may be used when the L1 post-signaling information is extended, and the CRC block may include diverse information that are used for error correcting the L1 post-signaling information and may have the size of 32 bits. Furthermore, when the L1 post-signaling information is transmitted by being divided into multiple encoding blocks, the padding block may be used for equally matching the size of the information being included in each encoding block, and the size of the padding block may be variable. According to the embodiment of the present invention, the signaling of the L1 signaling information, which includes the L1 pre-signaling information, the configurable L1 post-signaling information, and the dynamic L1 post-signaling information, is performed in the L1 signaling generator 104500 shown in FIG. 4. At this point, according to the embodiment of the present invention, the L1 signaling generator 104500 operates in relation with the scheduler 104100 and the cell mapper of the frame builder 101400. Also, in the receiver, the extraction or decoding of the L1 signaling information is performed by the L1 signaling decoder 201410 of FIG. 11. At this point, according to the embodiment of the present invention, the L1 signaling decoder 201410 operates in relation with the cell mapper of the frame parser 107200.

As described above, the L1 post-signaling information, which is transmitted for each logical NGH frame, the L1 post-signaling information is not transmitted while being in synchronization with the L1 pre-signaling information, which is transmitted for each physical NGH frame, and depending upon the scheduling method configuring the logical channel and the logical NGH frame, the gap between the L1 post-signaling information and the L1 pre-signaling information may vary. In other words, the gap between the L1 post-signaling information region and the L1 pre-signaling information region may vary depending upon the scheduling method configuring the logical channel and the logical NGH frame.

Therefore, the broadcast receiver should be informed of such gap information so as to be capable of detecting the L1 post-signaling information, and, based upon the detected the L1 post-signaling information, the broadcast receiver may be capable of configuring the logical NGH frame.

In the present invention, a field transmitting such gap information will be referred to as an L1_OFFSET_TIME field. More specifically, the L1_OFFSET_TIME field indicates the number of cells (i.e., QAM cells or constellations) between the L1 pre-signaling information region and the L1 post-signaling information region of the next logical NGH frame. In other words, the L1_OFFSET_TIME field indicates a gap, which corresponds to the number of cells between the last cell transmitting the L1 pre-signaling information of the current logical NGH frame over the logical channel and the first cell transmitting the L1 post-signaling information of the next NGH logical frame.

According to the embodiment of the present invention, by having one logical NGH frame be mapped to multiple NGH slots, when a plurality of L1 pre-signaling information regions exist between the L1 post-signaling information region, the last L1 pre-signaling information becomes the point of reference. However, this is merely an exemplary embodiment of the present invention, and, therefore, another L1 pre-signaling information region may be used as the point of reference.

According to the embodiment of the present invention, the L1_OFFSET_TIME field is included in the L1 pre-signaling information, so as to be transmitted. In this case, unlike the other fields that are included in the L1 pre-signaling information, the L1_OFFSET_TIME field is given the characteristic of a dynamic field, which dynamically varies for each frame in accordance with the logical NGH frame scheduling.

However, since the in-band signaling information does not include the L1_OFFSET_TIME field, the broadcast receiver is incapable of locating (or finding) the next logical NGH frame by using only the in-band signaling information.

Therefore, according to another embodiment of the present invention, the L1_OFFSET_TIME field is included in the in-band signaling information, so as to be transmitted. Thus, the broadcast receiver may be capable of locating (or finding) the next logical NGH frame by using only the in-band signaling information.

In the description presented above, an exemplary application of the L1_OFFSET_TIME field, when transmitting one service (or the data of one logical channel or the data of one logical NGH frame) through one RF channel has been described.

Meanwhile, a Time-Frequency slicing (TFS) structure may be applied to the present invention, as shown in FIG. 23, so that one service (or the data of one logical channel or the data of one logical NGH frame) can be transmitted through a plurality of RF channels.

In this case, in order to decode the PLPs of a specific service, a frequency (RF) of the current physical channel should be informed (or aware) of the frequency (RF) of a physical channel to which frequency hopping is to be performed subsequently. In the description of the present invention, a field transmitting such RF information will be referred to as an L1_OFFSET_FREQ field. More specifically, the L1_OFFSET_FREQ field includes identification information informing the next RF to which hopping can be performed from the current RF. Alternatively, the L1_OFFSET_FREQ field may also indicate the RF of a next slot carrying the logical NGH frame of the logical channel, which is transmitted to the current NGH slot.

In this case, the L1_OFFSET_TIME field indicates a number of cells, i.e., a gap, between the last cell of the L1 pre-signaling information region of the current RF and the first cell of the L1 post-signaling information region of the next logical NGH frame, which is included in the RF to which hopping is to be performed next (or subsequently). For example, if the current RF channel is RF1, and if the RF channel that is to be hopped to next is RF3, the broadcast receiver may use the L1_OFFSET_FREQ field so as to recognize that the RF channel to which hopping is to be performed next is RF3. In this case, the L1_OFFSET_TIME field indicates the number of cells, i.e., a gap, between the last cell of the L1 pre-signaling information region of the current logical NGH frame of RF1 and the first cell of the L1 post-signaling information region of the next logical NGH frame, which is included in RF3.

According to the present invention, the L1_OFFSET_FREQ field is included in at least one of the L1 pre-signaling information and the in-band signaling information, so as to be transmitted.

FIG. 26 illustrates a syntax structure of the in-band signaling information according to an embodiment of the present invention.

As shown in FIG. 26, a PADDING_TYPE field (2 bits) indicates a type of the in-band signaling block.

A PLP_L1_CHANGE_COUNTER field (8 bits) indicates a number of remaining logical super-frames prior to the change in the configuration (*e.g.,* contents of the fields included in L1 pre-signaling or configurable parts of L1 post-signaling). (The next LSF with changes in the configuration is indicated by the value signaled within this field.)

A SUB_SLICE_INTERVAL field (22 bits) indicates a number of cells starting from the beginning of a sub-slice of a PLP to the beginning of a next sub-slice within the same PLP over the same RF channel.

A START_RF_INX field (3 bits) indicates an identifier (ID) of a starting frequency of a logical channel type D frame.

A CURRENT_PLP_START field (22 bits) indicates a starting point of the current PLP within the corresponding logical NGH frame.

An L1_OFFSET_TIME field (22 bist) indicates a number of cells (*i.e.,* QAM cells) between the starting cell of the L1 pre-signaling information region and the last cell of the L1 post-signaling information region of the next logical NGH frame. Alternatively, the L1_OFFSET_TIME field may also indicate a number of QAM cells, which corresponds to a cell between the last cell transmitting L1 pre-signaling and the first cell of a first logical NGH frame, which begins from the current LGH frame. (The value (HEX) FFFFFF means that no new logical frame starts in the current NGH frame.)

An L1_OFFSET_FREQ field (3 bits) include frequency information that can identify the RF to which hopping is to be performed next, when applying the TFS method.

A CURRENT_PLP_NUM_BLOCKS field (10 bits) indicates a number of FEC blocks that are used for the current PLP within an interleaving frame, which is mapped to the next logical NGH frame.

Additionally, the in-band signaling information may also signal information on at least one different PLP. In order to do so, the in-band signaling information includes information on a number of other PLPs being signaled to the in-band signaling information (UNM_OTHER_PLP_IN_BAND field), an identifier of each PLP (PLP_ID field), a starting point of each PLP (PLP_START field), and a number of FEC blocks being used for each PLP (PLP_NUM_BLOCKS field).

Meanwhile, as described above, in the description of the present invention, the PLP including the SI, which is required for decoding the data PLP, is referred to as n SI PLP (also referred to as a base PLP or anchor PLP or signaling PLP). In this case, the receiver may first decode the SI PLP including the SI and may, then, decode the data PLP including the service component. Essentially, information, such as PAT/PMT, SDT, and so on of one service is included in the SI PLP. However, NIT, SDT, EIT information of diverse services may also be included. In the conventional broadcasting system, the NIT, SDT, EIT information is transmitted through the common PLP. In the description of the present invention, the SI PLP may be configured by using only the SI, and a PLP may also be configured by combining the SI with other service components. In the description of the present invention, the SI PLP may be considered as a common PLP or data PLP, and each PLP may be categorized as a Type 1 PLP or a Type 2 PLP depending upon the presence or absence of sub-slicing.

Also, as described above, in the description of the present invention, depending upon the control of the scheduler 104100 shown in FIG. 4, in-band signaling information may be signaled to the corresponding PLP from at least one of the multiple in-band signaling/padding insertion modules 104300, which respectively process each of the multiple PLPs. At this point, the PLP having the in-band signaling information signaled thereto may correspond to each service component PLP, or may correspond to an SI PLP, or may correspond to a common PLP.

Each case will hereinafter be described in detail.

The first method corresponds to a method of signaling in-band signaling information to each service component PLP and transmitting the processed information. This method corresponds to a case when each service component PLP has its own in-band signaling information, and, in this case, since the in-band signaling information is transmitted identically as the data, the in-band signaling information has the same robustness as the data. More specifically, the in-band signaling information is signaled from each service component PLP.

The second method corresponds to a method for signaling in-band signaling information to the SI PLP. According to an embodiment of the present invention, in-band signaling information of the service components, which are included in each service, is signaled to the SI PLP, thereby being transmitted. In this case, in order to decode the service component PLP, essentially, the SI PLP should first be decoded, so that the PAT/PMT and SDT information can be known in advance. If the SI PLP is to be passed through in order to access all data PLPS, the in-band signaling information may be signaled to the SI PLP by using such characteristics. Unlike the first method, the second method is advantageous in that a different in-band signaling robustness other than that of the data PLP may be provided. And, instead of signaling the in-band signaling information in each PLP, as performed in the conventional method, concentrated transmission of the in-band signaling information may be performed. Accordingly, since the frame configuration and common information are not required to be transmitted (or delivered) from each PLP, this advantageous in that the signaling overhead can be reduced.

The third method corresponds to a method of signaling in-band signaling information to a common PLP, thereby transmitting the in-band signaling information. This method is also advantageous in that, by signaling the in-band signaling information by using a common PLP, which transmits a common SI for multiple services, robustness other than the data PLP and a smaller overhead may be provided, as when using the SI PLP. At this point, in-band signaling information may be included for a portion of the PLP group (PLP_GROUP) configuring the common PLP or for all PLP. And, the in-band signaling information may also be included for a portion of the PLPs or all PLPs belonging to the current frame. And, a portion of the PLPs corresponding to the PLP_GROUP or correspond to the current frame may also be included. Such common PLP may be categorized as a Type 1 PLP or a Type 2 PLP depending upon the presence or absence of sub-slicing.

According to the embodiment of the present invention, the in-band signaling information being signaled to at least one of the data PLP, SI PLP, and common PLP includes each of the fields shown in FIG. 26, and, most particularly, the in-band signaling information includes the L1_OFFSET_TIME field according to the present invention. Since reference may be made to FIG. 26 for the description of the L1_OFFSET_TIME field, detailed description of the same will be omitted for simplicity.

Meanwhile, after decoding the PLP including the in-band signaling information in accordance with each method (or each case), i.e., after decoding at least one of the PLP itself (first method), the SI PLP (second method), and the common PLP (third method), the broadcast receiver may access a service component PLP by using the decoded in-band signaling information.

At this point, at least 2 of the above-described three different methods may be combined so as to signal the in-band signaling information.

For example, the above-described first, second, and third method may be used as a mixed type between different service components within the frame. For example, the in-band signaling information of a portion of the PLPs included in a frame may be signaled by using the SI PLP, and the in-band signaling information of the other portion of the PLPs may be signaled by using the common PLP.

In another example, any one of the following three methods may be used as the method for signaling in-band signaling information for a service component PLP that does not include a PLP_GROUP. A first method corresponds to a method of signaling in-band signaling information of a service component PLP, which does not include a PLP_GROUP, to a common PLP for other service components, thereby transmitting the in-band signaling information. A second method corresponds to a method of signaling in-band signaling information of a service component PLP, which does not include a PLP_GROUP, by using the SI PLP of the corresponding service component, thereby transmitting the in-band signaling information. Finally, a third method corresponds to a method of signaling its own in-band signaling information to a service component PLP, which does not include a PLP_GROUP, thereby transmitting the in-band signaling information

Another example corresponds to a method for hierarchically signaling in-band signaling information. This method corresponds to a method having a 2-step process, wherein in-band signaling information for the SI PLP of each service is signaled to the common PLP, thereby being transmitted, and then in-band signaling information of service components including the SI PLP is signaled to the SI PLP, thereby being transmitted. In this case, the receiver first decodes the common PLP, so as to acquire the in-band signaling information respective to the SI PLP. Thereafter, the receiver decodes the SI PLP, so as to acquire in-band signaling information respective to corresponding service components. However, since this method processes a 2-step in-band signaling process in order to acquire the in-band signaling information of the service components, this method is disadvantageous in that the latency increases.

As described above, according to the embodiment of the present invention, the signaling of the in-band signaling information is performed by at least one of the plurality of in-band signaling/padding insertion modules 104300 dependent on a control of the scheduler 104100 shown in FIG. 4 . And, according to the embodiment of the present invention, in the receiver, the decoding of the in-band signaling information is performed by at least one of the plurality of in-band signaling decoders of the output processor 107400 shown in FIG. 11.

FIG. 27 illustrates a flow chart showing a method of a broadcast signal transmitter for signaling in-band signaling information and transmitting the signaled information according to an embodiment of the present invention. First of all, in-band signaling information may be signaled to at least one of a service component PLP including at least one service component, which configures a broadcast service, a first information PLP including first service information being applied to one broadcast service, and a second information PLP including second service information being commonly applied to several broadcast services (S300010). Herein, based upon the control of the scheduler 104100 included in the input processing module 101200, the step S300010 is performed by at least one of a plurality of in-band signaling/padding insertion modules. According to the embodiment of the present invention, the first information PLP will be referred to as an SI PLP (or base PLP), and the second information PLP will be referred to as a common PLP. Since the signaling method of the in-band signaling information has already been described above, a detailed description of the same will be omitted for simplicity. According to the embodiment of the present invention, the in-band signaling information includes information (L1_OFFSET_TIME) indicating the number of cells between the last cell transmitting the L1 pre-signaling information and the first cell transmitting the L1 post-signaling information. The in-band signaling information may further include frequency information (L1_OFFSET_FREA) that can identify a radio frequency (RF) to which hopping is to be performed next, when applying the TFS method. Accordingly, the broadcast receiver may configure a logical NGH frame by using only the in-band signaling information.

If the in-band signaling information is signaled to at least one of the service component PLP, the first information PLP, and the second information PLP, FEC encoding and time interleaver is performed on the data included in each PLP (S300020). In step S300020, FEC encoding is performed by an FEC encoder of the BICM encoder 101300, and time interleaving is performed by a time interleaver.

Thereafter, a logical NGH frame including the time-interleaved data is generated, and at least one or more physical NGH frames including data of the logical NGH frame is generated (S300030). The step S300030 is performed by the frame builder 101400. Subsequently, the at least one or more physical NGH frames are modulated, and the broadcast signal including the at least one or more modulated physical NGH frames is transmitted (S300040). The broadcast signal may further include a T2 frame. Additionally, step S300040 is performed by the OFDM generator 101500, and since reference may be made to FIG. 6 for the detailed operations of the OFDM generator 101500, the detailed description of the same will be omitted for simplicity. The OFDM generator 101500 will also be referred to as a modulating unit.

The description of the present invention will not be limited only to the above-described exemplary embodiments of the present invention. And, as it is shown in the appended claims of the present invention, it will be apparent to those skilled in the art that various modifications and variations can be made in the present invention, and that such modifications and variations cover the scope of the claims.

**[Mode for Carrying Out the Present Invention]**

As described above, the present invention is described with respect to the best mode for carrying out the present invention.

**[Industrial Applicability]**

As described above, the present invention may be fully (or entirely) or partially applied to digital broadcasting systems.

## Claims

1. A broadcast signal transmitting method comprising:

    signaling in-band signaling information to at least one of multiple Physical Layer Pipes, PLPs, carrying service components configuring a broadcast service or broadcast services;
    performing Forward Error Correction, FEC, encoding on data included in each PLP;
    performing multiple input multiple output, MIMO, processing the FEC encoded data;
    cell interleaving the MIMO processed data;
    time-interleaving the cell interleaved data;
    generating logical transmission frames including the time-interleaved data, wherein each logical transmission frame further includes Layer 1, L1, -post signaling information and wherein the L1-post signaling information is carried in a beginning of each logical transmission frame;
    generating physical transmission frames including data of the logical transmission frames, wherein each physical transmission frame further includes P1 signaling information and L1-pre signaling information and wherein the P1 signaling information and the L1-pre signaling information are carried in a beginning of each physical transmission frame;
    modulating the physical transmission frames; and
    transmitting a broadcast signal including the modulated physical transmission frames,
    wherein at least one of the in-band signaling information and the L1-pre signaling information includes gap information indicating a number of cells between a last cell transmitting the L1-pre signaling information and a first cell of a first logical transmission frame starting in a current physical transmission frame.

2. The method of claim 1, wherein, when a HEX value of the gap information is FFFFFF, it means that no new logical transmission frame starts in the current physical transmission frame.

3. The method of claim 1, wherein, when data of a logical channel, which corresponds to a collection of logical transmission frame sequences, are transmitted through multiple radio frequencies, the gap information indicates a number of cells between the L1-pre signaling information of a current radio frequency and the L1-post signaling information of a next radio frequency to which hopping is to be performed.

4. The method of claim 3, wherein the in-band signaling information further includes information indicating a next radio frequency to which hopping is to be performed.

5. A broadcast signal transmitter comprising:

    an input processing module (101200) configured to signal in-band signaling information to at least one of multiple PLPs carrying service components configuring a broadcast service or broadcast services;
    an FEC encoder (105210) configured to perform FEC encoding on data included in each PLP;

a MIMO encoder (105250) configured to MIMO process the FEC encoded data;
a cell interleaver (105260-1, 105260-2) configured to cell interleave the MIMO processed data;
a time interleaver ((105270-1, 105270-2) configured time interleave the cell interleaved data;
a frame builder (101400) configured to generate logical transmission frames including the time-interleaved data and to generate physical transmission frames including data of the logical transmission frames, wherein each logical transmission frame further includes L1-post signaling information, wherein the L1-post signaling information is carried in a beginning of each logical transmission frame, wherein each physical transmission frame further includes P1 signaling information and L1-pre signaling information, and wherein the P1 signaling information and the L1-pre signaling information are carried in a beginning of each physical transmission frame; and
a modulating unit (101500) configured to modulate the physical transmission frames and to transmit a broadcast signal including the modulated physical transmission frames,
wherein at least one of the in-band signaling information and L1-pre signaling information includes gap information indicating a number of cells between a last cell transmitting the L1-pre signaling information and a first cell of a first logical transmission frame starting in a current physical transmission frame.

**6.** The broadcast signal transmitter of claim 5, wherein, when a HEX value of the gap information is FFFFFF, it means that no new logical transmission frame starts in the current physical transmission frame.

**7.** The broadcast signal transmitter of claim 5, wherein, when data of a logical channel, which corresponds to a collection of logical transmission frame sequences, are transmitted through multiple radio frequencies, the gap information indicates a number of cells between the L1-pre signaling information of a current radio frequency and the L1-post signaling information of a next radio frequency to which hopping is to be performed.

**8.** The broadcast signal transmitter of claim 7, wherein the in-band signaling information further includes information indicating a next radio frequency to which hopping is to be performed.

## Patentansprüche

**1.** Rundfunksignalübertragungsverfahren, das aufweist:

Signalisieren von In-Bandsignalisierungsinformationen an wenigstens eine von mehreren Leitungen der physikalischen Schicht, PLPs, welche Dienstkomponenten befördern, die einen Rundfunkdienst oder Rundfunkdienste konfigurieren;
Durchführen einer Fehlervorwärtskorrektur-, FEC-, Kodierung für Daten, die in jeder PLP enthalten sind;
Durchführen einer Mehrfacheingangs-Mehrfachausgangs-, MIMO-, Verarbeitung der FEC-kodierten Daten;
Zellenverschachteln der MIMO-verarbeiteten Daten;
Zeitverschachteln der zellenverschachtelten Daten;
Erzeugen logischer Übertragungsrahmen, welche die zeitverschachtelten Daten umfassen, wobei jeder logische Übertragungsrahmen ferner Schicht-1-, L1-, Nachsignalisierungsinformationen umfasst, und wobei die L1-Nachsignalisierungsinformationen in einem Anfang jedes logischen Übertragungsrahmens befördert werden;
Erzeugen physikalischer Übertragungsrahmen, welche Daten der logischen Übertragungsrahmen umfassen, wobei jeder physikalische Übertragungsrahmen ferner P1-Signalisierungsinformationen und L1-Vorsignalisierungsinformationen umfasst, und wobei die P1-Signalisierungsinformationen und die L1-Vorsignalisierungsinformationen in einem Anfang jedes physikalischen Übertragungsrahmens befördert werden;
Modulieren der physikalischen Übertragungsrahmen; und
Übertragen eines Rundfunksignals, das die modulierten physikalischen Übertragungsrahmen umfasst,
wobei die In-Bandsignalisierungsinformationen und/oder die L1-Vorsignalisierungsinformationen Lückeninformationen umfassen, die eine Anzahl von Zellen zwischen einer letzten Zelle, welche die L1-Vorsignalisierungsinformationen überträgt, und einer ersten Zelle eines ersten logischen Übertragungsrahmens, der in einem aktuellen physikalischen Übertragungsrahmen beginnt, anzeigen.

**2.** Verfahren nach Anspruch 1, wobei, wenn ein HEX-Wert der Lückeninformationen FFFFFF ist, dies bedeutet, dass in dem aktuellen physikalischen Übertragungsrahmen kein neuer logischer Übertragungsrahmen beginnt.

**3.** Verfahren nach Anspruch 1, wobei die Lückeninformationen, wenn Daten eines logischen Kanals, der einer Sammlung logischer Übertragungsrahmensequenzen entspricht, über mehrere Funkfrequenzen übertragen werden, eine Anzahl von Zellen zwischen den L1-Vorsignalisierungsinformationen einer aktuellen Funkfrequenz und den L1-Nachsignalisierungsinformationen einer nächsten Funkfrequenz, auf die ein Springen durchgeführt wird, anzeigen.

**4.** Verfahren nach Anspruch 3, wobei die In-Bandsignalisierungsinformationen ferner Informationen umfassen, die eine nächste Funkfrequenz anzeigen, auf welche ein Springen durchgeführt werden soll.

**5.** Rundfunksignalsender, der aufweist:

ein Eingangsverarbeitungsmodul (101200), das konfiguriert ist, um In-Bandsignalisierungsinformationen an wenigstens eine von mehreren Leitungen der physikalischen Schicht, PLPs, welche Dienstkomponenten befördern, die einen Rundfunkdienst oder Rundfunkdienste konfigurieren, zu signalisieren;
einen FEC-Kodierer (105210), der konfiguriert ist, um eine FEC-Kodierung für Daten, die in jeder PLP enthalten sind, durchzuführen;
einen MIMO-Kodierer (105250), der konfiguriert ist, um die FEC-kodierten Daten zu MIMO-verarbeiten;
einen Zellenverschachtler (105260-1, 105260-2), der konfiguriert ist, um die MIMO-verarbeiteten Daten zellenzuverschachteln;
einen Zeitverschachtler (105270-1, 105270-2), der konfiguriert ist, um die zellenverschachtelten Daten zeitzuverschachteln;
eine Rahmenerzeuger (101400), der konfiguriert ist, um logische Übertragungsrahmen, welche die zeitverschachtelten Daten umfassen, zu erzeugen, und physikalische Übertragungsrahmen, die Daten der logischen Übertragungsrahmen umfassen, zu erzeugen, wobei jeder logische Übertragungsrahmen ferner L1-Nachsignalisierungsinformationen umfasst, wobei die L1-Nachsignalisierungsinformationen in einem Anfang jedes logischen Übertragungsrahmens befördert werden, wobei jeder physikalische Übertragungsrahmen ferner P1-Signalisierungsinformationen und L1-Vorsignalisierungsinformationen umfasst, und wobei die P1-Signalisierungsinformationen und die L1-Vorsignalisierungsinformationen in einem Anfang jedes physikalischen Übertragungsrahmens befördert werden;
eine Modulationseinheit (101500), die konfiguriert ist, um die physikalischen Übertragungsrahmen zu modulieren, und ein Rundfunksignal, das die modulierten physikalischen Übertragungsrahmen umfasst, zu übertragen, wobei die In-Bandsignalisierungsinformationen und/oder die L1-Vorsignalisierungsinformationen Lückeninformationen umfassen, die eine Anzahl von Zellen zwischen einer letzten Zelle, welche die L1-Vorsignalisierungsinformationen überträgt, und einer ersten Zelle eines ersten logischen Übertragungsrahmens, der in einem aktuellen physikalischen Übertragungsrahmen beginnt, anzeigen.

**6.** Rundfunksignalsender nach Anspruch 5, wobei, wenn ein HEX-Wert der Lückeninformationen FFFFFF ist, dies bedeutet, dass in dem aktuellen physikalischen Übertragungsrahmen kein neuer logischer Übertragungsrahmen beginnt.

**7.** Rundfunksignalsender nach Anspruch 5, wobei die Lückeninformationen, wenn Daten eines logischen Kanals, der einer Sammlung logischer Übertragungsrahmensequenzen entspricht, über mehrere Funkfrequenzen übertragen werden, eine Anzahl von Zellen zwischen den L1-Vorsignalisierungsinformationen einer aktuellen Funkfrequenz und den L1-Nachsignalisierungsinformationen einer nächsten Funkfrequenz, auf die ein Springen durchgeführt wird, anzeigen.

**8.** Rundfunksignalsender nach Anspruch 7, wobei die In-Bandsignalisierungsinformationen ferner eine nächste Funkfrequenz anzeigen, auf welche ein Springen durchgeführt werden soll.

## Revendications

**1.** Procédé d'émission-réception de signaux de diffusion, comprenant :

la signalisation d'informations de signalisation dans la bande vers au moins une de multiples conduites de couche physique, PLP, transportant des composants de service configurant un service de diffusion ou des services de diffusion ;
la réalisation d'un codage à correction d'erreur directe, FEC, sur des données incluses dans chaque PLP ;
la réalisation d'un traitement à entrée multiple sortie multiple, MIMO, des données codées FEC ;
l'entrelacement cellulaire des données traitées MIMO ;
l'entrelacement temporel des données à entrelacement cellulaire ;
la génération de trames d'émission logiques incluant les données à entrelacement temporel, dans lequel chaque trame d'émission logique inclut en outre des informations de post-signalisation de couche 1, L1, et dans lequel les informations de post-signalisation de L1 sont transportées dans un début de chaque trame d'émission logique ;
la génération de trames d'émission physiques incluant des données des trames d'émission logiques, dans lequel chaque trame d'émission physique inclut en outre des informations de signalisation de P1 et des informations de pré-signalisation de L1 et dans lequel les informations de signalisation de P1 et les informations de pré-signalisation de L1 sont transportées dans un début de chaque trame d'émission physique ;
la modulation des trames d'émission physiques ; et
l'émission d'un signal de diffusion incluant les trames d'émission physiques modulées,
dans lequel au moins une des informations de signalisation dans la bande et des informations de pré-signalisation de L1 inclut des informations d'intervalle indiquant un nombre de cellules entre une dernière cellule émettant les informations de pré-signalisation de L1 et une première cellule d'une première trame d'émission logique démarrant dans une trame d'émission physique actuelle.

**2.** Procédé selon la revendication 1, dans lequel, lorsqu'une valeur hexadécimale des informations d'intervalle est FFFFFF, cela signifie qu'aucune nouvelle trame d'émission logique ne démarre dans la trame d'émission physique actuelle.

**3.** Procédé selon la revendication 1, dans lequel, lorsque des données d'un canal logique, qui correspond à un ensemble de séquences de trames d'émission logiques, sont émises par le biais de multiples fréquences radio, les informations d'intervalle indiquent un nombre de cellules entre les informations de pré-signalisation de L1 d'une fréquence radio actuelle et les informations de post-signalisation de L1 d'une prochaine fréquence radio vers laquelle un saut doit être réalisé.

**4.** Procédé selon la revendication 3, dans lequel les informations de signalisation dans la bande incluent en outre des informations indiquant une prochaine fréquence radio vers laquelle un saut doit être réalisé.

**5.** Émetteur de signaux de diffusion comprenant :

un module de traitement d'entrée (101200) configuré pour signaliser des informations de signalisation dans la bande à au moins une des multiples PLP transportant des composants de service configurant un service de diffusion ou des services de diffusion ;
un codeur FEC (105210) configuré pour réaliser un codage FEC sur des données incluses dans chaque PLP ;
un codeur MIMO (105250) configuré pour effectuer un traitement MIMO sur les données codées FEC ;
un entrelaceur cellulaire (105260-1, 105260-2) configuré pour effectuer un entrelacement cellulaire des données traitées MIMO ;
un entrelaceur temporel (105270-1, 105270-2) configuré pour effectuer un entrelacement temporel des données à entrelacement cellulaire ;
un créateur de trame (101400) configuré pour générer des trames d'émission logiques incluant les données à entrelacement temporel et pour générer des trames d'émission physiques incluant des données des trames d'émission logiques, dans lequel chaque trame d'émission logique inclut en outre des informations de post-signalisation de L1, dans lequel les informations de post-signalisation de L1 sont transportées dans un début de chaque trame d'émission logique, dans lequel chaque trame d'émission physique inclut en outre des informations de signalisation de P1 et
des informations de pré-signalisation de L1, et dans lequel les informations de signalisation de P1 et les informations de pré-signalisation de L1 sont transportées dans un début de chaque trame d'émission physique ; et
une unité de modulation (101500) configurée pour moduler les trames d'émission physiques et pour transmettre un signal de diffusion incluant les trames d'émission physiques modulées,
dans lequel au moins une des informations de signalisation dans la bande et des informations de pré-signalisation de L1 inclut des informations d'intervalle indiquant un nombre de cellules entre une dernière cellule émettant les informations de pré-signalisation de L1 et une première cellule d'une première trame d'émission logique démarrant dans une trame d'émission physique actuelle.

**6.** Émetteur de signaux de diffusion selon la revendication 5, dans lequel, lorsqu'une valeur hexadécimale des informations d'intervalle est FFFFFF, cela signifie qu'aucune nouvelle trame d'émission logique ne démarre dans la trame d'émission physique actuelle.

**7.** Émetteur de signaux de diffusion selon la revendication 5, dans lequel, lorsque des données d'un canal logique, qui correspond à un ensemble de séquences de trames d'émission logiques, sont émises par le biais de multiples fréquences radio, les informations d'intervalle indiquent un nombre de cellules entre les informations de pré-signalisation de L1 d'une fréquence radio actuelle et les informations de post-signalisation de L1 d'une prochaine fréquence radio vers laquelle un saut doit être réalisé.

**8.** Émetteur de signaux de diffusion selon la revendication 7, dans lequel les informations de signalisation dans la bande incluent en outre des informations indiquant une prochaine fréquence radio vers laquelle un saut doit être réalisé.

FIG. 1

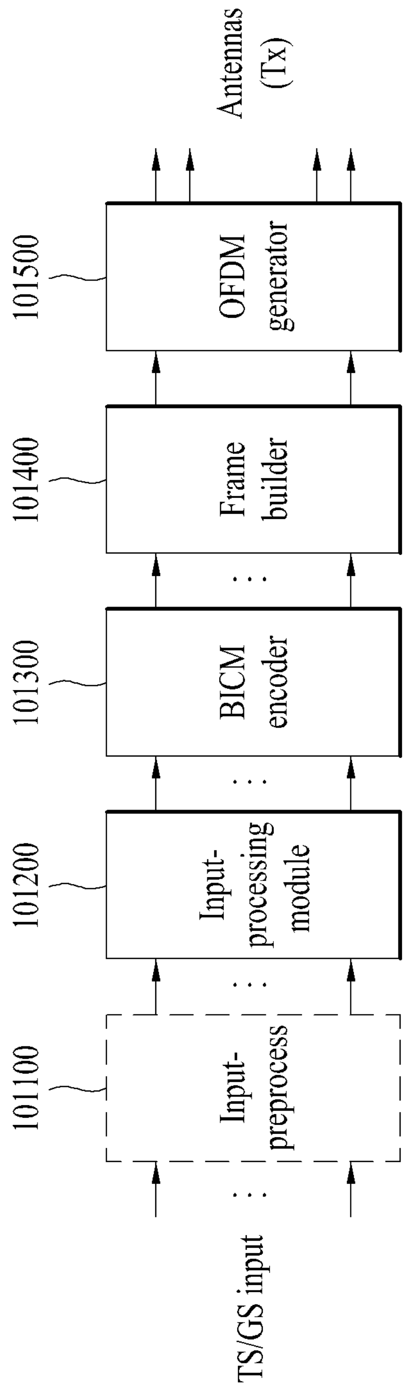
TS/GS input
101100
Input-preprocess
101200
Input-processing module
101300
BICM encoder
101400
Frame builder
101500
OFDM generator
Antennas (Tx)

FIG. 2

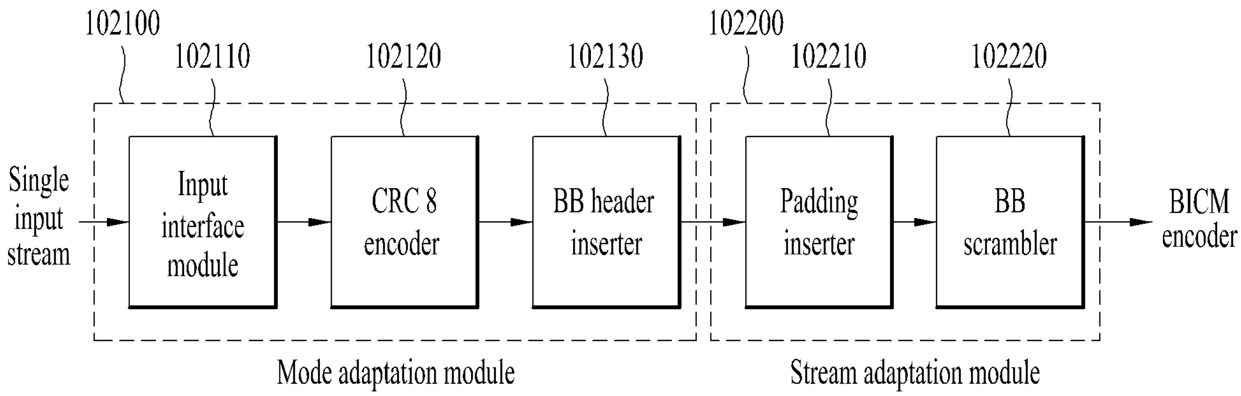
102100
102110
102120
102130
102200
102210
102220
Single input stream
Input interface module
CRC 8 encoder
BB header inserter
Padding inserter
BB scrambler
BICM encoder
Mode adaptation module
Stream adaptation module

FIG. 3

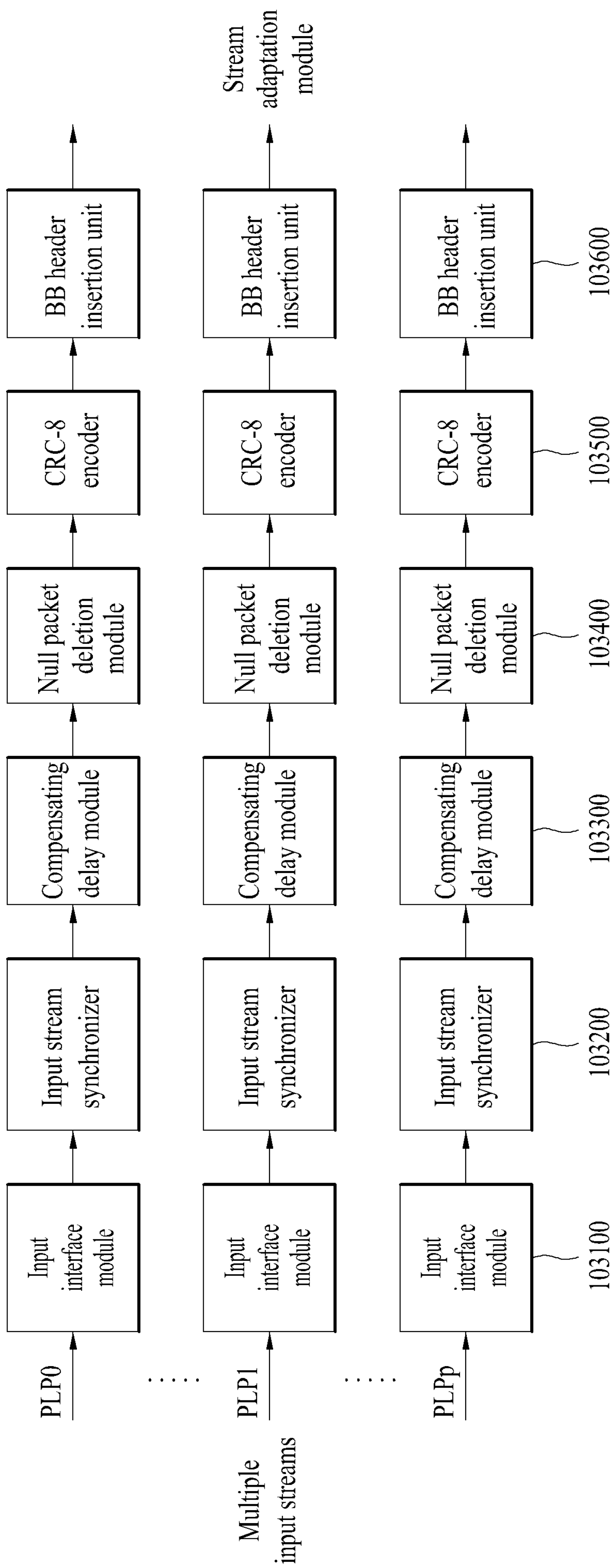
Multiple input streams
PLP0
PLP1
PLPp
Input interface module
Input stream synchronizer
Compensating delay module
Null packet deletion module
CRC-8 encoder
BB header insertion unit
Stream adaptation module
103100
103200
103300
103400
103500
103600

FIG. 4

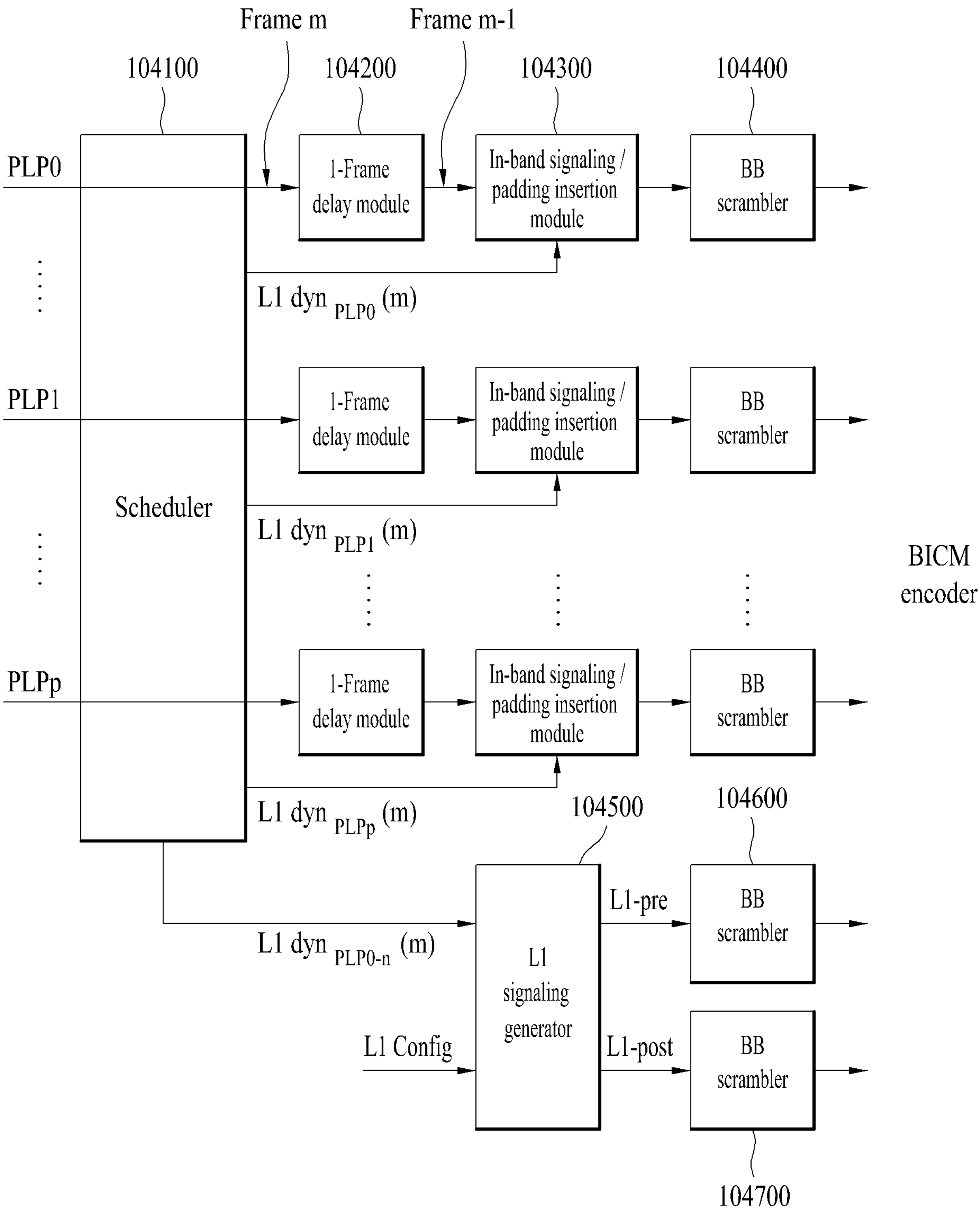
Frame m
Frame m-1
104100
104200
104300
104400
PLP0
PLP1
PLPp
Scheduler
1-Frame delay module
In-band signaling / padding insertion module
BB scrambler
L1 dyn PLP0 (m)
L1 dyn PLP1 (m)
L1 dyn PLPp (m)
BICM encoder
104500
104600
L1-pre
L1-post
L1 dyn PLP0-n (m)
L1 signaling generator
L1 Config
104700

FIG. 5

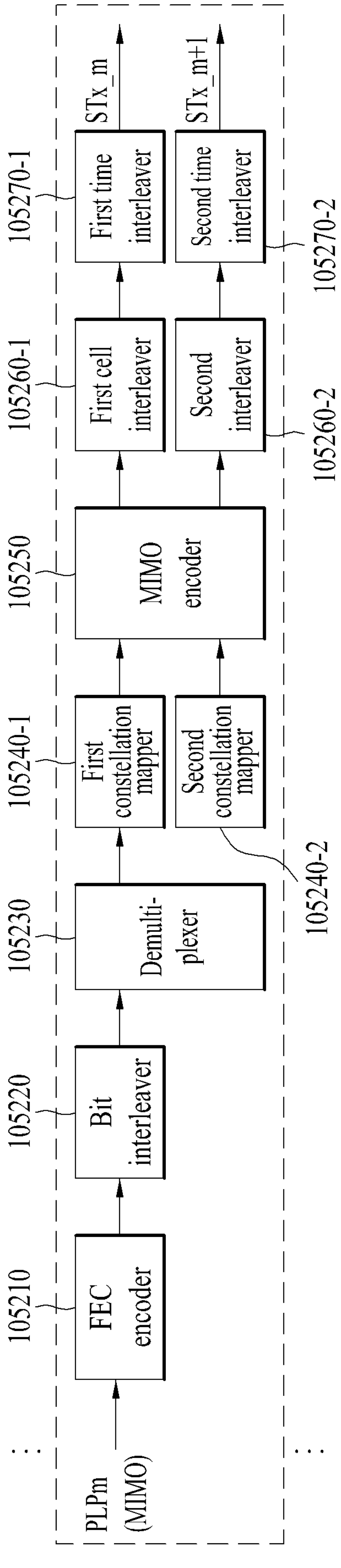
PLPm (MIMO)
105210
FEC encoder
105220
Bit interleaver
105230
Demulti-plexer
105240-1
First constellation mapper
105240-2
Second constellation mapper
105250
MIMO encoder
105260-1
First cell interleaver
105260-2
Second interleaver
105270-1
First time interleaver
105270-2
Second time interleaver
STx_m
STx_m+1

FIG. 6

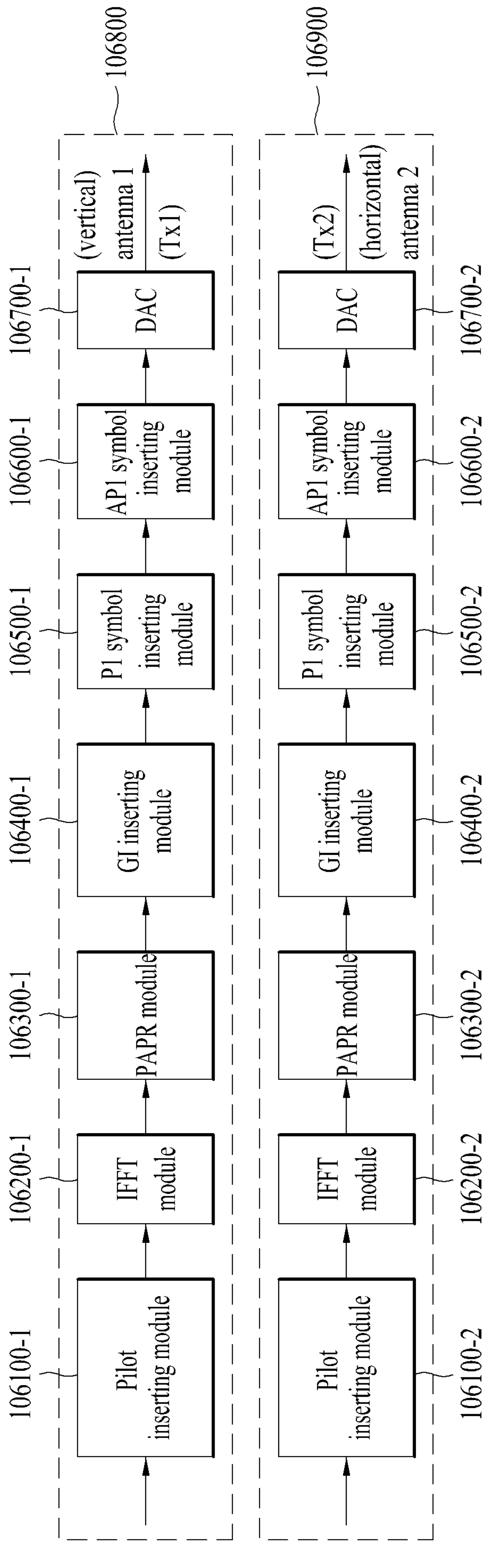
106100-1
Pilot inserting module
106200-1
IFFT module
106300-1
PAPR module
106400-1
GI inserting module
106500-1
P1 symbol inserting module
106600-1
AP1 symbol inserting module
106700-1
DAC
(vertical) antenna 1
(Tx1)
106800
106100-2
Pilot inserting module
106200-2
IFFT module
106300-2
PAPR module
106400-2
GI inserting module
106500-2
P1 symbol inserting module
106600-2
AP1 symbol inserting module
106700-2
DAC
(Tx2)
(horizontal) antenna 2
106900

FIG. 7

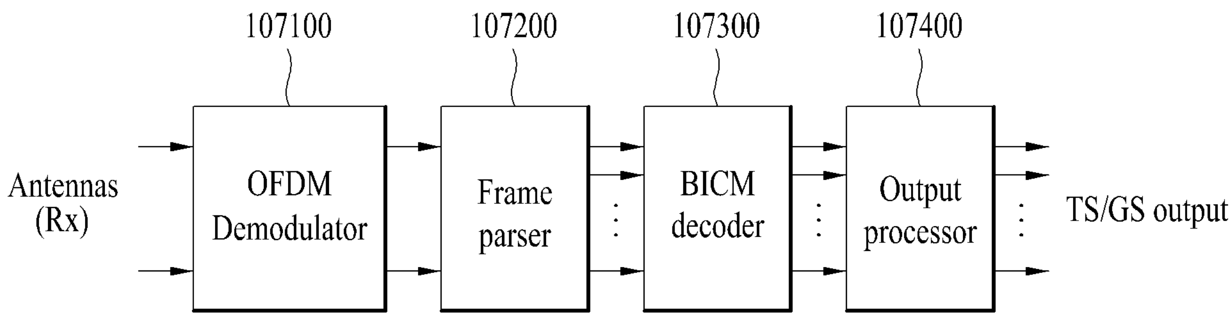
107100
107200
107300
107400
Antennas (Rx)
OFDM Demodulator
Frame parser
BICM decoder
Output processor
TS/GS output

FIG. 8

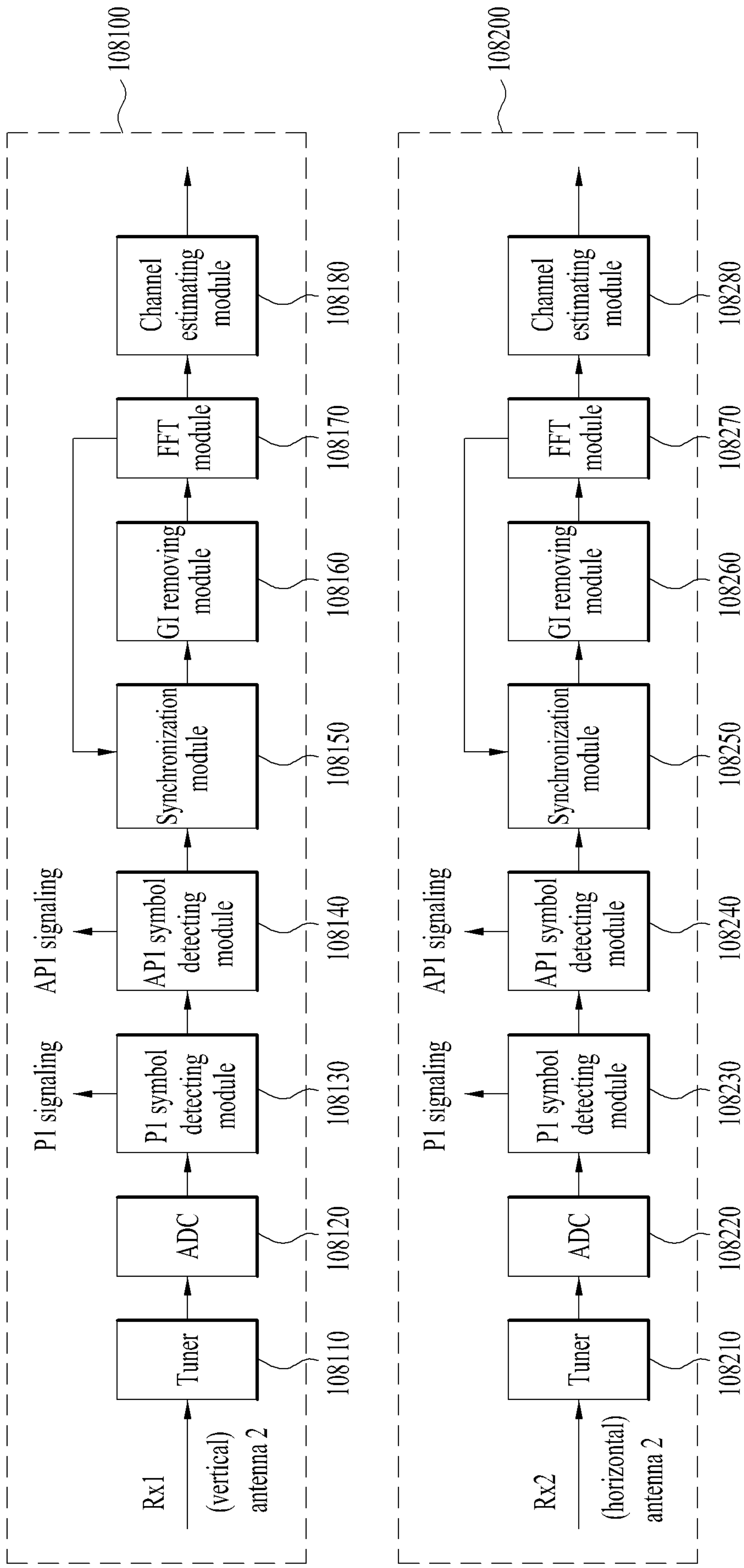
108100
Rx1
(vertical) antenna 2
Tuner
ADC
P1 symbol detecting module
P1 signaling
AP1 symbol detecting module
AP1 signaling
Synchronization module
GI removing module
FFT module
Channel estimating module
108110
108120
108130
108140
108150
108160
108170
108180
108200
Rx2
(horizontal) antenna 2
Tuner
ADC
P1 symbol detecting module
P1 signaling
AP1 symbol detecting module
AP1 signaling
Synchronization module
GI removing module
FFT module
Channel estimating module
108210
108220
108230
108240
108250
108260
108270
108280

FIG. 9

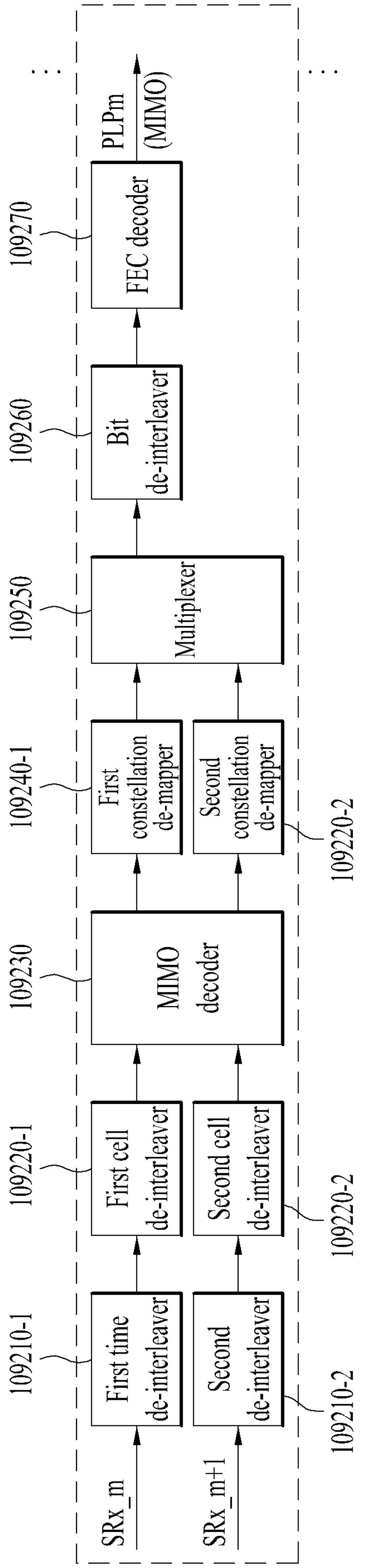
SRx_m
SRx_m+1
109210-1
First time de-interleaver
Second de-interleaver
109210-2
109220-1
First cell de-interleaver
Second cell de-interleaver
109220-2
109230
MIMO decoder
109240-1
First constellation de-mapper
Second constellation de-mapper
109220-2
109250
Multiplexer
109260
Bit de-interleaver
109270
FEC decoder
PLPm (MIMO)

FIG. 10

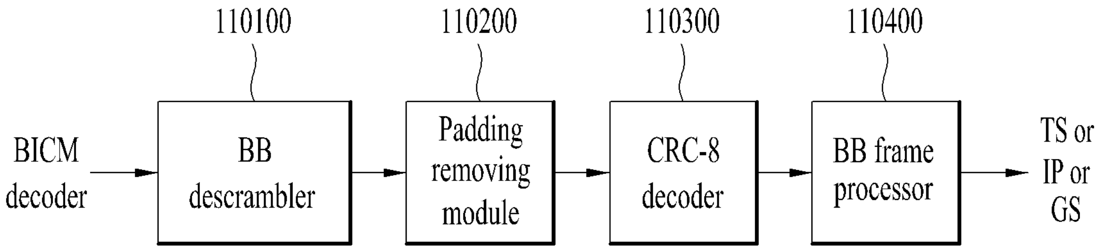
110100
110200
110300
110400
BICM decoder
BB descrambler
Padding removing module
CRC-8 decoder
BB frame processor
TS or IP or GS

FIG. 11

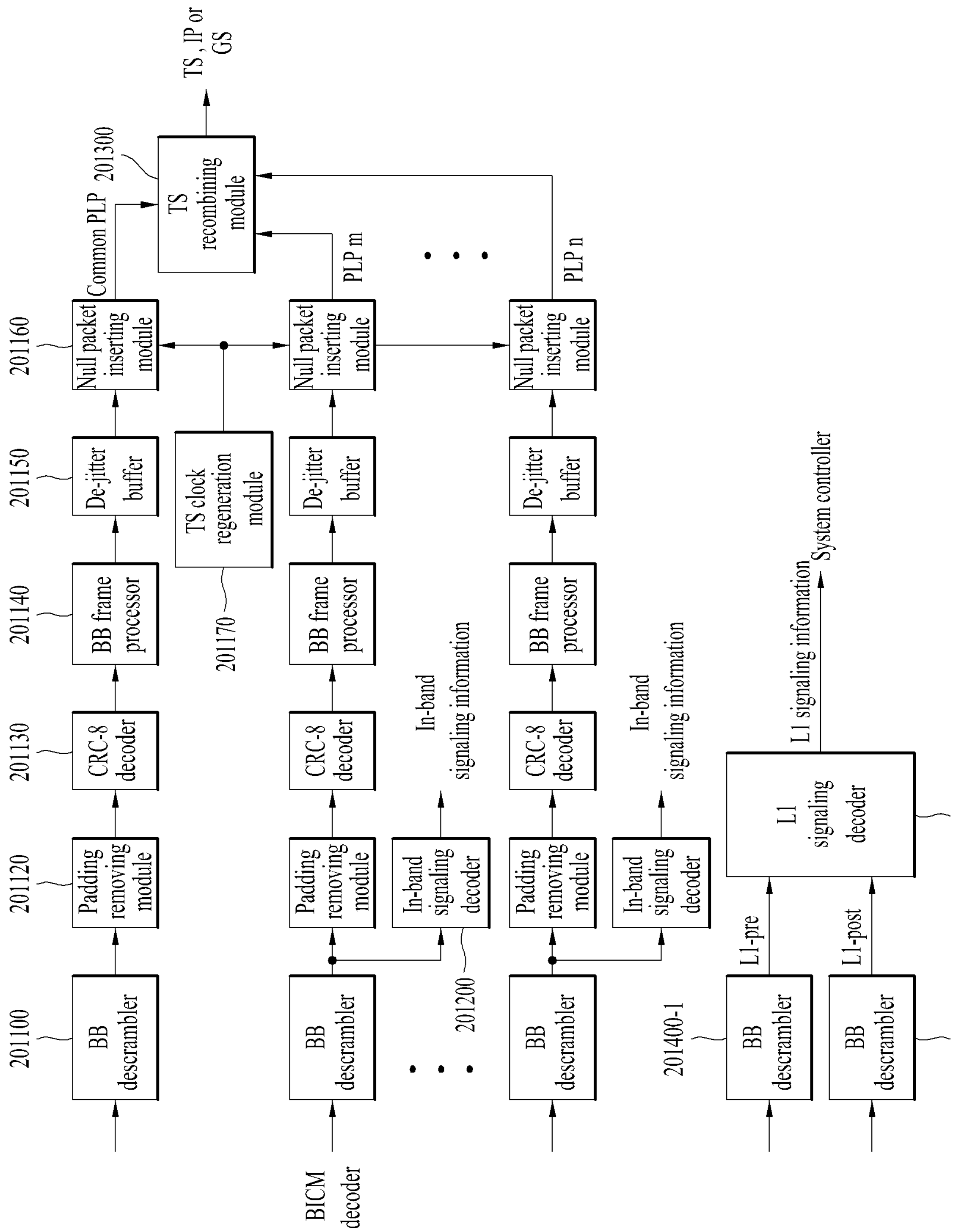
201100
201120
201130
201140
201150
201160
BB descrambler
Padding removing module
CRC-8 decoder
BB frame processor
De-jitter buffer
Null packet inserting module
Common PLP
201300
TS recombining module
TS , IP or GS
TS clock regeneration module
201170
BICM decoder
In-band signaling decoder
201200
In-band signaling information
PLP m
PLP n
201400-1
201400-2
L1-pre
L1-post
L1 signaling decoder
201410
L1 signaling information
System controller

FIG. 12

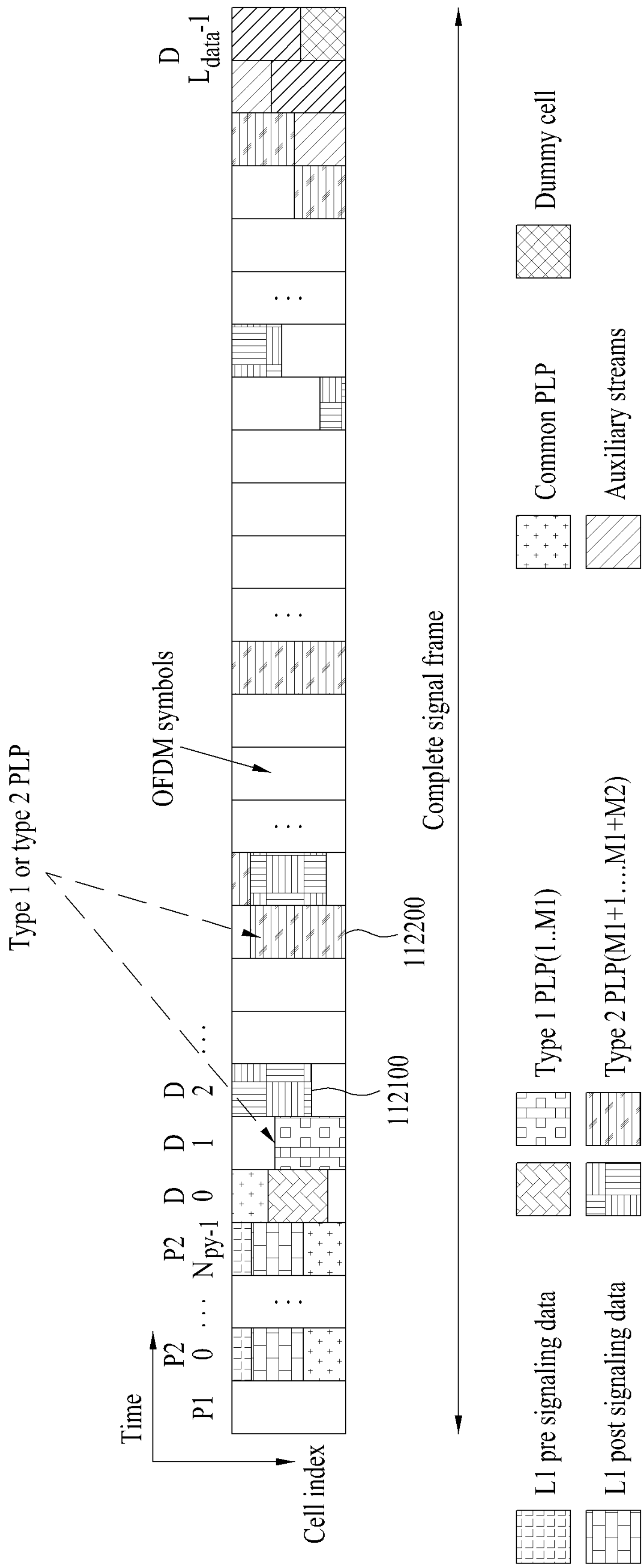
Type 1 or type 2 PLP
OFDM symbols
Complete signal frame
Time
Cell index
P1
P2 0
P2 $N_{py}$-1
D 0
D 1
D 2
D $L_{data}$-1
112100
112200
L1 pre signaling data
L1 post signaling data
Type 1 PLP(1..M1)
Type 2 PLP(M1+1....M1+M2)
Common PLP
Auxiliary streams
Dummy cell

FIG. 13

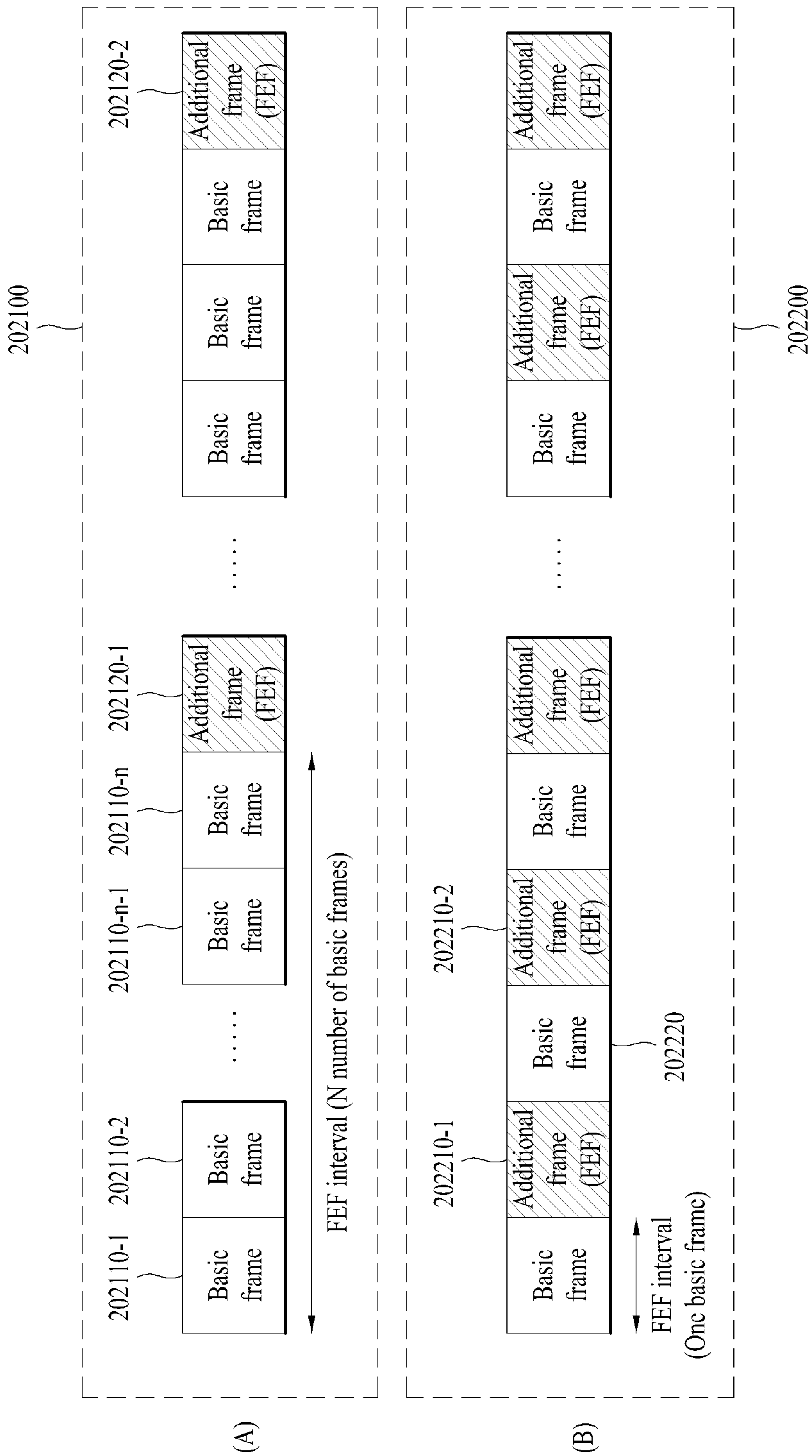
(A)
202100
202110-1
202110-2
202110-n-1
202110-n
202120-1
202120-2
Basic frame
Additional frame (FEF)
FEF interval (N number of basic frames)
(B)
202200
202210-1
202210-2
202220
FEF interval (One basic frame)

FIG. 14

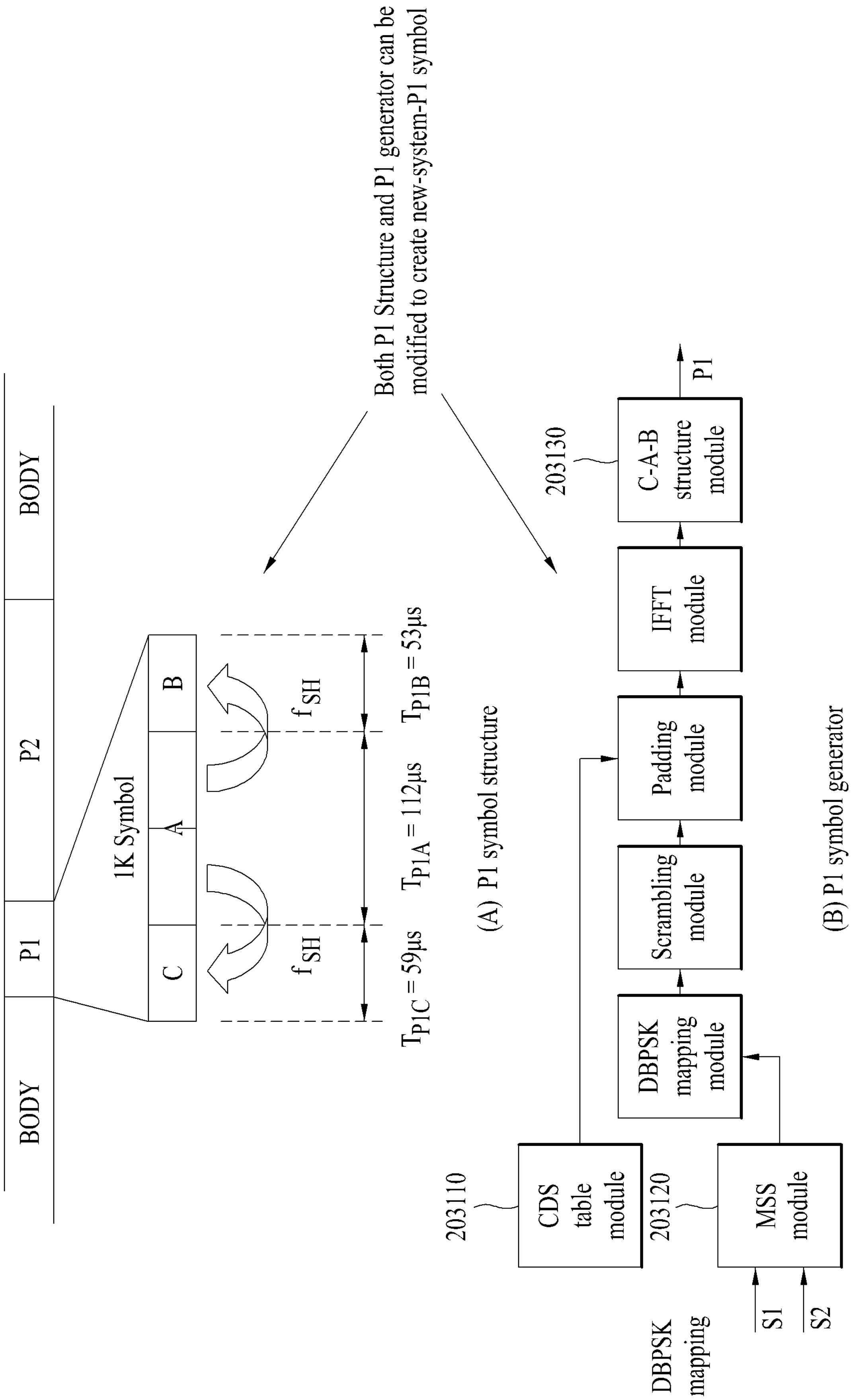
BODY
P1
P2
BODY
1K Symbol
C
A
B
$f_{SH}$
$f_{SH}$
$T_{P1C} = 59\mu s$
$T_{P1A} = 112\mu s$
$T_{P1B} = 53\mu s$
Both P1 Structure and P1 generator can be modified to create new-system-P1 symbol
(A) P1 symbol structure
DBPSK mapping
S1
S2
203110
CDS table module
203120
MSS module
DBPSK mapping module
Scrambling module
Padding module
IFFT module
203130
C-A-B structure module
P1
(B) P1 symbol generator

FIG. 15

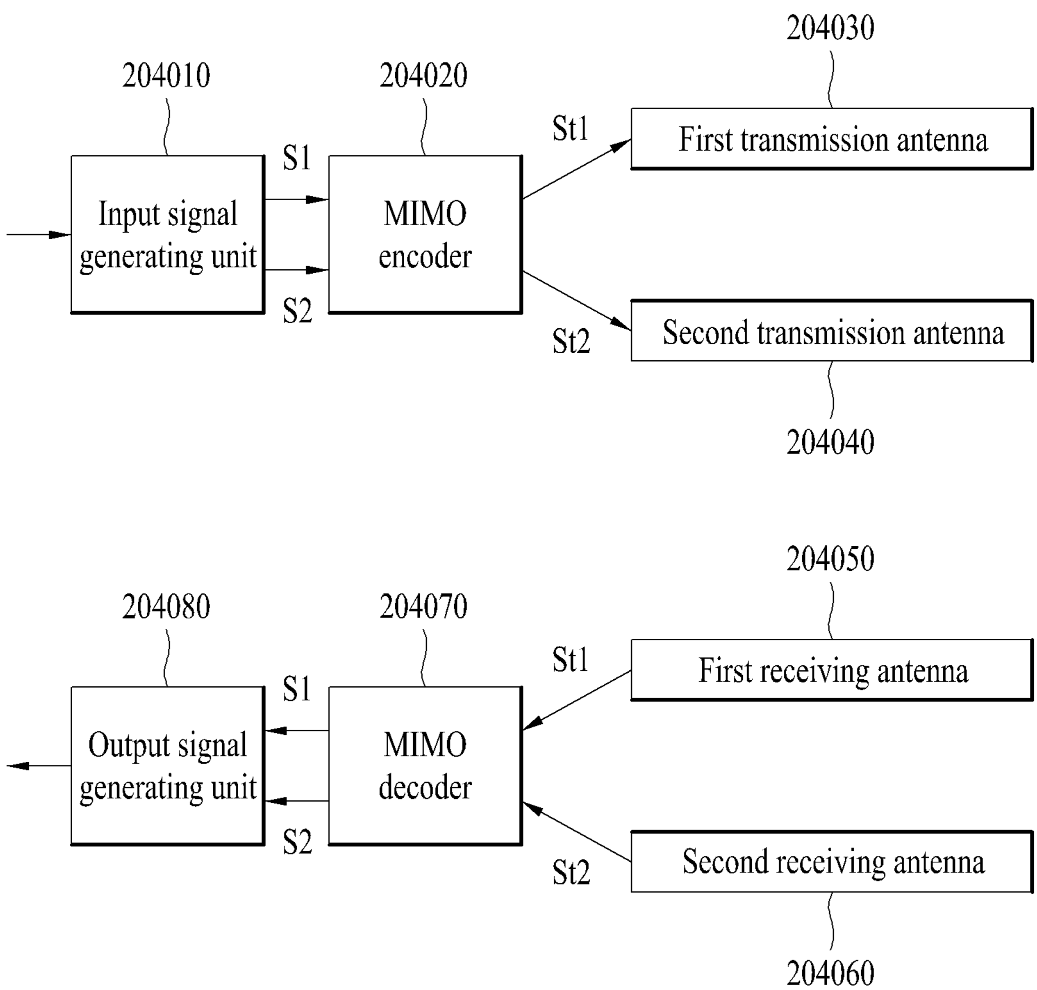
204010
204020
204030
S1
St1
First transmission antenna
Input signal generating unit
MIMO encoder
S2
St2
Second transmission antenna
204040
204050
204080
204070
S1
St1
First receiving antenna
Output signal generating unit
MIMO decoder
S2
St2
Second receiving antenna
204060

FIG. 16

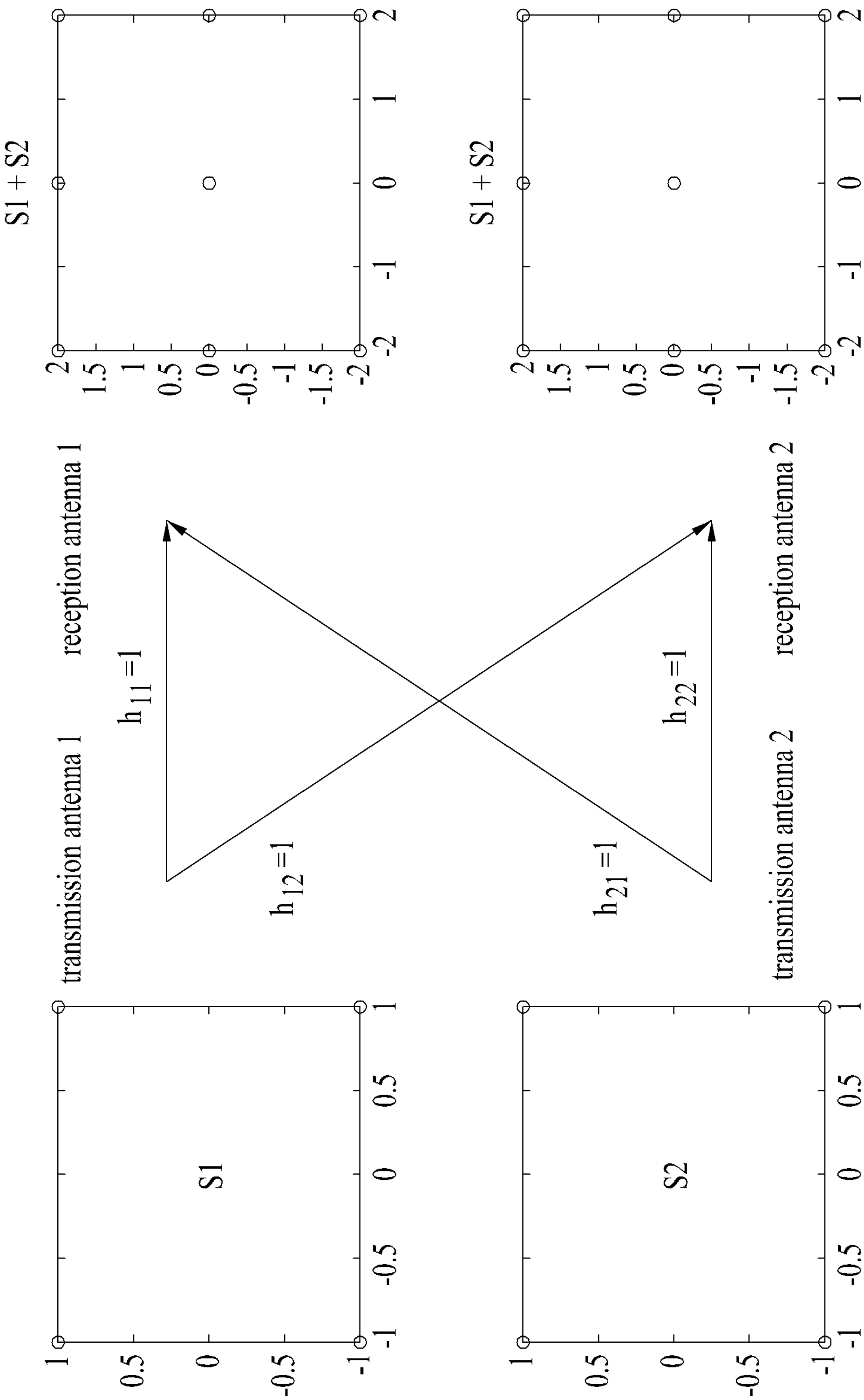
S1
S2
transmission antenna 1
transmission antenna 2
reception antenna 1
reception antenna 2
h11=1
h12=1
h21=1
h22=1
S1 + S2
S1 + S2

FIG. 17

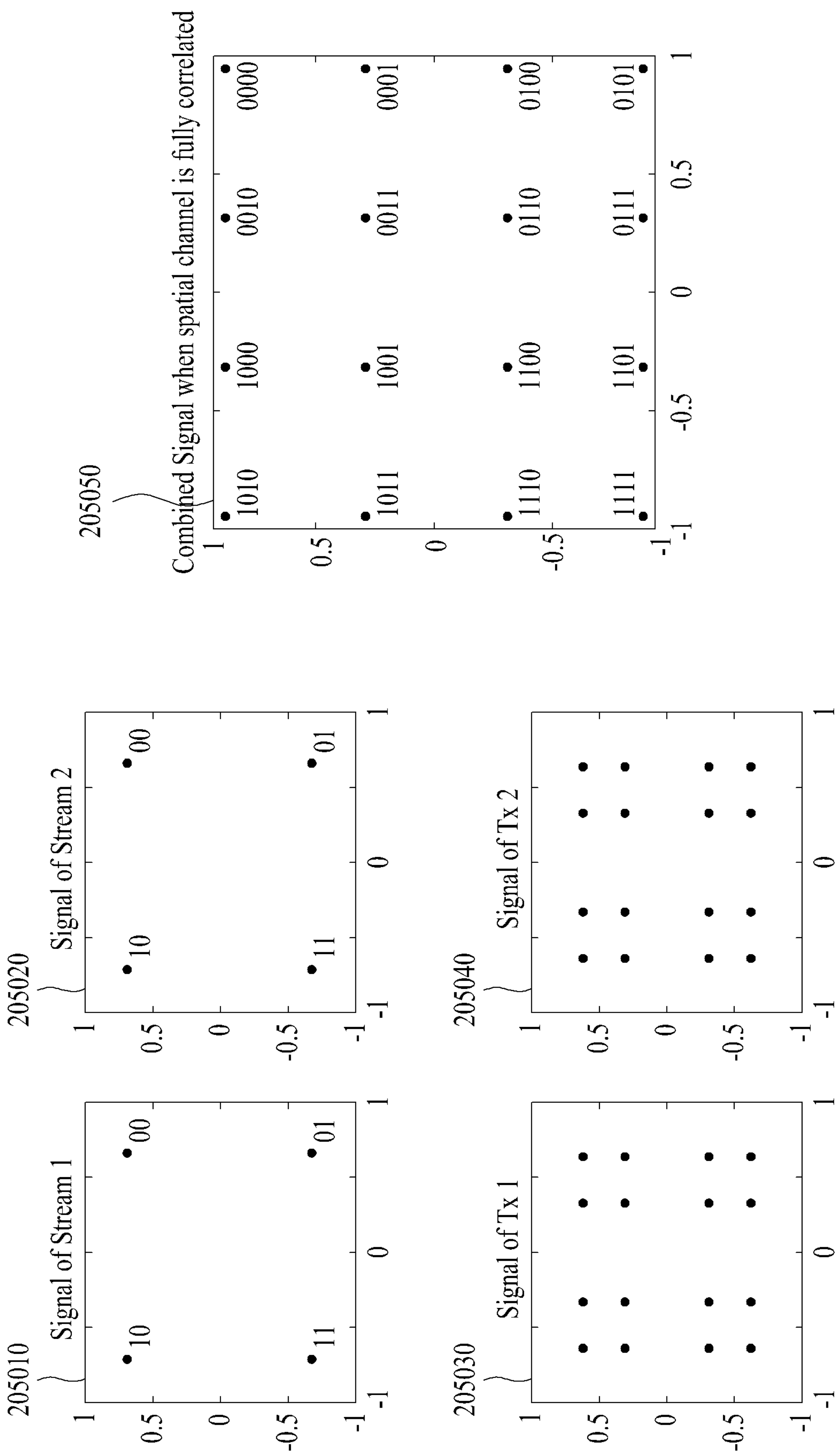

205010
Signal of Stream 1
00
01
10
11
205020
Signal of Stream 2
00
01
10
11
205030
Signal of Tx 1
205040
Signal of Tx 2
205050
Combined Signal when spatial channel is fully correlated
0000
0001
0100
0101
0010
0011
0110
0111
1000
1001
1100
1101
1010
1011
1110
1111
1
0.5
0
-0.5
-1

FIG. 18

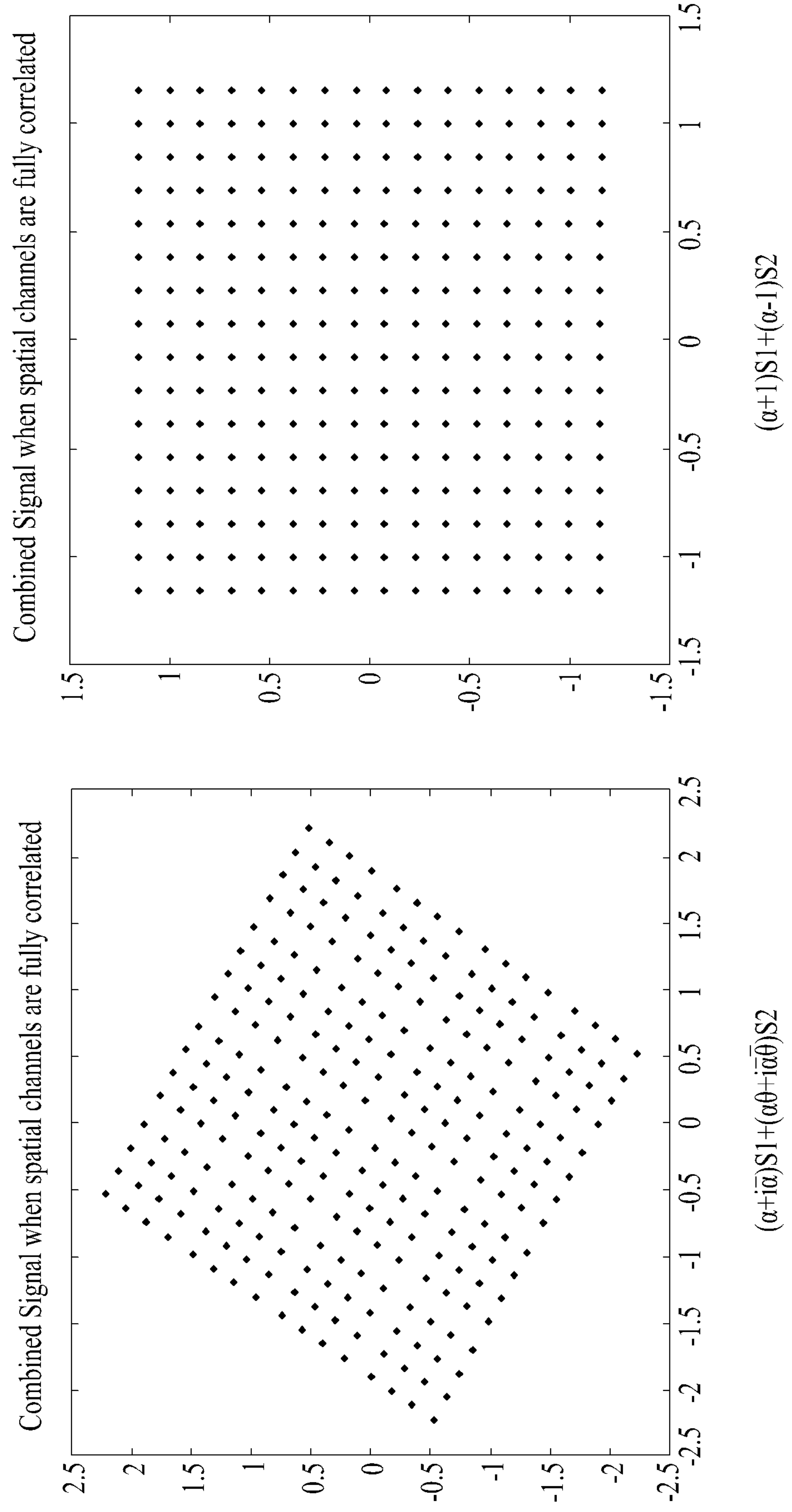
Combined Signal when spatial channels are fully correlated
(α+1)S1+(α-1)S2
Combined Signal when spatial channels are fully correlated
(α+iᾱ)S1+(αθ+iᾱθ̄)S2

FIG. 19

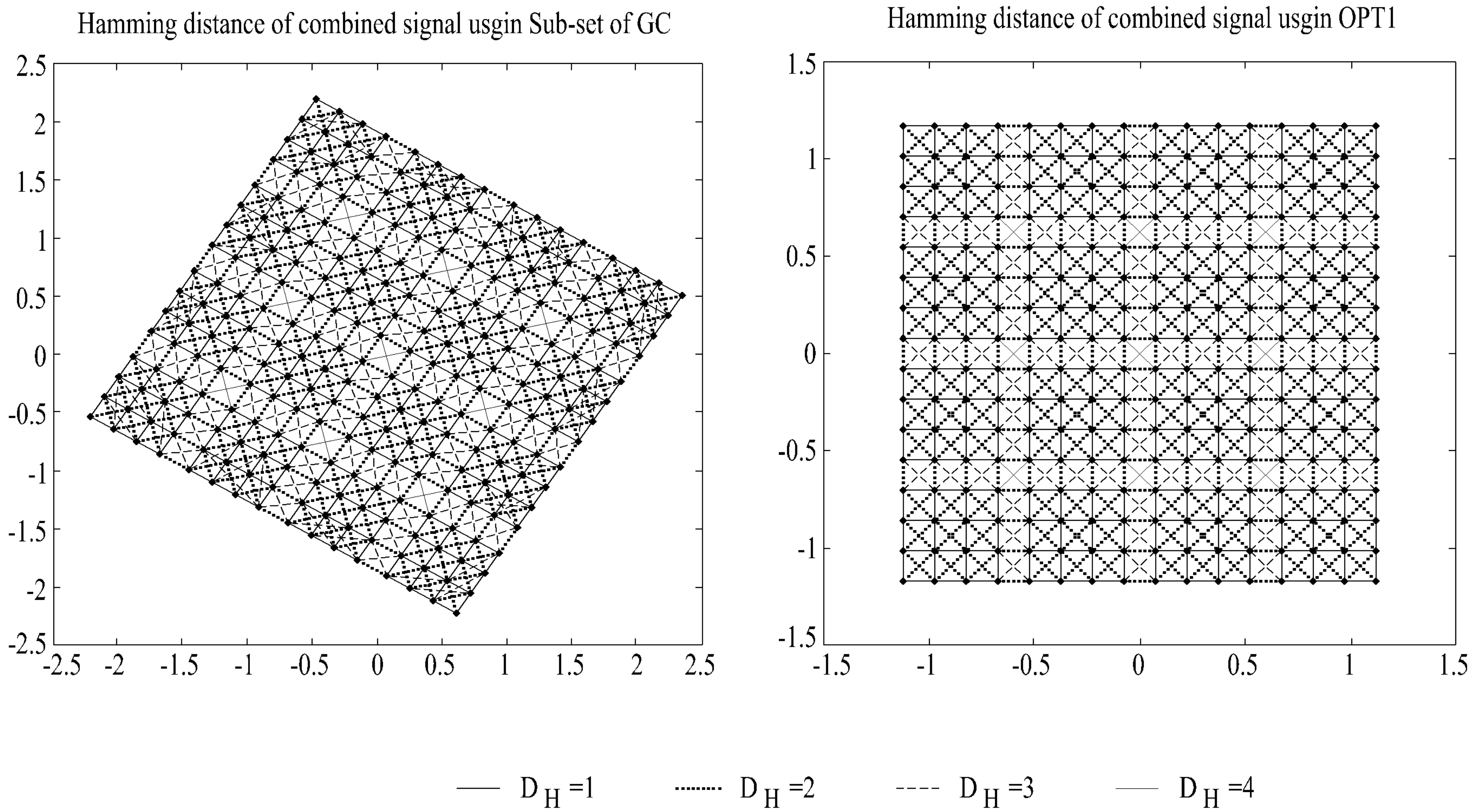
Hamming distance of combined signal usgin Sub-set of GC
Hamming distance of combined signal usgin OPT1
2.5
2
1.5
1
0.5
0
-0.5
-1
-1.5
-2
-2.5
$D_H$ =1
$D_H$ =2
$D_H$ =3
$D_H$ =4

FIG. 20

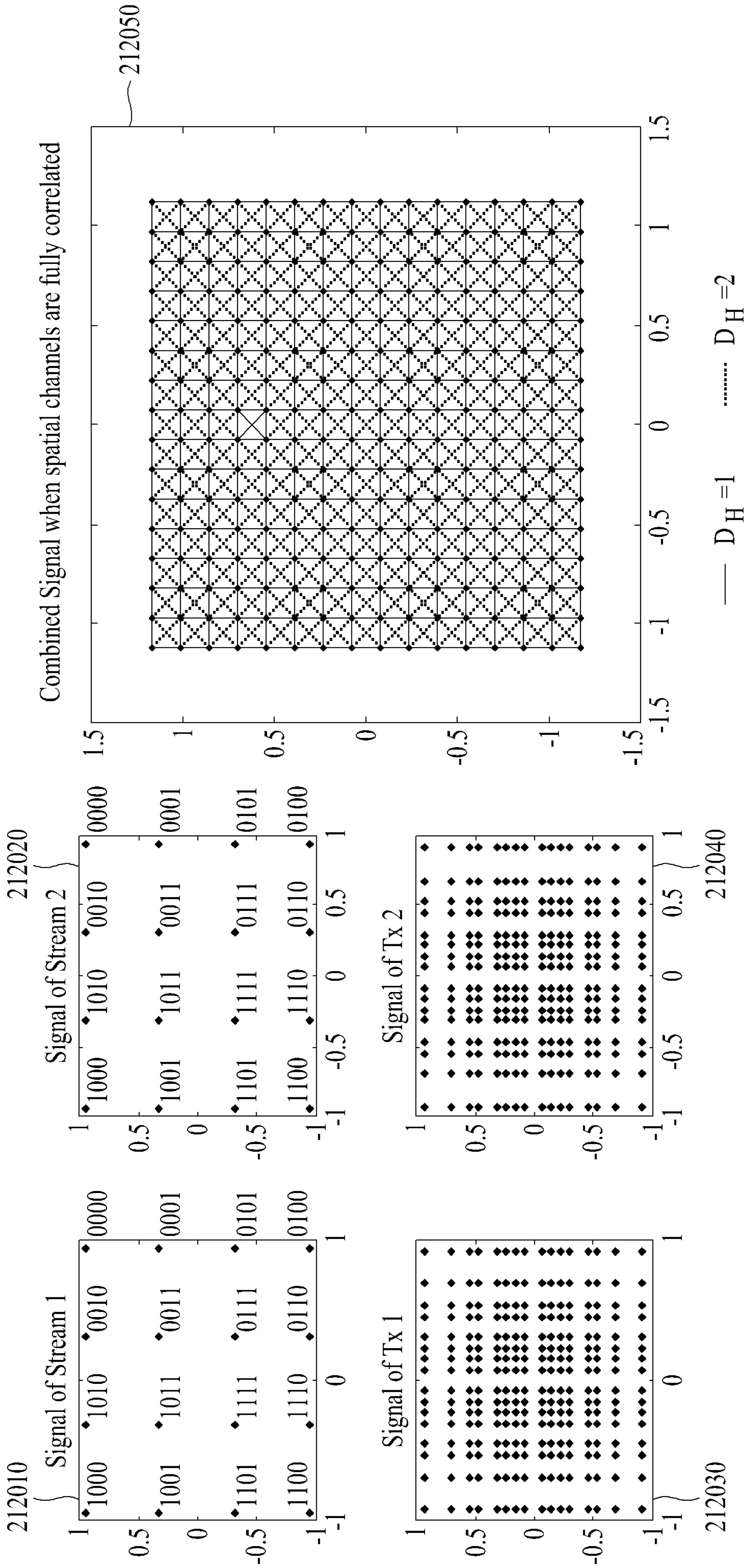
Signal of Stream 1
212010
Signal of Stream 2
212020
Signal of Tx 1
212030
Signal of Tx 2
212040
Combined Signal when spatial channels are fully correlated
212050
1000
1001
1101
1100
1010
1011
1111
1110
0010
0011
0111
0110
0000
0001
0101
0100
$D_H$ =1
$D_H$ =2

# FIG. 21

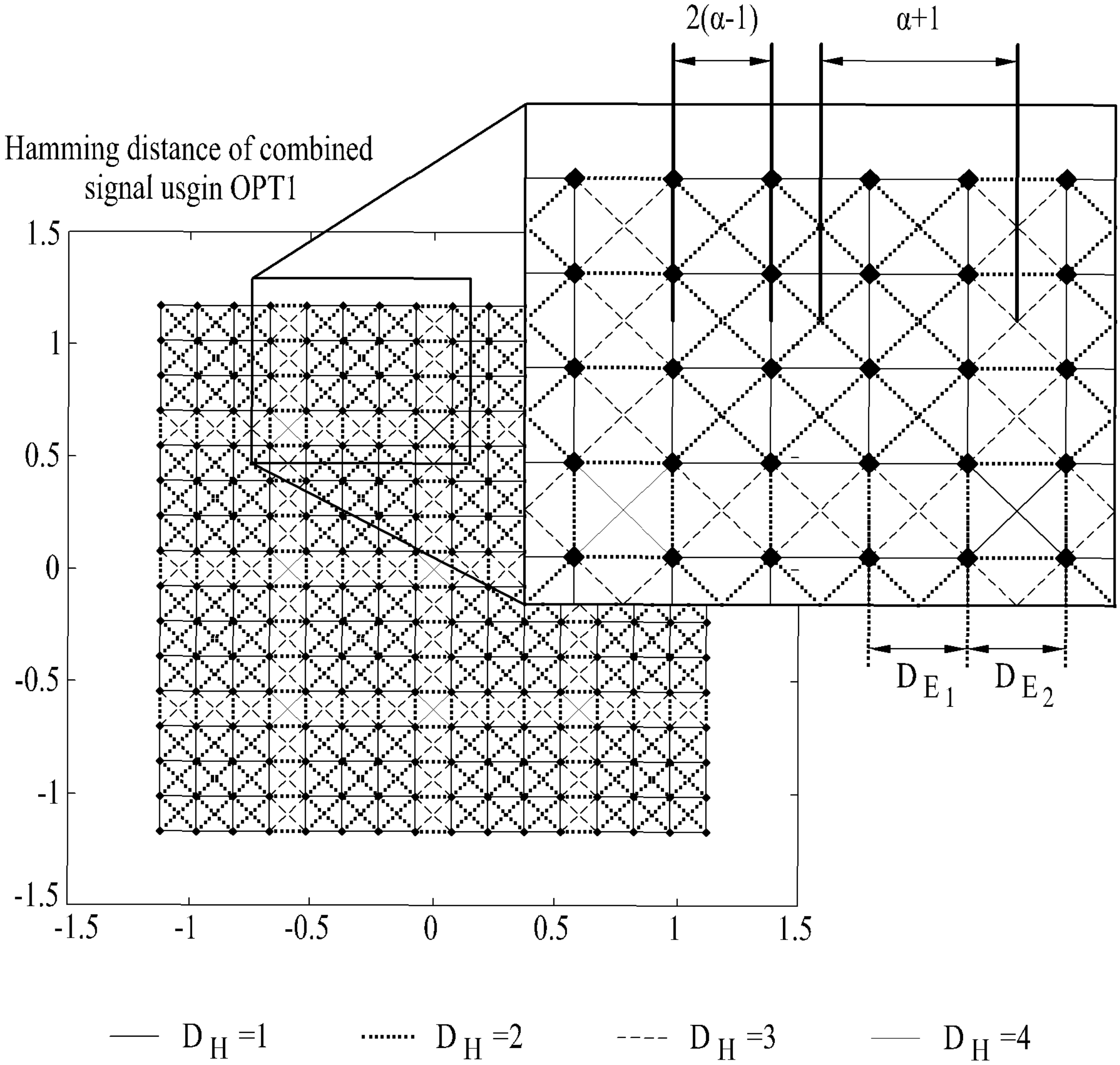
Hamming distance of combined signal usgin OPT1
2(α-1)
α+1
1.5
1
0.5
0
-0.5
-1
-1.5
-1.5
-1
-0.5
0
0.5
1
1.5
$D_{E_1}$
$D_{E_2}$
$D_H$ =1
$D_H$ =2
$D_H$ =3
$D_H$ =4

FIG. 22

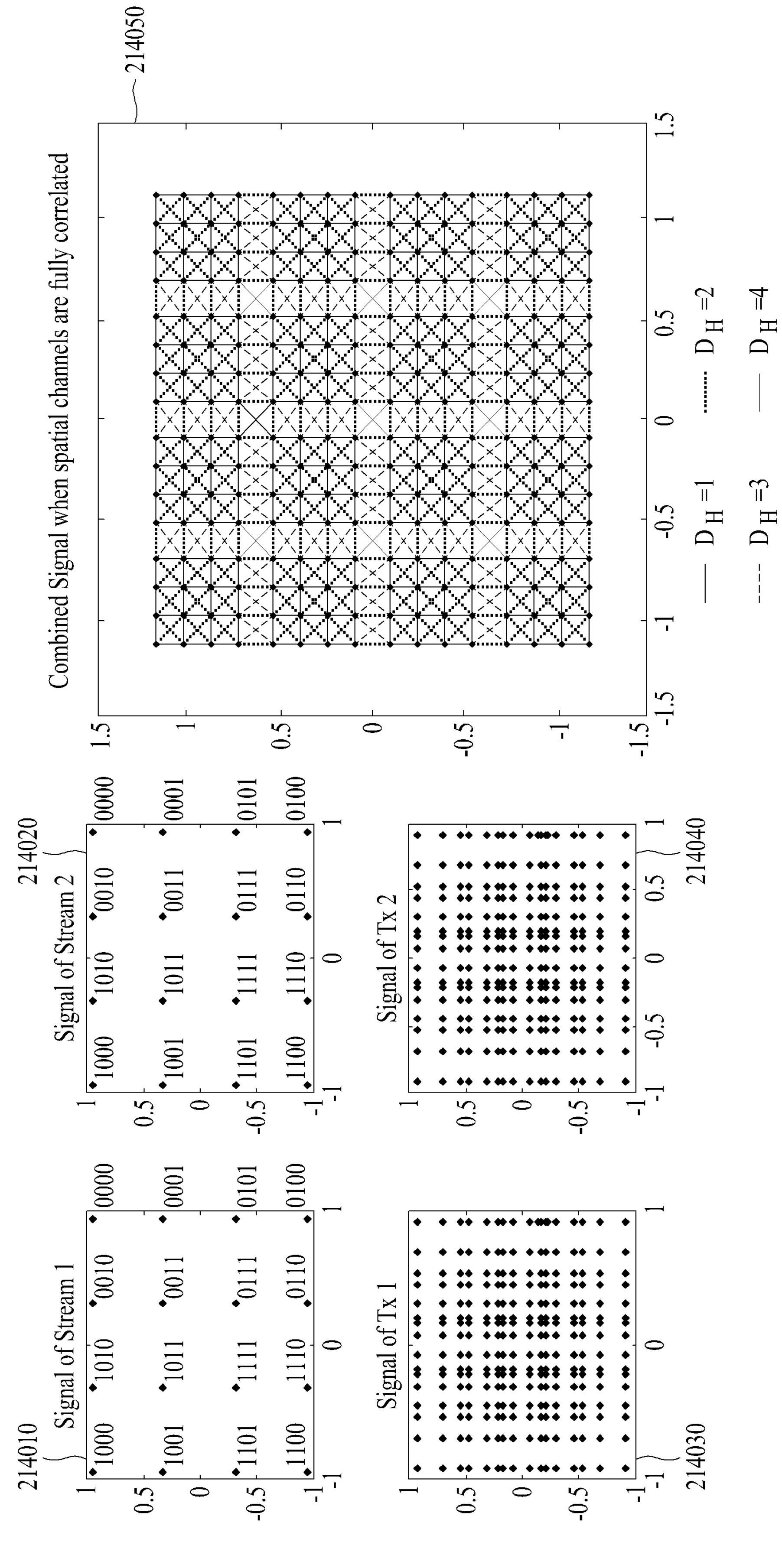
214010
Signal of Stream 1
214020
Signal of Stream 2
1000
1010
0010
0000
1001
1011
0011
0001
1101
1111
0111
0101
1100
1110
0110
0100
214030
Signal of Tx 1
214040
Signal of Tx 2
214050
Combined Signal when spatial channels are fully correlated
D_H =1
D_H =2
D_H =3
D_H =4

FIG. 23

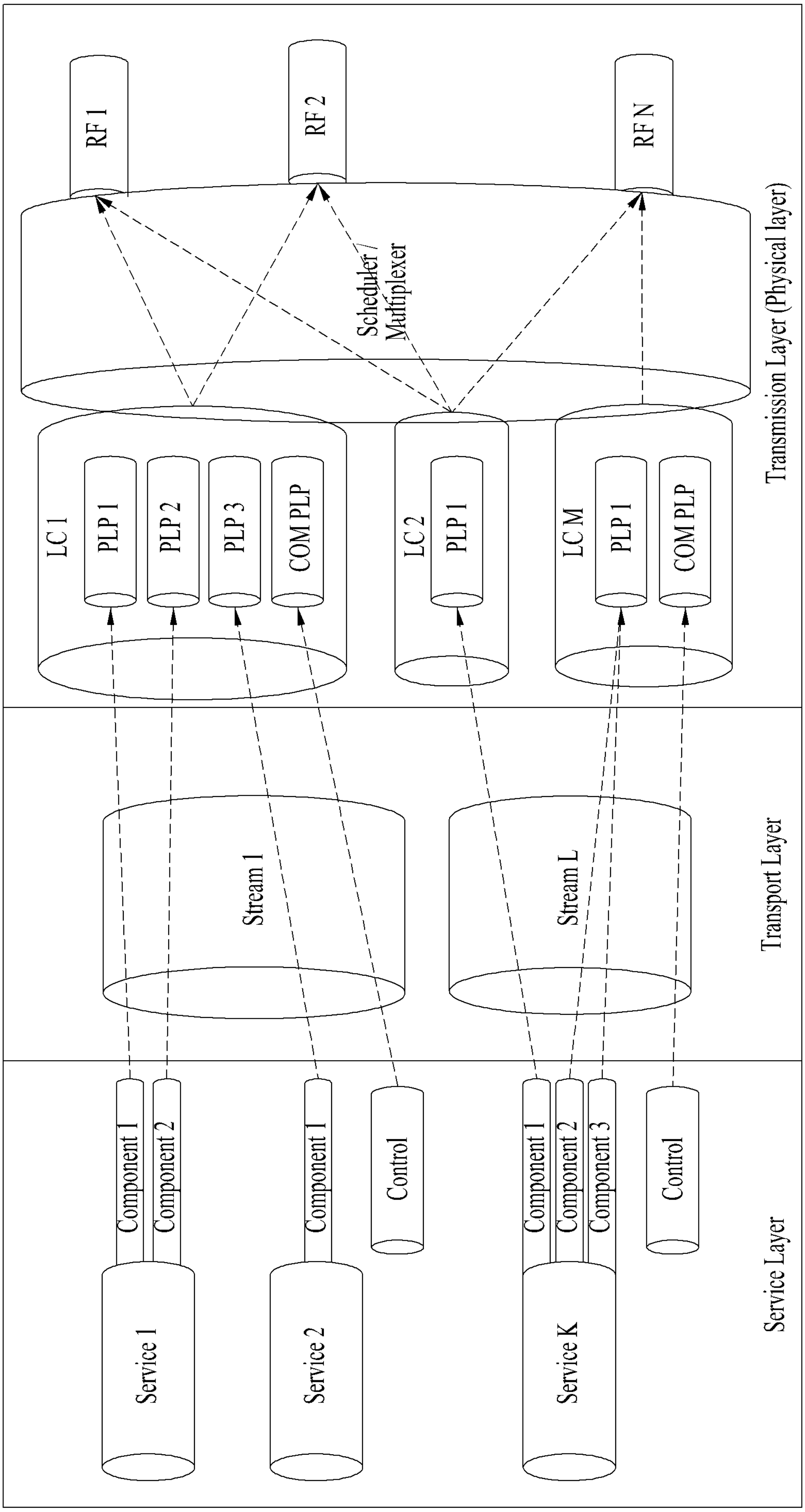
RF 1
RF 2
RF N
Scheduler / Multiplexer
LC 1
PLP 1
PLP 2
PLP 3
COM PLP
LC 2
PLP 1
LC M
PLP 1
COM PLP
Transmission Layer (Physical layer)
NGH Signal
(PHY Frames)
Stream 1
Stream L
Transport Layer
Transport streams
(e.g. TS; IP / GSE)
Service 1
Component 1
Component 2
Service 2
Component 1
Control
Service K
Component 1
Component 2
Component 3
Control
Service Layer
Inc. Video codec
(e.g. H.264 / SVC)

FIG. 24

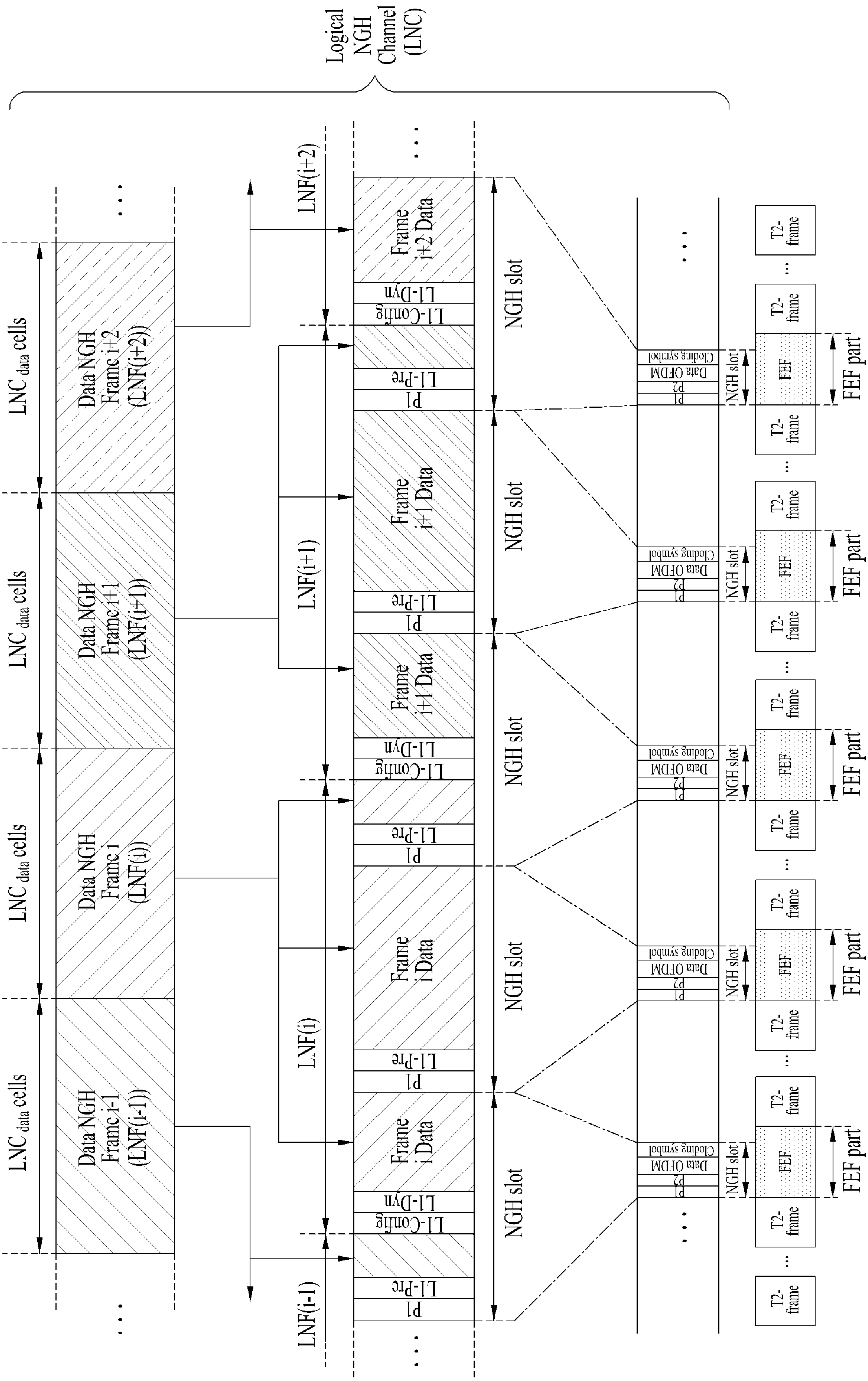

Logical NGH Channel (LNC)
LNC data cells
Data NGH Frame i-1 (LNF(i-1))
Data NGH Frame i (LNF(i))
Data NGH Frame i+1 (LNF(i+1))
Data NGH Frame i+2 (LNF(i+2))
LNF(i-1)
LNF(i)
LNF(i+1)
LNF(i+2)
P1
L1-Pre
L1-Config
L1-Dyn
Frame i Data
Frame i+1 Data
Frame i+2 Data
NGH slot
P1
P2
Data OFDM
Cloding symbol
FEF
FEF part
T2-frame

FIG. 25

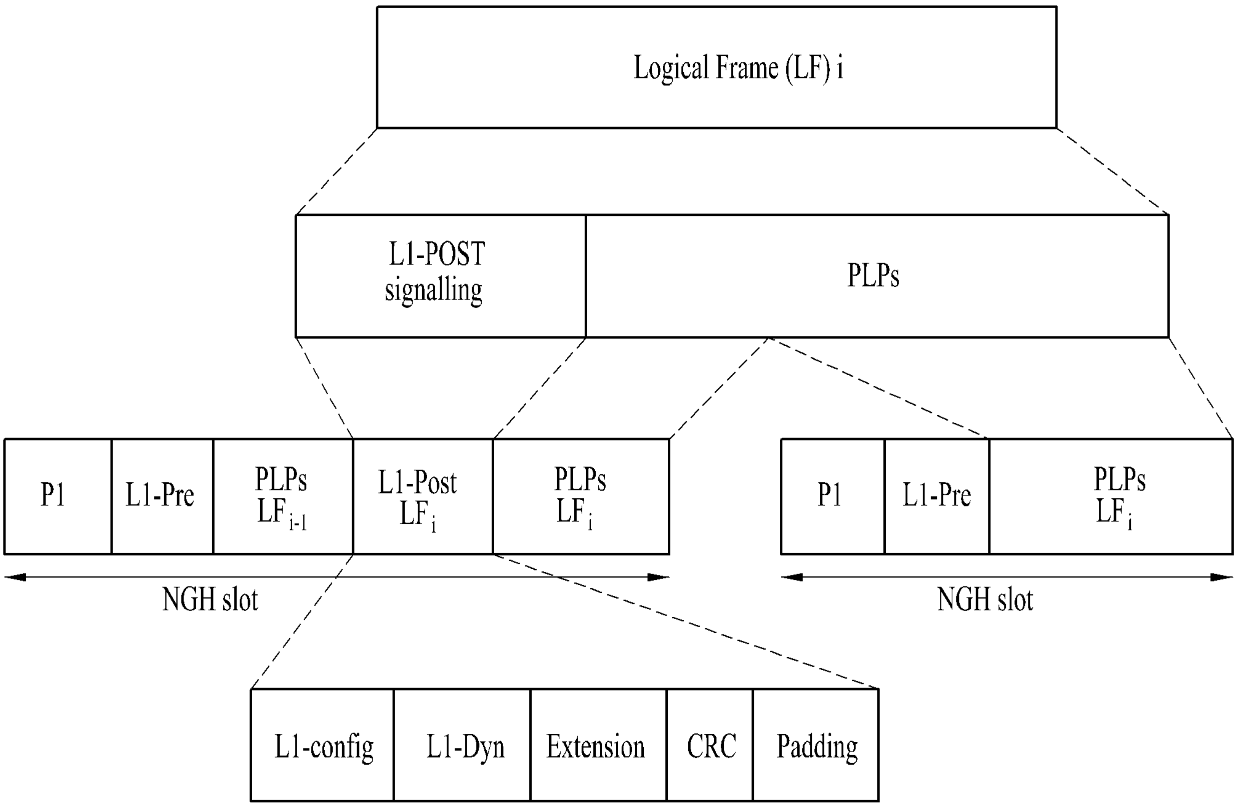
Logical Frame (LF) i
L1-POST signalling
PLPs
P1
L1-Pre
PLPs LF i-1
L1-Post LF i
PLPs LF i
P1
L1-Pre
PLPs LF i
NGH slot
NGH slot
L1-config
L1-Dyn
Extension
CRC
Padding

# FIG. 26

| Field | Bits |
|---|---|
| PADDING_TYPE ('00') | 2 bits |
| PLP_L1_CHANGE_COUNTER | 8 bits |
| RESERVED_1 | 8 bits |
| For j=0 .. $P_I$ -1 { | |
| SUB_SLICE_INTERVAL | 22 bits |
| START_RF_IDX | 3 bits |
| CURRENT_PLP_START | 22 bits |
| L1_OFFSET_TIME | 22 bits |
| L1_OFFSET_FREQ | 3 bits |
| } | |
| CURRENT_PLP_NUM_BLOCKS | 10 bits |
| NUM_OTHER_PLP_IN_BAND | 8 bits |
| For i=0 .. NUM_OTHER_PLP_IN_BAND-1 { | |
| PLP_ID | 8 bits |
| PLP_START | 22 bits |
| PLP_NUM_BLOCKS | 10 bits |
| RESERVED_3 | 8 bits |
| } | |
| For j=0 .. $P_I$ -1 { | |
| TYPE_2_START | 22 bits |
| } | |

FIG. 27

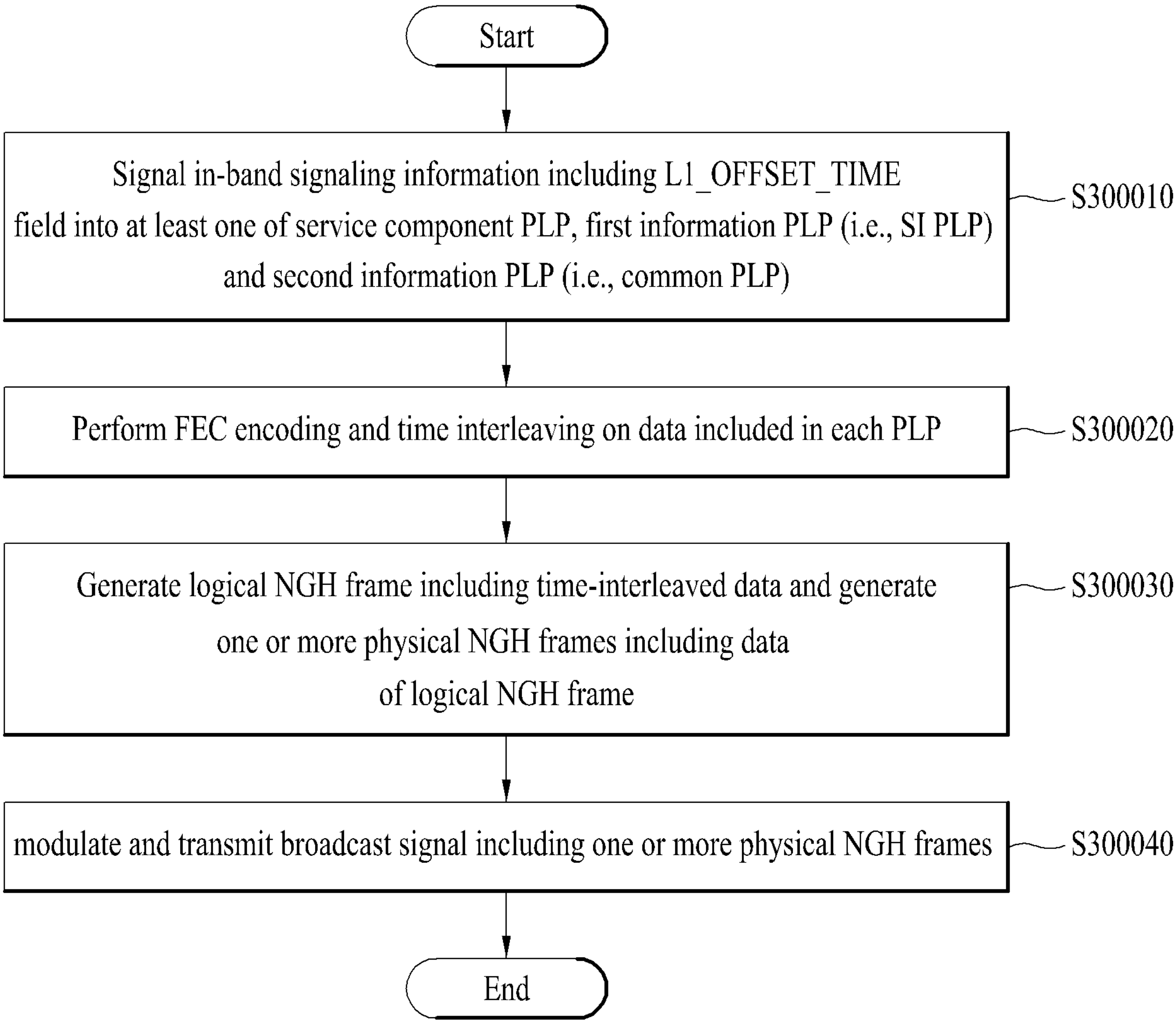
Start
Signal in-band signaling information including L1_OFFSET_TIME field into at least one of service component PLP, first information PLP (i.e., SI PLP) and second information PLP (i.e., common PLP)
S300010
Perform FEC encoding and time interleaving on data included in each PLP
S300020
Generate logical NGH frame including time-interleaved data and generate one or more physical NGH frames including data of logical NGH frame
S300030
modulate and transmit broadcast signal including one or more physical NGH frames
S300040
End

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011096768 A


### Non-patent literature cited in the description


- tm4132r1.ETSI_TS_T2MI_v0.5.0.doc. Digital vodeo broadcasting, 02 July 2010